# EUROPEAN PATENT APPLICATION

(11) **EP 4 375 149 A1**
(43) Date of publication of application: **29.05.2024**
(21) Application number: 21952205.9
(22) Date of filing: 03.08.2021
(51) Int. Cl.: B60T 7/04, B60T 8/40, B60T 13/74

(54) **HYDRAULIC APPARATUS, BRAKING SYSTEM, AND VEHICLE**

(71) Applicant: Huawei Technologies Co., Ltd., Shenzhen, Guangdong 518129 (CN)
(72) Inventor: YANG, Weimiao, Shenzhen, Guangdong 518129 (CN); ZHANG, Yongsheng, Shenzhen, Guangdong 518129 (CN); LU, Yuhao, Shenzhen, Guangdong 518129 (CN); JIN, Biao, Shenzhen, Guangdong 518129 (CN); LV, Shangwei, Shenzhen, Guangdong 518129 (CN)
(74) Representative: Gill Jennings & Every LLP
(86) International application number: PCT/CN2021/110401
(87) International publication number: WO 2023/010296

(57) **Abstract**

Embodiments of this application provide a hydraulic apparatus, a brake system, and a control method. The brake system provided in embodiments of this application includes a master cylinder, a first booster, and a second booster. The brake system provided in embodiments of this application can implement rich braking functions by using the first booster or the second booster. In addition, the brake system provided in embodiments of this application has a multi-redundancy design. This can ensure that the brake system can still meet a plurality of braking function requirements of a vehicle when a controller or a key solenoid valve fails, improve safety of the brake system, ensure pedal feeling of a driver, and bring more stable and comfortable driving experience to the driver, which is suitable for brake systems of intelligent and electric vehicles.

## Description

### TECHNICAL FIELD

This application relates to the vehicle braking field, and in particular, to a brake system.

### BACKGROUND

A brake system can provide functions such as automatic emergency braking (AEB), an antilock brake system (ABS), a traction control system (TCS), and electronic stability control (ESC) during running. However, with the development of autonomous driving technologies, challenges facing the brake system include: meeting requirements of safety and reliability of the brake system while meeting requirements of miniaturization and low costs, and improving redundancy of the system. In addition, when redundancy backup is performed on the brake system, attention needs to be paid to how to provide richer braking functions to fit with a driving assistance function or an autonomous driving function, while costs and system complexity are taken into account.

### SUMMARY

This application relates to a brake system that meets a redundancy safety requirement of an autonomous driving vehicle. To address challenges such as redundancy backup, cost control, and multi-function support faced by a current brake system, this application provides an electro-hydraulic brake system with multi-redundancy control.

A first aspect of this application provides a brake system. In a first possible implementation of the first aspect, the brake system includes a master cylinder (1), a first booster, a second booster, and at least one first interface. The at least one first interface is connected to at least one brake wheel cylinder. The first booster is connected to the at least one first interface through at least one first control valve (31, 32, 33, 34). The master cylinder (1) includes a first main cavity (1i), the first main cavity (1i) is connected to a second control valve (13) through the second booster, and the second control valve (13) is connected to the at least one first interface through the at least one first control valve (31, 32, 33, 34).

Optionally, the master cylinder may further include more brake main cavities.

According to the first possible implementation of the first aspect, in a second possible implementation, the brake system further includes a brake fluid reservoir (5), and the at least one first interface is connected to the brake fluid reservoir (5) through at least one third control valve (41, 42, 43, and 44).

Optionally, there may be four or more third control valves. When a vehicle includes more than four brake wheel cylinders, there may also be more than four third control valves.

According to the second possible implementation of the first aspect, in a third possible implementation, the second booster includes a fourth control valve (11), and the first main cavity (1i) is connected to the at least one first interface sequentially through the fourth control valve (11), the second control valve (13), and the at least one first control valve (31, 32, 33, 34).

According to the third possible implementation of the first aspect, in a fourth possible implementation, the second booster further includes a first booster pump (203), and an output end of the first booster pump (203) is connected to a pipe between the fourth control valve (11) and the second control valve (13), and is connected to the at least one first interface sequentially through the second control valve (13) and the at least one first control valve (31, 32, 33, 34).

Optionally, an interface may be a fluid inlet or a fluid outlet, or include both a fluid inlet and a fluid outlet, or have functions of both a fluid inlet and a fluid outlet.

According to the fourth possible implementation of the first aspect, in a fifth possible implementation, an input end of the first booster pump (203) is connected to the brake fluid reservoir (5).

According to the fifth possible implementation of the first aspect, in a sixth possible implementation, the second booster further includes a first one-way valve (203v), the brake fluid reservoir (5) is connected to a first end of the first one-way valve (203v), a second end of the first one-way valve (203v) is connected to the input end of the first booster pump (203), and the first one-way valve (203v) is configured to allow brake fluid to flow from the brake fluid reservoir (5) to the input end of the first booster pump (203) through the first one-way valve (203v).

Optionally, more booster pumps may be further included. When a quantity of booster pumps is larger, faster pressure build-up can be implemented.

Optionally, a plurality of booster pumps may be driven by a same motor, or may be driven by different motors. When the plurality of booster pumps are driven by one motor, costs can be reduced and the system can be simpler. If more booster pumps are used, redundancy of the system can be increased.

According to the sixth possible implementation of the first aspect, in a seventh possible implementation, According to the fifth possible implementation of the first aspect, in a sixth possible implementation, the second booster further includes a fifth control valve (211), and the brake fluid reservoir (5) is connected to the at least one first interface sequentially through the fifth control valve (211), the second control valve (13), and the at least one first control valve (31, 32, 33, 34).

According to the seventh possible implementation of the first aspect, in an eighth possible implementation, the second booster further includes a sixth control valve (213), a first end of the sixth control valve (213) is connected to the first main cavity (1i), and a second end of the sixth control valve (213) is connected to a pipe between the first one-way valve (203v) and the first booster pump (203), and is connected to the input end of the first booster pump (203).

It should be noted that the sixth control valve can enable brake fluid of a brake main cavity to enter the first booster pump, and can provide some pedal feelings when a driver steps a pedal.

According to the eighth possible implementation of the first aspect, in a ninth possible implementation, the master cylinder (1) further includes a second main cavity (1j), and the second main cavity (1j) is connected to the at least one first interface sequentially through a seventh control valve (12), an eighth control valve (14), and the at least one first control valve (31, 32, 33, 34). The second booster further includes a second booster pump (204), a ninth control valve (212), a second one-way valve (204v), and a tenth control valve (214). The brake fluid reservoir (5) is connected to a first end of the second one-way valve (204v), a second end of the second one-way valve (204v) is connected to an input end of the second booster pump (204), and the second one-way valve (204v) is configured to allow the brake fluid to flow from the brake fluid reservoir (5) to the input end of the second booster pump (204) through the second one-way valve (204v). An output end of the second booster pump (204) is connected to the at least one first interface sequentially through the eighth control valve (14) and the at least one first control valve (31, 32, 33, 34). The brake fluid reservoir (5) is connected to the at least one first interface sequentially through the ninth control valve (212), the eighth control valve (14), and the at least one first control valve (31, 32, 33, 34). A first end of the tenth control valve (214) is connected to the second main cavity (1j), and a second end of the tenth control valve (214) is connected to a pipe between the second one-way valve (204v) and the second booster pump (204), and is connected to the input end of the second booster pump (204).

It should be noted that, the second main cavity and the first main cavity may be mutually redundant, to improve reliability of the brake system.

According to the sixth possible implementation of the first aspect, in a tenth possible implementation, the second booster further includes a fifth control valve (211), a first end of the fifth control valve (211) is connected to a pipe between the output end of the first booster pump (203) and the second control valve (13), and a second end of the fifth control valve (211) is connected to a pipe between the input end of the first booster pump (203) and the second end of the first one-way valve (203v).

According to the tenth possible implementation of the first aspect, in an eleventh possible implementation, the second booster further includes a sixth control valve (213), and the brake fluid reservoir (5) is connected to the at least one first interface sequentially through the sixth control valve (213), the second control valve (13), and the at least one first control valve (31, 32, 33, 34).

According to the fifth possible implementation of the first aspect, in a twelfth possible implementation, the second booster further includes a fifth control valve (211) and a sixth control valve (213), and the brake fluid reservoir (5) is further connected to the at least one first interface sequentially through the sixth control valve (213), the fifth control valve (211), the second control valve (13), and the at least one first control valve (31, 32, 33, 34).

According to the twelfth possible implementation of the first aspect, in a thirteenth possible implementation, the brake fluid reservoir (5) is also connected to the input end of the first booster pump (203) through the sixth control valve (213).

According to the thirteenth possible implementation of the first aspect, in a fourteenth possible implementation, the master cylinder (1) further includes a second main cavity (1j), and the second main cavity (1j) is connected to the at least one first interface sequentially through a seventh control valve (12), an eighth control valve (14), and the at least one first control valve (31, 32, 33, 34). The second booster further includes a second booster pump (204) and a ninth control valve (212), the brake fluid reservoir (5) is connected to an input end of the second booster pump (204) through the sixth control valve (213), and the brake fluid reservoir (5) is connected to the at least one first interface sequentially through the sixth control valve (213), the ninth control valve (212), the eighth control valve (14), and the at least one first control valve (31, 32, 33, 34).

According to the fourth possible implementation of the first aspect, in a fifteenth possible implementation, the second booster further includes a sixth control valve (213), a first end of the sixth control valve (213) is connected to a pipe between the fourth control valve (11) and the first main cavity (1i), and a second end of the sixth control valve (213) is connected to an input end of the first booster pump (203).

According to the second possible implementation of the first aspect, in a sixteenth possible implementation, the first booster includes a first booster cavity (202i), the first booster cavity (202i) is separately connected to a first end of a first booster control valve (21) and a first end of a second booster control valve (22), a second end of the first booster control valve (21) is connected to the at least one first interface through the at least one first control valve (31, 32, 33, 34), and a second end of the second booster control valve (22) is connected to the at least one first interface through the at least one first control valve (31, 32, 33, 34).

According to the sixteenth possible implementation of the first aspect, in a seventeenth possible implementation, the first booster further includes a third booster control valve (23) and a fourth booster control valve (24), the first booster cavity (202i) is separately connected to a first end of the third booster control valve (23) and a first end of the fourth booster control valve (24), a second end of the third booster control valve (23) is connected to the at least one first interface through the at least one first control valve (31, 32, 33, 34), and a second end of the fourth booster control valve (24) is connected to the at least one first interface through the at least one first control valve (31, 32, 33, 34).

According to the sixteenth possible implementation of the first aspect, in an eighteenth possible implementation, the first booster further includes a second booster cavity (202j), a third booster control valve (23), and a fourth booster control valve (24), the second booster cavity (202j) is separately connected to a first end of the third booster control valve (23) and a first end of the fourth booster control valve (24), a second end of the third booster control valve (23) is connected to the at least one first interface through the at least one first control valve (31, 32, 33, 34), and a second end of the fourth booster control valve (24) is connected to the at least one first interface through the at least one first control valve (31, 32, 33, 34).

According to the sixteenth possible implementation of the first aspect, in a nineteenth possible implementation, the first booster further includes a second booster cavity (202j) and a fifth booster control valve (25), the first booster cavity (202i) is connected to a first end of the fifth booster control valve (25), and a second end of the fifth booster control valve (25) is separately connected to the first end of the first booster control valve (21) and the first end of the second booster control valve (22). The second booster cavity (202j) is separately connected to the first end of the first booster control valve (21) and the first end of the second booster control valve (22). The second end of the first booster control valve (21) is connected to the at least one first interface through the at least one first control valve (31, 32, 33, 34). The second end of the second booster control valve (22) is connected to the at least one first interface through the at least one first control valve (31, 32, 33, 34).

According to the seventeenth possible implementation of the first aspect, in a twentieth possible implementation, the brake system includes a first control unit (92) and a second control unit (93), the second control valve (13) is controlled by both the first control unit (92) and the second control unit (93), the first booster control valve (21) and the second booster control valve (22) are controlled by the first control unit (92), and the third booster control valve (23) and the fourth booster control valve (24) are controlled by the second control unit (93).

According to the eighteenth possible implementation of the first aspect, in a twenty-first possible implementation, the brake system includes a first control unit (92) and a second control unit (93), and the second control valve (13), the first booster control valve (21), the second booster control valve (22), the third booster control valve (23), and the fourth booster control valve (24) are controlled by both the first control unit (92) and the second control unit (93).

According to the nineteenth possible implementation of the first aspect, in a twenty-second possible implementation, the brake system includes a first control unit (92) and a second control unit (93), the first booster control valve (21), the second booster control valve (22), the fifth booster control valve (25), and the second control valve (13) are controlled by the first control unit (92), and the at least one first control valve (31, 32, 33, 34) and the at least one third control valve (41, 42, 43, and 44) are controlled by both the first control unit (92) and the second control unit (93).

According to the twentieth to twenty-second possible implementations of the first aspect, in a twenty-third possible implementation, the first booster is controlled by both the first control unit (92) and the second control unit (93).

According to the second to twenty-third possible implementations of the first aspect, in a twenty-fourth possible implementation, the brake system includes a first subsystem and a second subsystem.

The first subsystem includes the master cylinder (1), the brake fluid reservoir (5), the second booster, at least one first interface (8F and 8G), and a second interface (8E). The master cylinder (1) is connected to the brake fluid reservoir (5), the master cylinder (1) is connected to the at least one first interface (8F and 8G) through the second booster, and the brake fluid reservoir (5) is connected to the second interface (8E).

The second subsystem includes the first booster, at least one second control valve (13 and 14), the at least one first control valve (31, 32, 33, 34), the at least one third control valve (41, 42, 43, and 44), at least one fourth interface (8f and 8g), a fifth interface (8e), and the at least one first interface. The at least one fourth interface (8f and 8g) is connected to a first end of the at least one first control valve (31, 32, 33, 34) through the at least one second control valve (13 and 14), the fifth interface (8e) is connected to the first booster (2), the first booster (2) is connected to the first end of the at least one first control valve (31, 32, 33, 34), a second end of the at least one first control valve (31, 32, 33, 34) is connected to the at least one first interface, and the at least one first interface is connected to at least one brake wheel cylinder. The at least one first interface is connected to the fifth interface (8e) through the at least one third control valve (41, 42, 43, and 44). The at least one first interface (8F and 8G) is connected to the at least one fourth interface (8f and 8g) in a one-to-one correspondence, and the second interface (8E) is connected to the fifth interface (8e).

A second aspect of this application provides a hydraulic apparatus. In a first possible implementation of the second aspect, the hydraulic apparatus includes a master cylinder (1), a brake fluid reservoir (5), a second booster, at least one first interface, and a second interface (8E). The master cylinder (1) includes a first main cavity (1i), and the at least one first interface includes a first output interface (8F). The first main cavity (1i) is connected to the first output interface (8F) through the second booster. The brake fluid reservoir (5) is connected to the first main cavity (1i), and the brake fluid reservoir (5) is connected to the second interface (8E).

According to the first possible implementation of the second aspect, in a second possible implementation, the second booster includes a fourth control valve (11), and the first main cavity (1i) is connected to the first output interface (8F) through the fourth control valve (11).

According to the second possible implementation of the second aspect, in a third possible implementation, the second booster further includes a first booster pump (203), and an output end of the first booster pump (203) is connected to a pipe between the fourth control valve (11) and the first output interface (8F).

According to the third possible implementation of the second aspect, in a fourth possible implementation, an input end of the first booster pump (203) is connected to the brake fluid reservoir (5).

According to the fourth possible implementation of the second aspect, in a fifth possible implementation, the second booster further includes a first one-way valve (203v), the brake fluid reservoir (5) is connected to a first end of the first one-way valve (203v), a second end of the first one-way valve (203v) is connected to the input end of the first booster pump (203), and the first one-way valve (203v) is configured to allow brake fluid to flow from the brake fluid reservoir (5) to the input end of the first booster pump (203) through the first one-way valve (203v).

According to the fifth possible implementation of the second aspect, in a sixth possible implementation, the second booster further includes a fifth control valve (211), and the brake fluid reservoir (5) is connected to the first output interface (8F) through the fifth control valve (211).

According to the sixth possible implementation of the second aspect, in a seventh possible implementation, the second booster further includes a sixth control valve (213), a first end of the sixth control valve (213) is connected to the first main cavity (1i), and a second end of the sixth control valve (213) is connected to a pipe between the first one-way valve (203v) and the first booster pump (203), and is connected to the input end of the first booster pump (203).

According to the seventh possible implementation of the second aspect, in an eighth possible implementation, the master cylinder (1) further includes a second main cavity (1j), and the second main cavity (1j) is connected to a second output interface (8G) through a seventh control valve (12). The second booster further includes a second booster pump (204), a ninth control valve (212), a second one-way valve (204v), and a tenth control valve (214). The brake fluid reservoir (5) is connected to a first end of the second one-way valve (204v), a second end of the second one-way valve (204v) is connected to an input end of the second booster pump (204), and the second one-way valve (204v) is configured to allow the brake fluid to flow from the brake fluid reservoir (5) to the input end of the second booster pump (204) through the second one-way valve (204v). An output end of the second booster pump (204) is connected to a pipe between the seventh control valve (12) and the second output interface (8G). The brake fluid reservoir (5) is connected to the second output interface (8G) through the ninth control valve (212). A first end of the tenth control valve (214) is connected to the second main cavity (1j), and a second end of the tenth control valve (214) is connected to a pipe between the second one-way valve (204v) and the second booster pump (204), and is connected to the input end of the second booster pump (204).

According to the fifth possible implementation of the second aspect, in a ninth possible implementation, the second booster further includes a fifth control valve (211), a first end of the fifth control valve (211) is connected to a pipe between the output end of the first booster pump (203) and the first output interface (8F), and a second end of the fifth control valve (211) is connected to a pipe between the input end of the first booster pump (203) and the second end of the first one-way valve (203v).

According to the ninth possible implementation of the second aspect, in a tenth possible implementation, the second booster further includes a sixth control valve (213), and the brake fluid reservoir (5) is connected to the first output interface (8F) through the sixth control valve (213).

According to the fourth possible implementation of the second aspect, in an eleventh possible implementation, the second booster further includes a fifth control valve (211) and a sixth control valve (213), and the brake fluid reservoir (5) is further connected to the first output interface (8F) sequentially through the sixth control valve (213) and the fifth control valve (211).

According to the eleventh possible implementation of the second aspect, in a twelfth possible implementation, the brake fluid reservoir (5) is also connected to the input end of the first booster pump (203) through the sixth control valve (213).

According to the twelfth possible implementation of the second aspect, in a thirteenth possible implementation, the master cylinder (1) further includes a second main cavity (1j), and the second main cavity (1j) is connected to a second output interface (8G) through a seventh control valve (12). The second booster further includes a second booster pump (204) and a ninth control valve (212), the brake fluid reservoir (5) is connected to an input end of the second booster pump (204) through the sixth control valve (213), and the brake fluid reservoir (5) is connected to the second output interface (8G) sequentially through the sixth control valve (213) and the ninth control valve (212).

According to the third possible implementation of the second aspect, in a fourteenth possible implementation, the second booster according to the second aspect further includes a sixth control valve (213), a first end of the sixth control valve (213) is connected to a pipe between the fourth control valve (11) and the first main cavity (1i), and a second end of the sixth control valve (213) is connected to an input end of the first booster pump (203).

A third aspect of this application provides a hydraulic apparatus. In a first possible implementation of the third aspect, the hydraulic apparatus includes a first booster, at least one first control valve (31, 32, 33, 34), at least one second control valve (13 and 14), at least one third control valve (41, 42, 43, and 44), at least one fourth interface (8f and 8g), a fifth interface (8e), and at least one first interface. The at least one fourth interface (8f and 8g) is connected to a first end of the at least one first control valve (31, 32, 33, 34) through the at least one second control valve (13 and 14), the fifth interface (8e) is connected to the first booster (2), the first booster (2) is connected to the first end of the at least one first control valve (31, 32, 33, 34), a second end of the at least one first control valve (31, 32, 33, 34) is connected to the at least one first interface, and the at least one first interface is connected to at least one brake wheel cylinder. The at least one first interface is connected to the fifth interface (8e) through the at least one third control valve (41, 42, 43, and 44).

According to the first possible implementation of the third aspect, in a second possible implementation, the first booster includes a first booster cavity (202i), the first booster cavity (202i) is separately connected to a first end of a first booster control valve (21) and a first end of a second booster control valve (22), a second end of the first booster control valve (21) is connected to the at least one first interface through the at least one first control valve (31, 32, 33, 34), and a second end of the second booster control valve (22) is connected to the at least one first interface through the at least one first control valve (31, 32, 33, 34).

According to the second possible implementation of the third aspect, in a third possible implementation, the first booster further includes a third booster control valve (23) and a fourth booster control valve (24), the first booster cavity (202i) is separately connected to a first end of the third booster control valve (23) and a first end of the fourth booster control valve (24), a second end of the third booster control valve (23) is connected to the at least one first interface through the at least one first control valve (31, 32, 33, 34), and a second end of the fourth booster control valve (24) is connected to the at least one first interface through the at least one first control valve (31, 32, 33, 34).

According to the second possible implementation of the third aspect, in a fourth possible implementation, the first booster further includes a second booster cavity (202j), a third booster control valve (23), and a fourth booster control valve (24), the second booster cavity (202j) is separately connected to a first end of the third booster control valve (23) and a first end of the fourth booster control valve (24), a second end of the third booster control valve (23) is connected to the at least one first interface through the at least one first control valve (31, 32, 33, 34), and a second end of the fourth booster control valve (24) is connected to the at least one first interface through the at least one first control valve (31, 32, 33, 34).

According to the second possible implementation of the third aspect, in a fifth possible implementation, the first booster further includes a second booster cavity (202j) and a fifth booster control valve (25), the first booster cavity (202i) is connected to a first end of the fifth booster control valve (25), and a second end of the fifth booster control valve (25) is separately connected to the first end of the first booster control valve (21) and the first end of the second booster control valve (22). The second booster cavity (202j) is separately connected to the first end of the first booster control valve (21) and the first end of the second booster control valve (22). The second end of the first booster control valve (21) is connected to the at least one first interface through the at least one first control valve (31, 32, 33, 34). The second end of the second booster control valve (22) is connected to the at least one first interface through the at least one first control valve (31, 32, 33, 34).

According to the third possible implementation of the third aspect, in a sixth possible implementation, a first control unit (92) and a second control unit (93) are further included. The second control valve (13) is controlled by both the first control unit (92) and the second control unit (93), the first booster control valve (21) and the second booster control valve (22) are controlled by the first control unit (92), and the third booster control valve (23) and the fourth booster control valve (24) are controlled by the second control unit (93).

According to the fourth possible implementation of the third aspect, in a seventh possible implementation, a first control unit (92) and a second control unit (93) are further included. The second control valve (13), the first booster control valve (21), the second booster control valve (22), the third booster control valve (23), and the fourth booster control valve (24) are controlled by both the first control unit (92) and the second control unit (93).

According to the fifth possible implementation of the third aspect, in an eighth possible implementation, a first control unit (92) and a second control unit (93) are further included. The first booster control valve (21), the second booster control valve (22), the fifth booster control valve (25), and the second control valve (13) are controlled by the first control unit (92), and the at least one first control valve (31, 32, 33, 34) and the at least one third control valve (41, 42, 43, and 44) are controlled by both the first control unit (92) and the second control unit (93).

According to any one of the first to eighth possible implementations of the third aspect, in a ninth possible implementation, the first booster is controlled by both the first control unit (92) and the second control unit (93).

A fourth aspect of this application provides a method for controlling a brake system. In a first possible implementation of the fourth aspect, the brake system includes a master cylinder, a first booster, a second booster, and at least one first interface. The at least one first interface is connected to at least one brake wheel cylinder. The first booster is connected to the at least one first interface through at least one first control valve (31, 32, 33, 34). The master cylinder includes a first main cavity (1i), the first main cavity (1i) is connected to a second control valve (13) through the second booster, and the second control valve (13) is connected to the at least one first interface through the at least one first control valve (31, 32, 33, 34).

The method includes: obtaining a first brake requirement; and when the brake system is in a first state, controlling the second booster to work. The first state includes at least one of the following: the first booster is faulty, the second control valve (13) is faulty, and the at least one first control valve (31, 32, 33, 34) is faulty.

According to the first possible implementation of the fourth aspect, in a second possible implementation, the brake system includes a first booster pump (203) and a fourth control valve (11). The first main cavity (1i) is connected to the at least one first interface sequentially through the fourth control valve (11), the second control valve (13), and the at least one first control valve (31, 32, 33, 34). An output end of the first booster pump (203) is connected to a pipe between the fourth control valve (11) and the second control valve (13), and is connected to the at least one first interface sequentially through the second control valve (13) and the at least one first control valve (31, 32, 33, 34). The method includes: the controlling the second booster to work includes: controlling the fourth control valve (11) to be in a disconnected state.

According to the second possible implementation of the fourth aspect, in a third possible implementation, the brake system further includes a sixth control valve (213), a first end of the sixth control valve (213) is connected to the first main cavity (1i), and a second end of the sixth control valve (213) is connected to an input end of the first booster pump (203). The method includes: the controlling the second booster to work includes: controlling the sixth control valve (213) to be in a connected state.

According to the second possible implementation of the fourth aspect, in a fourth possible implementation, the brake system includes a brake fluid reservoir (5) and a fifth control valve (211), the brake fluid reservoir (5) is connected to an input end of the first booster pump (203), and the brake fluid reservoir (5) passes through the fifth control valve (211), the second control valve (13), and the at least one first control valve (31, 32, 33, 34) and is connected to the at least one first interface. The method includes: obtaining a second brake requirement; and controlling the fifth control valve (211) to be in a connected state.

According to the fourth possible implementation of the fourth aspect, in a fifth possible implementation, the method includes: controlling an opening degree or a switching frequency of the fifth control valve (211) based on the second brake requirement.

According to the first possible implementation of the fourth aspect, in a sixth possible implementation, the brake system includes a first control unit (91) and a second control unit (92), the second booster is controlled by the first control unit (91), and the second control valve (13) and the first booster are controlled by the second control unit (92). The method includes: the first state further includes that the second control unit is faulty.

A fifth aspect of this application provides a hydraulic apparatus. In a first possible implementation of the fifth aspect, the hydraulic apparatus includes a second booster, at least one first interface, a second interface (8E), at least one third interface, and at least one fourth interface. The at least one first interface includes a first output interface (8F). The at least one third interface is connected to a master cylinder, and the at least one fourth interface is connected to the fourth interface. The third interface is connected to the first output interface (8F) through the second booster.

According to the first possible implementation of the fifth aspect, in a second possible implementation, the second booster includes a fourth control valve (11), and the third interface is connected to the first output interface (8F) through the fourth control valve (11).

According to the second possible implementation of the fifth aspect, in a third possible implementation, the second booster further includes a first booster pump (203), and an output end of the first booster pump (203) is connected to a pipe between the fourth control valve (11) and the first output interface (8F).

According to the third possible implementation of the fifth aspect, in a fourth possible implementation, an input end of the first booster pump (203) is connected to the fourth interface.

According to the fourth possible implementation of the fifth aspect, in a fifth possible implementation, a first one-way valve (203v) is further included. The fourth interface is connected to a first end of the first one-way valve (203v), a second end of the first one-way valve (203v) is connected to the input end of the first booster pump (203), and the first one-way valve (203v) is configured to allow brake fluid to flow from the fourth interface to the input end of the first booster pump (203) through the first one-way valve (203v).

According to the fifth possible implementation of the fifth aspect, in a sixth possible implementation, the second booster further includes a fifth control valve (211), and the fourth interface is connected to the first output interface (8F) through the fifth control valve (211).

According to the sixth possible implementation of the fifth aspect, in a seventh possible implementation, the second booster further includes a sixth control valve (213), a first end of the sixth control valve (213) is connected to the third interface, and a second end of the sixth control valve (213) is connected to a pipe between the first one-way valve (203v) and the first booster pump (203), and is connected to the input end of the first booster pump (203).

According to the seventh possible implementation of the fifth aspect, in an eighth possible implementation, the master cylinder (1) further includes a second main cavity (1j), and the second main cavity (1j) is connected to a second output interface (8G) through a seventh control valve (12). The second booster further includes a second booster pump (204), a ninth control valve (212), a second one-way valve (204v), and a tenth control valve (214). The fourth interface is connected to a first end of the second one-way valve (204v), a second end of the second one-way valve (204v) is connected to an input end of the second booster pump (204), and the second one-way valve (204v) is configured to allow the brake fluid to flow from the fourth interface to the input end of the second booster pump (204) through the second one-way valve (204v). An output end of the second booster pump (204) is connected to a pipe between the seventh control valve (12) and the second output interface (8G). The fourth interface is connected to the second output interface (8G) through the ninth control valve (212). A first end of the tenth control valve (214) is connected to the second main cavity (1j), and a second end of the tenth control valve (214) is connected to a pipe between the second one-way valve (204v) and the second booster pump (204), and is connected to the input end of the second booster pump (204).

According to the fifth possible implementation of the fifth aspect, in a ninth possible implementation, the second booster further includes a fifth control valve (211), a first end of the fifth control valve (211) is connected to a pipe between the output end of the first booster pump (203) and the first output interface (8F), and a second end of the fifth control valve (211) is connected to a pipe between the input end of the first booster pump (203) and the second end of the first one-way valve (203v).

According to the ninth possible implementation of the fifth aspect, in a tenth possible implementation, the second booster further includes a sixth control valve (213), and the fourth interface is connected to the first output interface (8F) through the sixth control valve (213).

According to the fourth possible implementation of the fifth aspect, in an eleventh possible implementation, the second booster further includes a fifth control valve (211) and a sixth control valve (213), and the fourth interface is further connected to the first output interface (8F) sequentially through the sixth control valve (213) and the fifth control valve (211).

According to the eleventh possible implementation of the fifth aspect, in a twelfth possible implementation, the fourth interface is also connected to the input end of the first booster pump (203) through the sixth control valve (213).

According to the twelfth possible implementation of the fifth aspect, in a thirteenth possible implementation, the master cylinder (1) further includes a second main cavity (1j), and the second main cavity (1j) is connected to a second output interface (8G) through a seventh control valve (12). The second booster further includes a second booster pump (204) and a ninth control valve (212), the fourth interface is connected to an input end of the second booster pump (204) through the sixth control valve (213), and the fourth interface is connected to the second output interface (8G) sequentially through the sixth control valve (213) and the ninth control valve (212).

According to the third possible implementation of the fifth aspect, in a fourteenth possible implementation, the second booster according to the fifth aspect further includes a sixth control valve (213), a first end of the sixth control valve (213) is connected to a pipe between the fourth control valve (11) and the third interface, and a second end of the sixth control valve (213) is connected to an input end of the first booster pump (203).

A sixth aspect of this application provides a readable storage medium. The readable storage medium stores program instructions, and when the program instructions are executed, any method in the fourth aspect is performed.

A seventh aspect of this application provides a vehicle. The vehicle includes the brake system according to any one of the first aspect, or the vehicle includes the hydraulic apparatus according to any one of the second aspect, the third aspect, or the fifth aspect.

The brake system provided in embodiments of this application has a multi-redundancy design. This can ensure that the brake system can still meet a plurality of braking function requirements of a vehicle when a controller or a key solenoid valve fails, improves safety of the brake system, ensures pedal feeling of a driver, and brings more stable and comfortable driving experience to the driver.

### BRIEF DESCRIPTION OF DRAWINGS

FIG. 1 is a schematic diagram of a vehicle system architecture according to an embodiment of this application;
FIG. 2 is a schematic diagram of an arrangement of a brake system in a vehicle according to an embodiment of this application;
FIG. 3-a is a schematic diagram of a brake system according to an embodiment of this application;

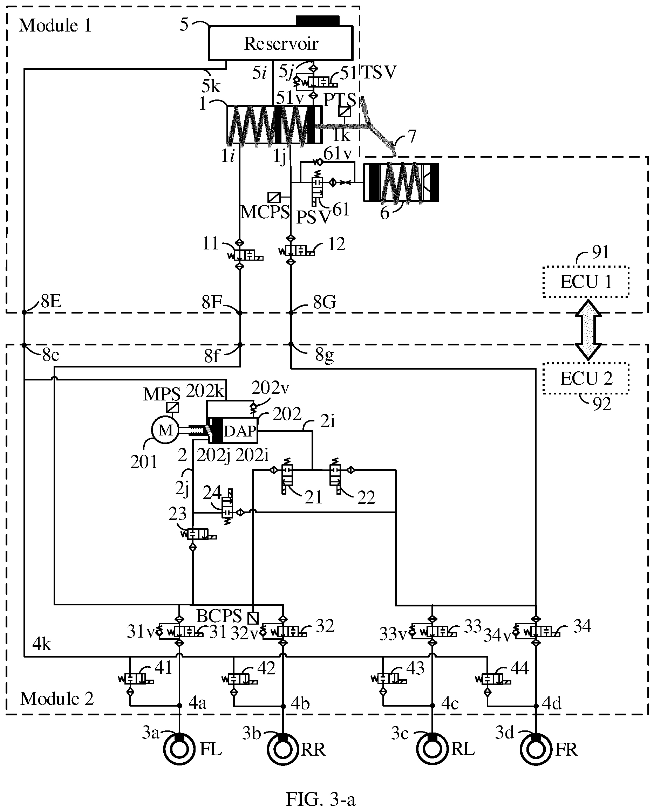

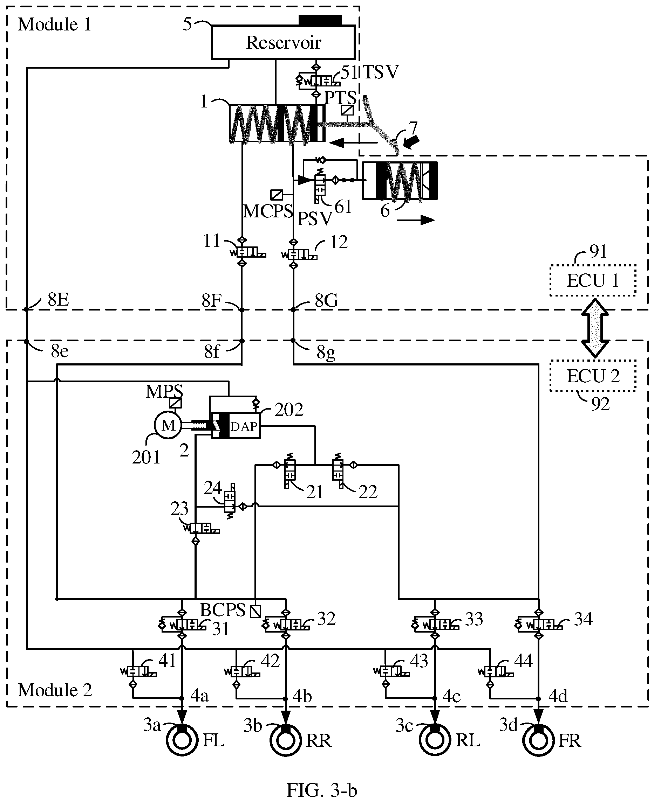

FIG. 3-b is a schematic diagram of a working status of a brake system according to an embodiment of this application;

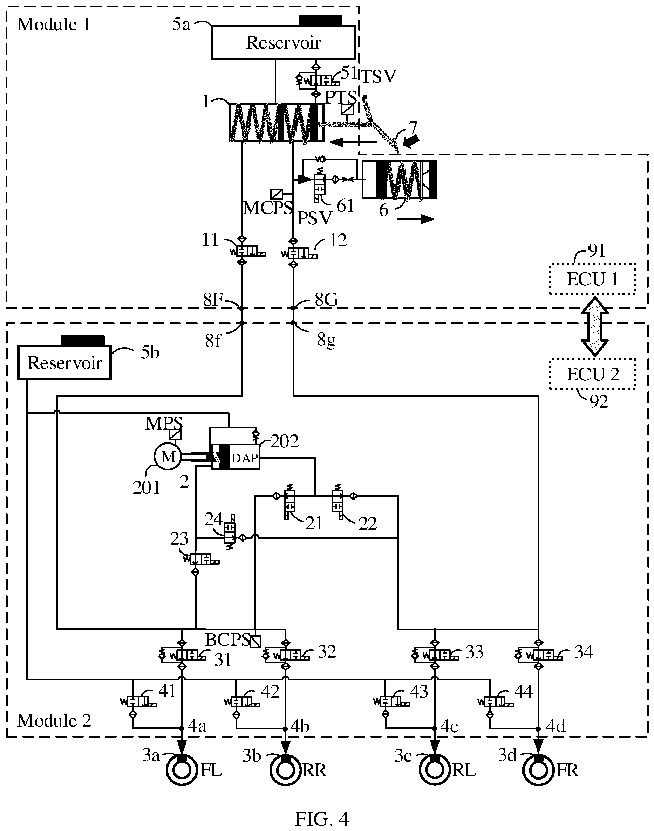

FIG. 4 is a schematic diagram of another brake system according to an embodiment of this application;

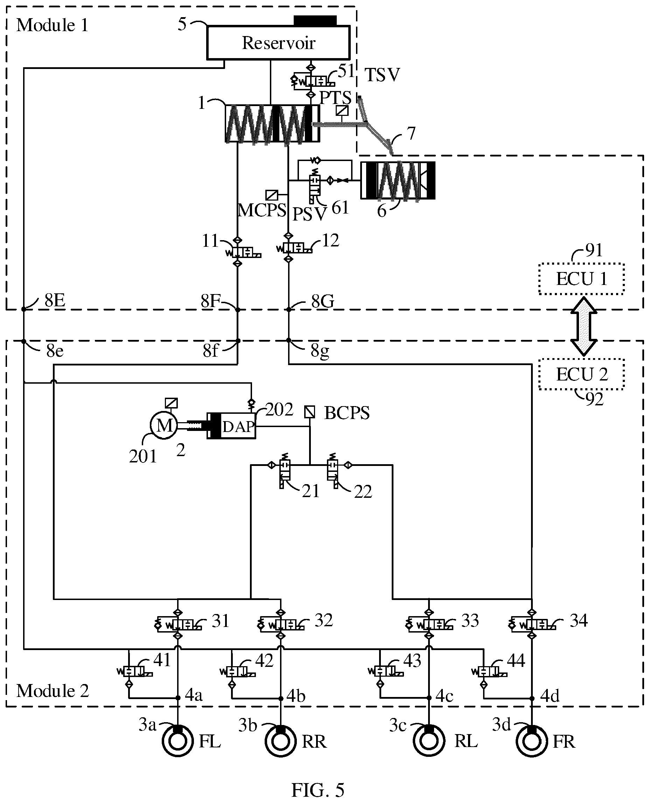

FIG. 5 is a schematic diagram of another brake system according to an embodiment of this application;

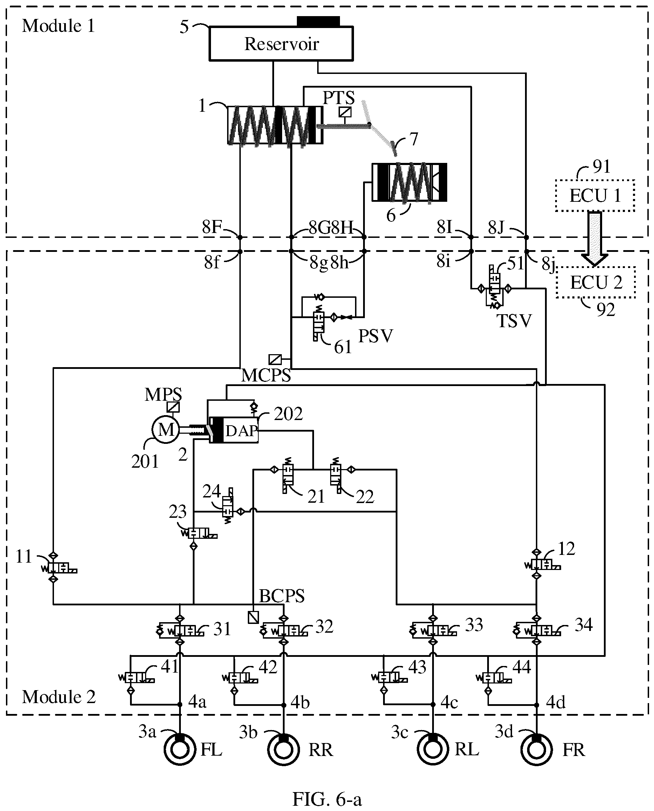

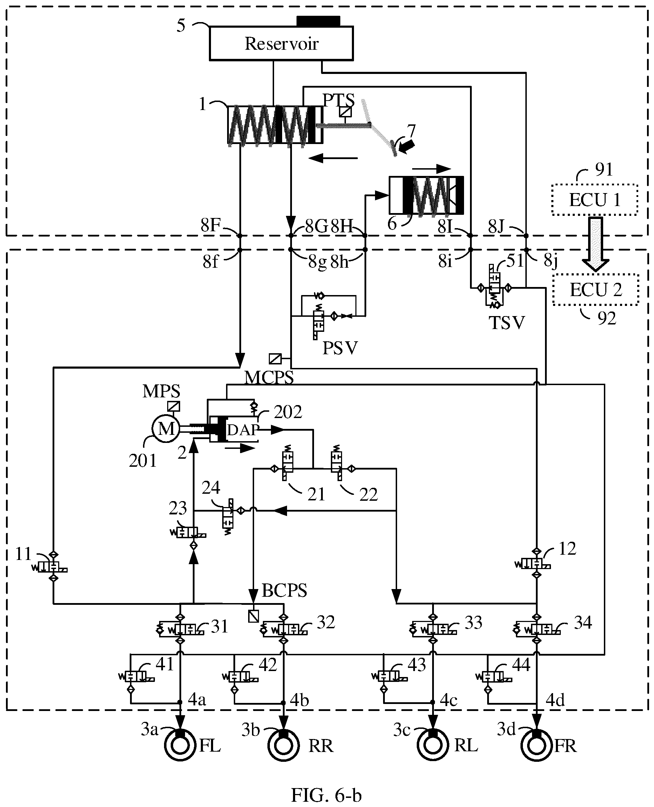

FIG. 6-a is a schematic diagram of another brake system according to an embodiment of this application;
FIG. 6-b is a schematic diagram of a working status of another brake system according to an embodiment of this application;

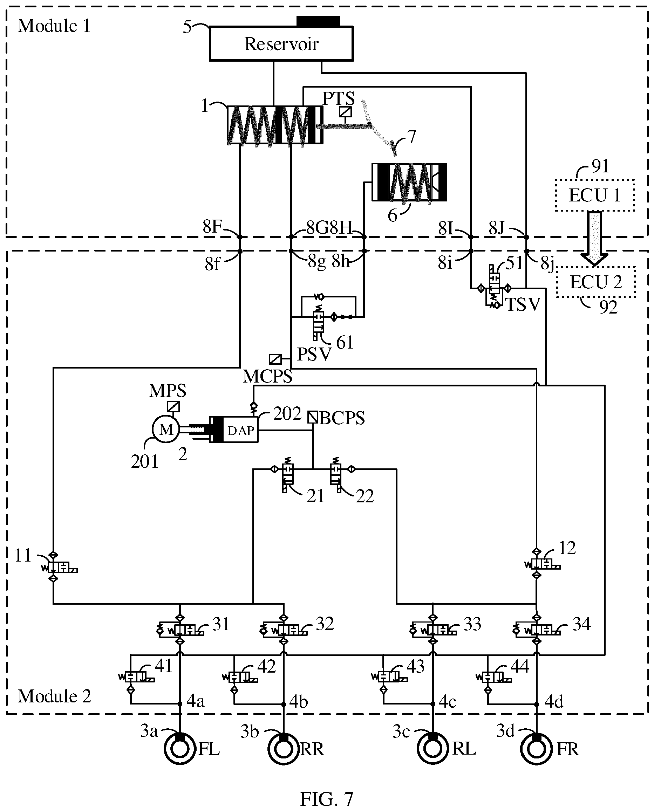

FIG. 7 is a schematic diagram of another brake system according to an embodiment of this application;

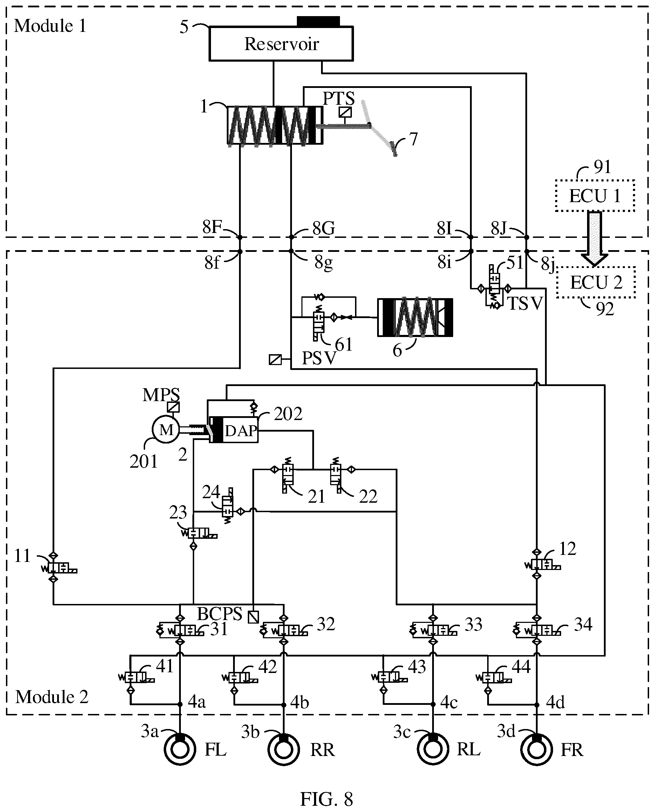

FIG. 8 is a schematic diagram of another brake system according to an embodiment of this application;

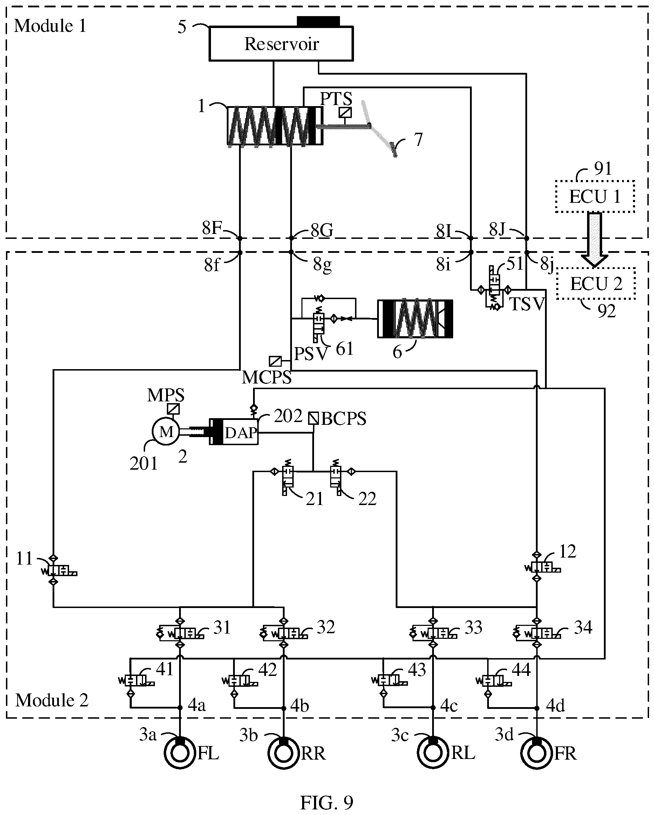

FIG. 9 is a schematic diagram of another brake system according to an embodiment of this application;

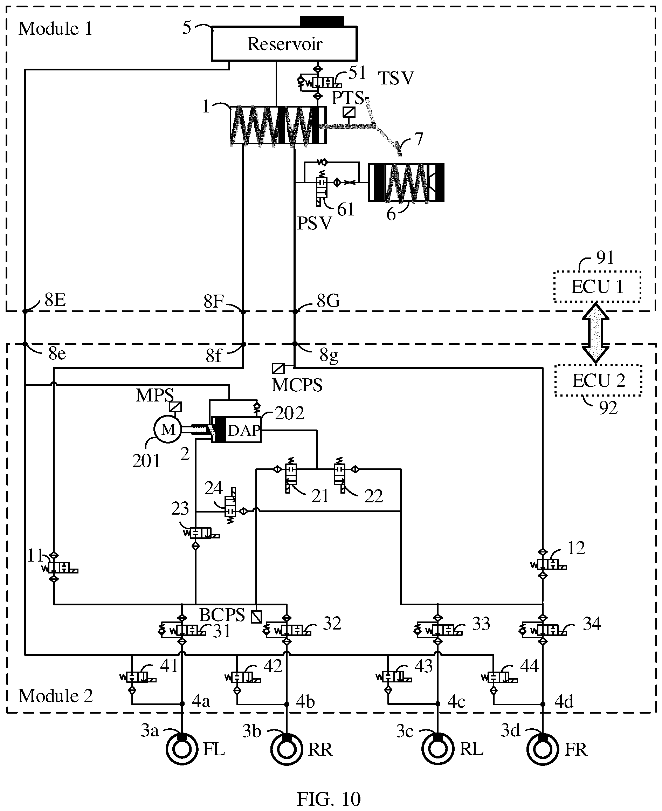

FIG. 10 is a schematic diagram of another brake system according to an embodiment of this application;

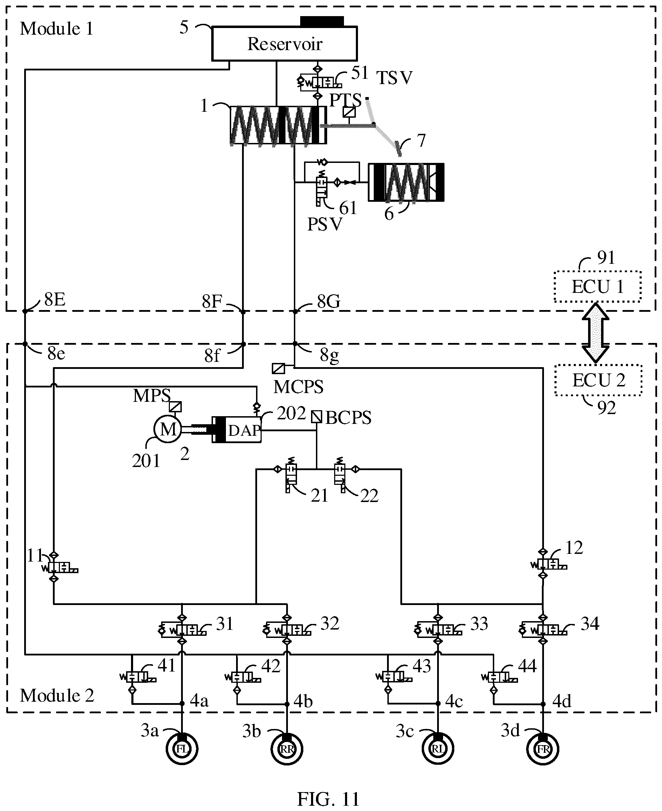

FIG. 11 is a schematic diagram of another brake system according to an embodiment of this application;

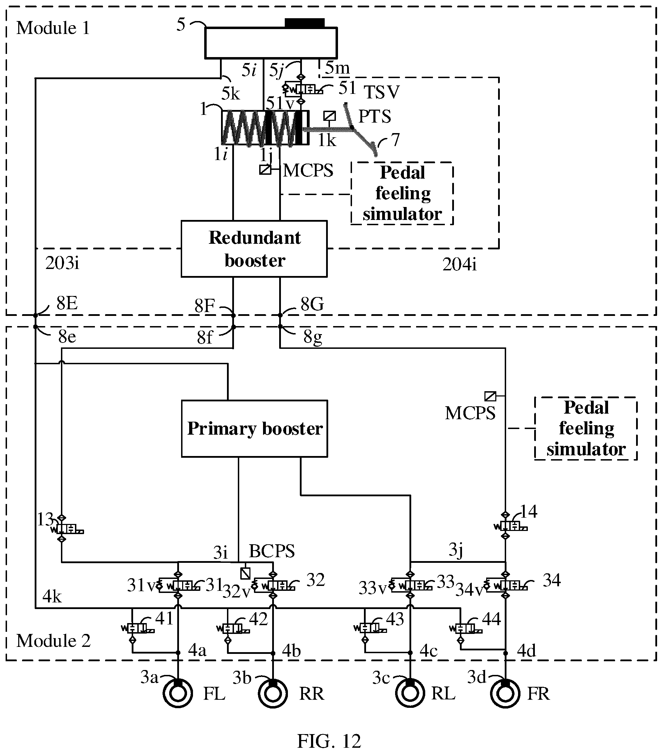

FIG. 12 is a schematic diagram of an architecture of another brake system according to an embodiment of this application;

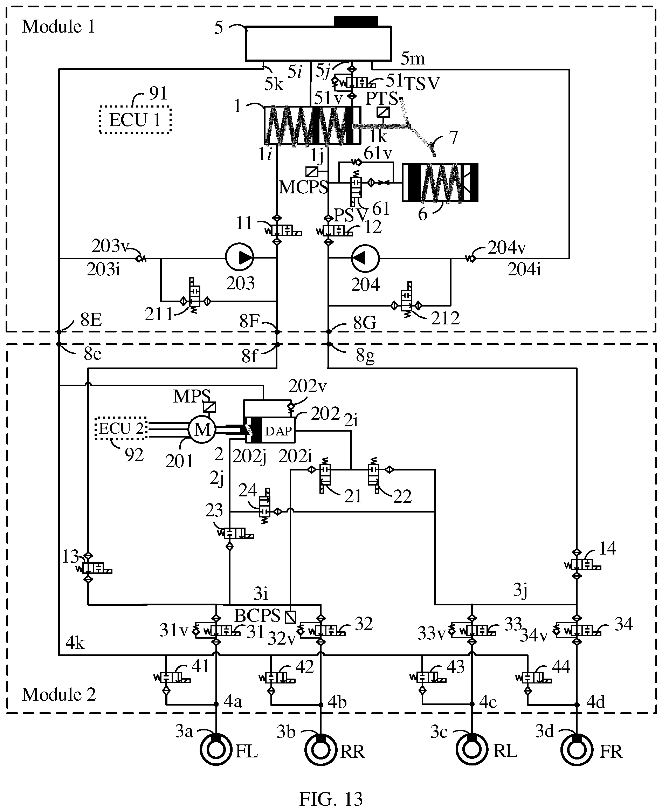

FIG. 13 is a schematic diagram of another brake system according to an embodiment of this application;

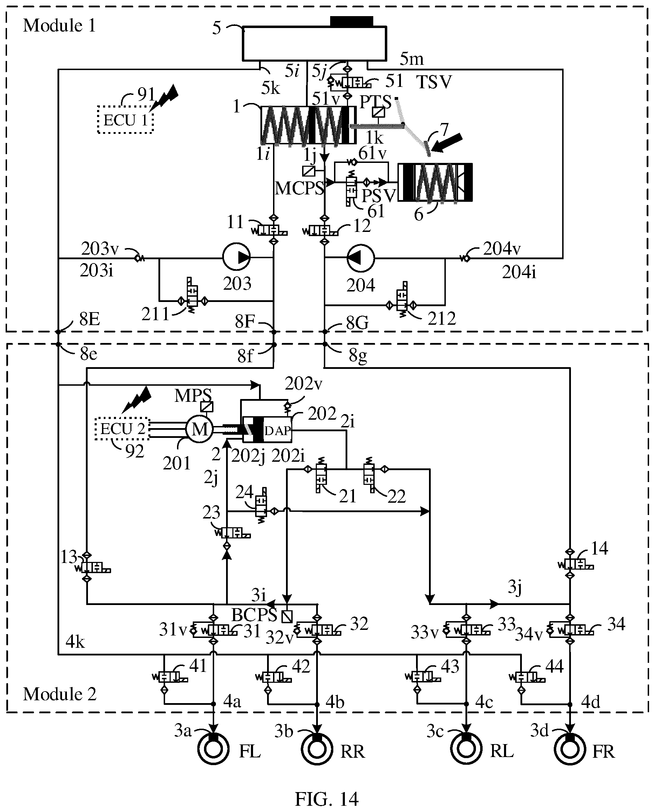

FIG. 14 is a schematic diagram of a working status of another brake system according to an embodiment of this application;

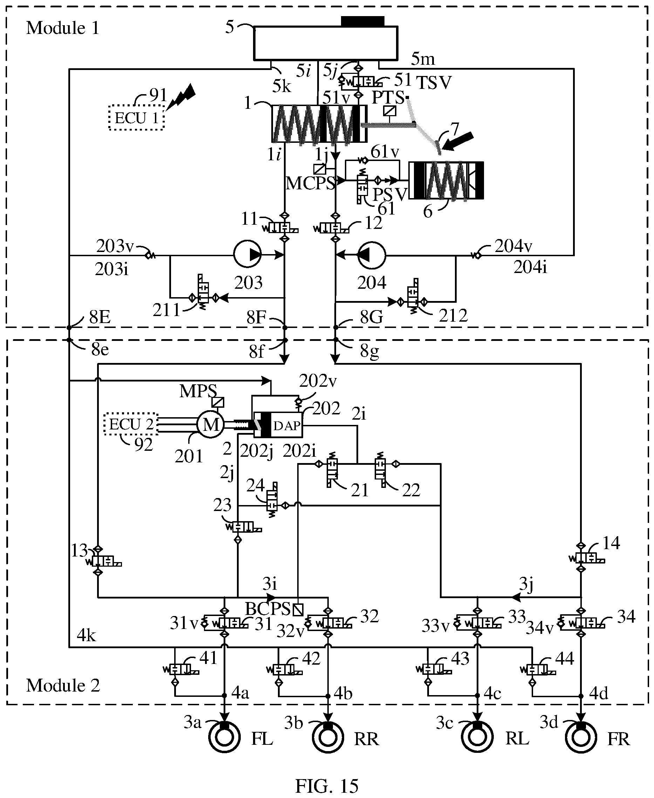

FIG. 15 is a schematic diagram of a working status of another brake system according to an embodiment of this application;

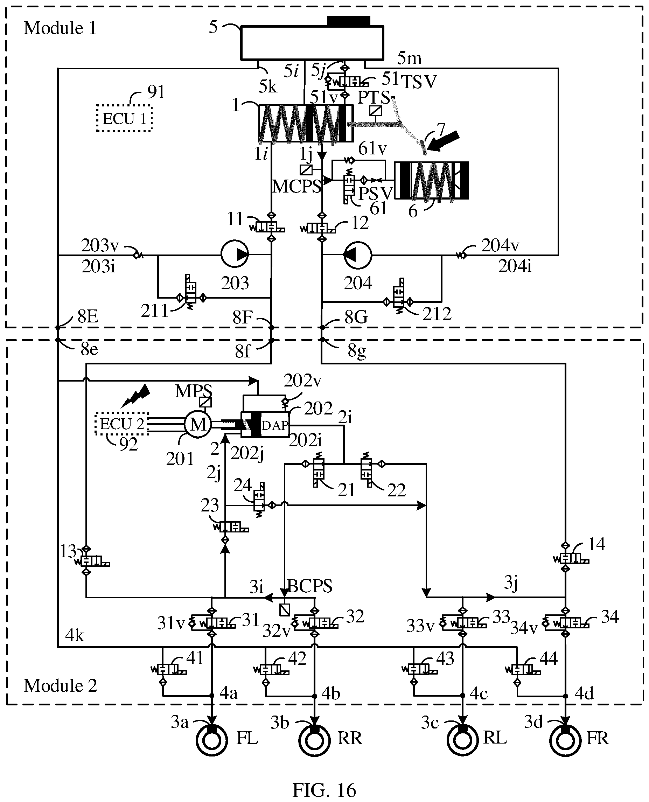

FIG. 16 is a schematic diagram of a working status of another brake system according to an embodiment of this application;

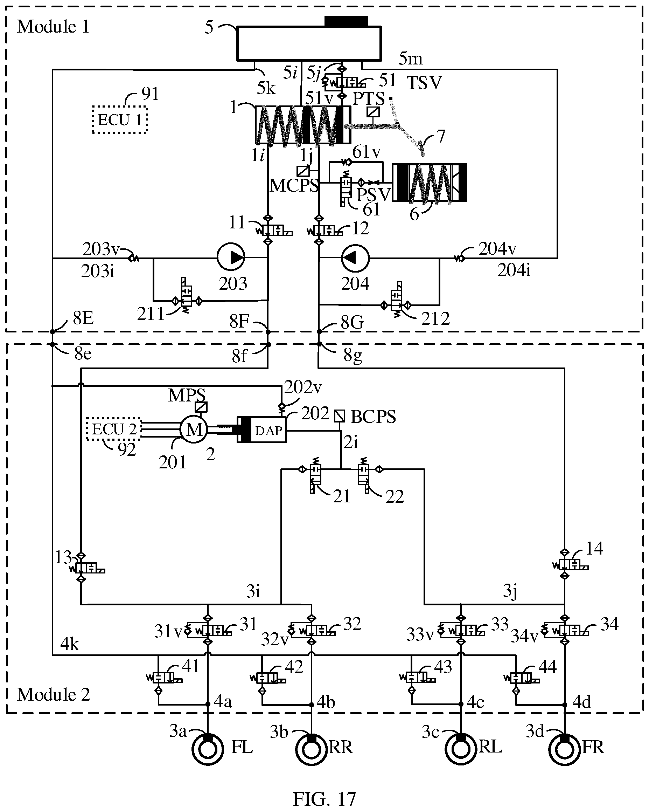

FIG. 17 is a schematic diagram of another brake system according to an embodiment of this application;

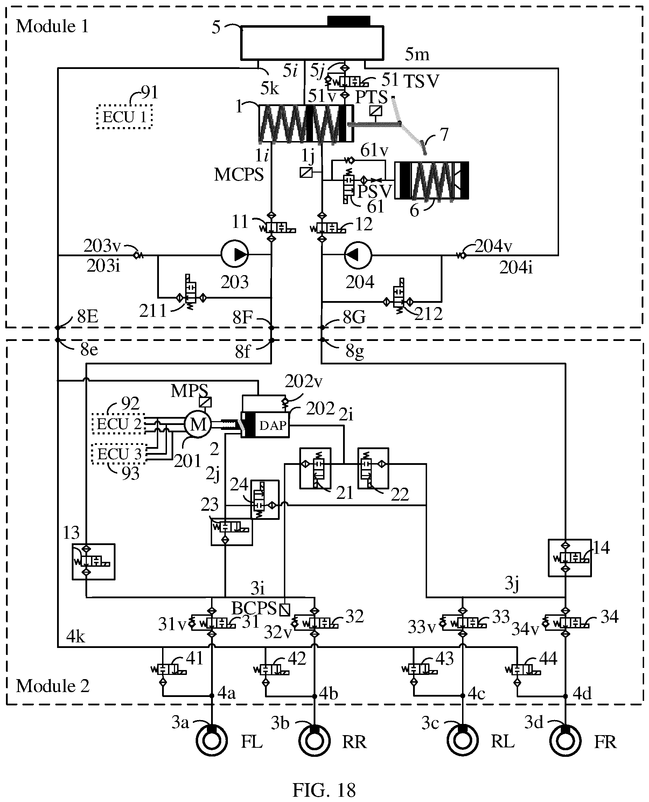

FIG. 18 is a schematic diagram of another brake system according to an embodiment of this application;

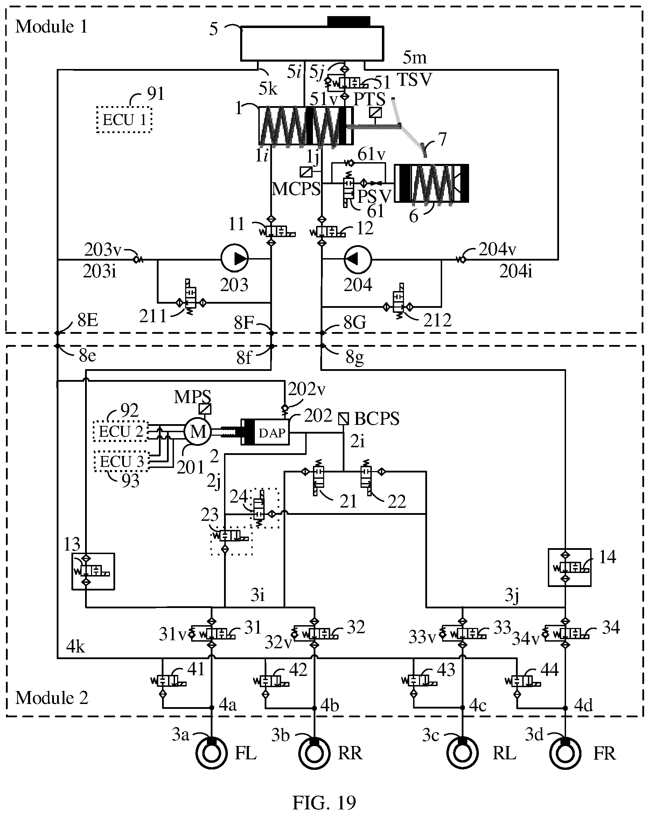

FIG. 19 is a schematic diagram of another brake system according to an embodiment of this application;

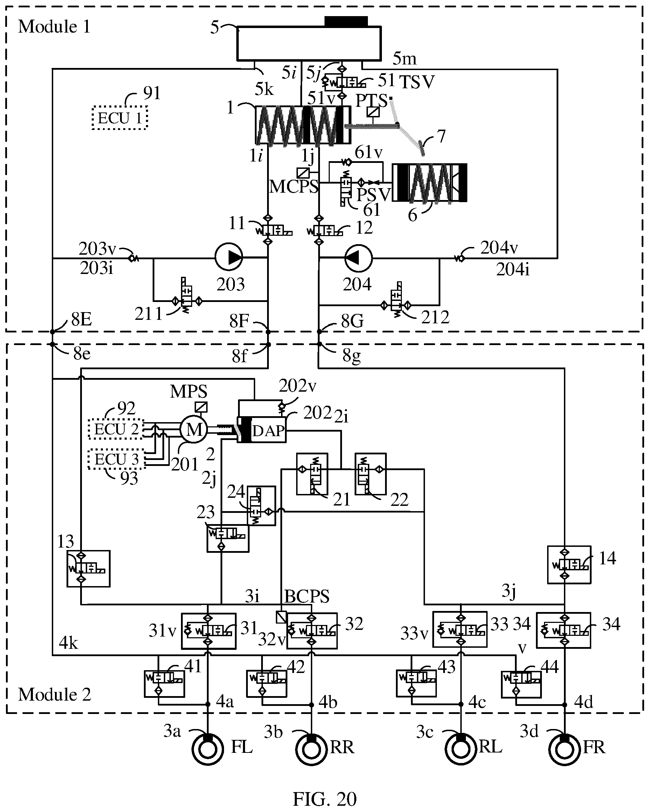

FIG. 20 is a schematic diagram of another brake system according to an embodiment of this application;

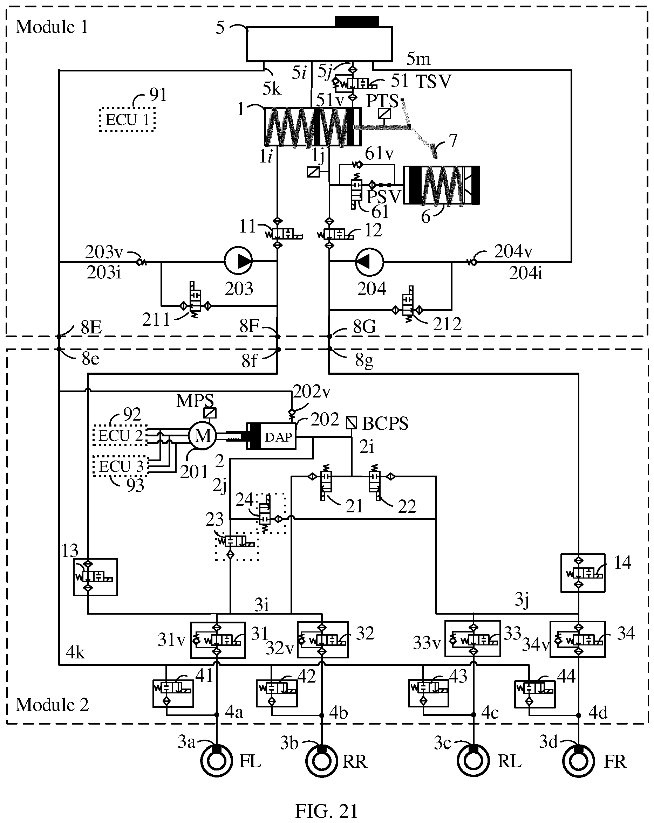

FIG. 21 is a schematic diagram of another brake system according to an embodiment of this application;

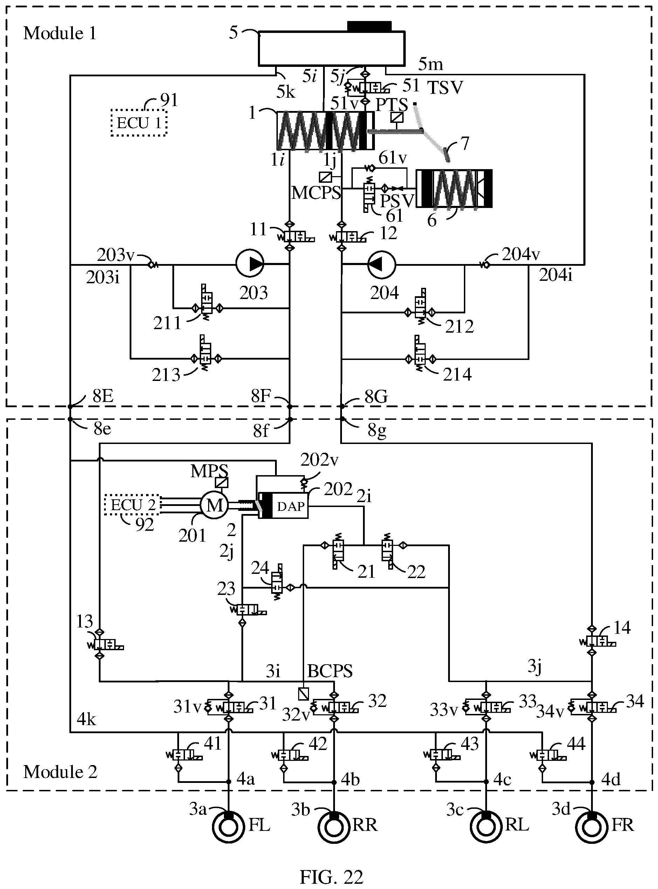

FIG. 22 is a schematic diagram of another brake system according to an embodiment of this application;

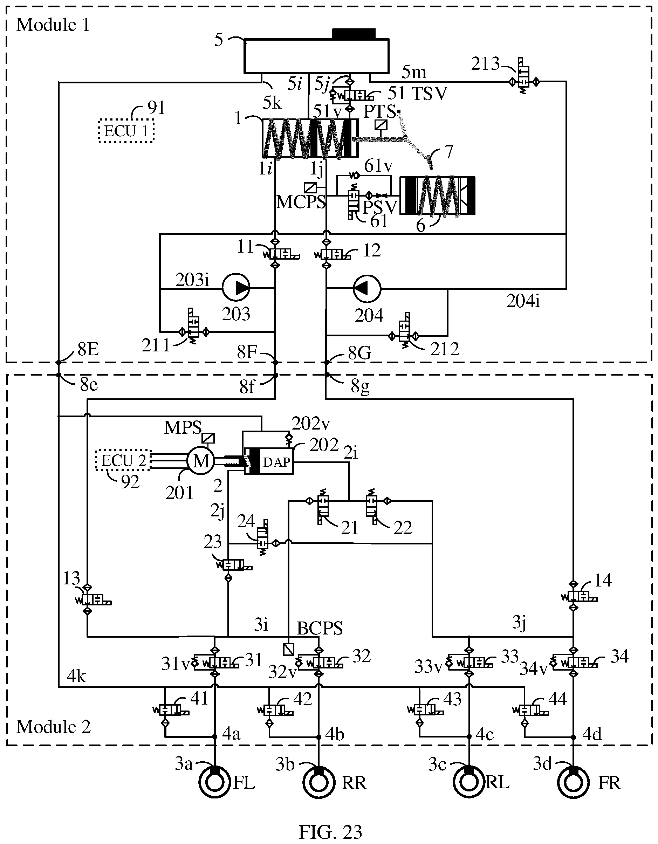

FIG. 23 is a schematic diagram of another brake system according to an embodiment of this application;

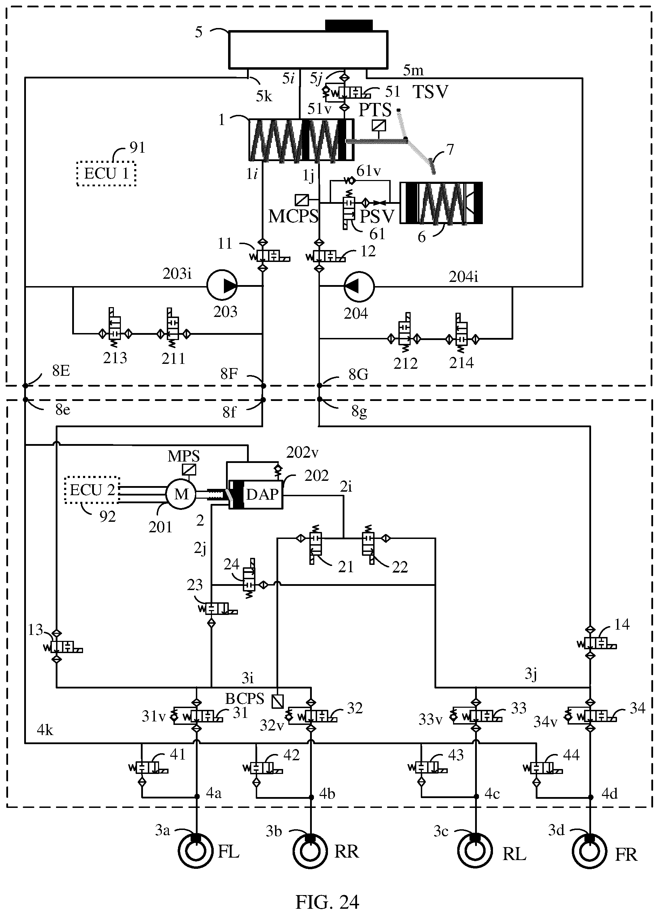

FIG. 24 is a schematic diagram of another brake system according to an embodiment of this application;

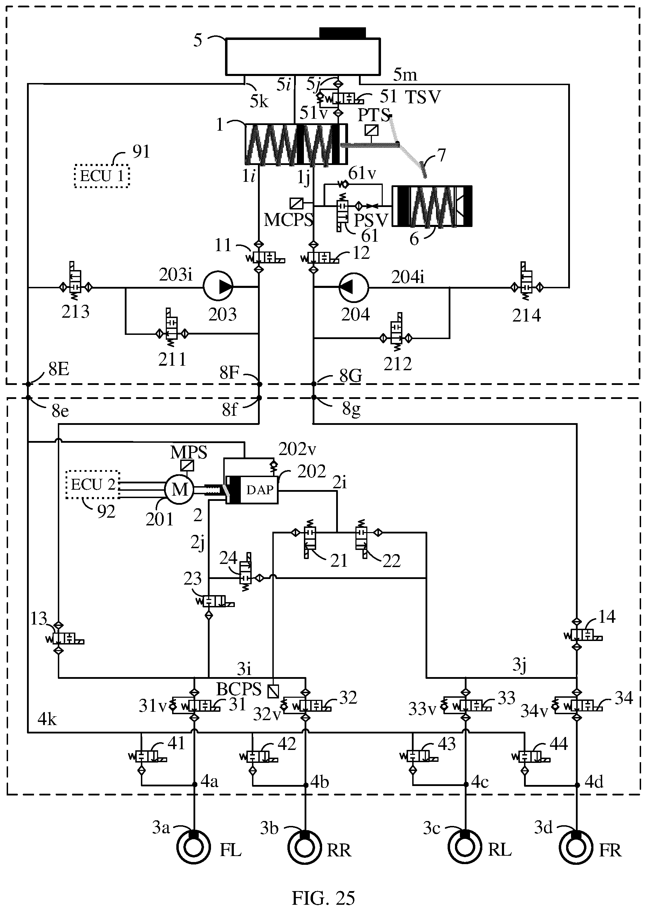

FIG. 25 is a schematic diagram of another brake system according to an embodiment of this application;

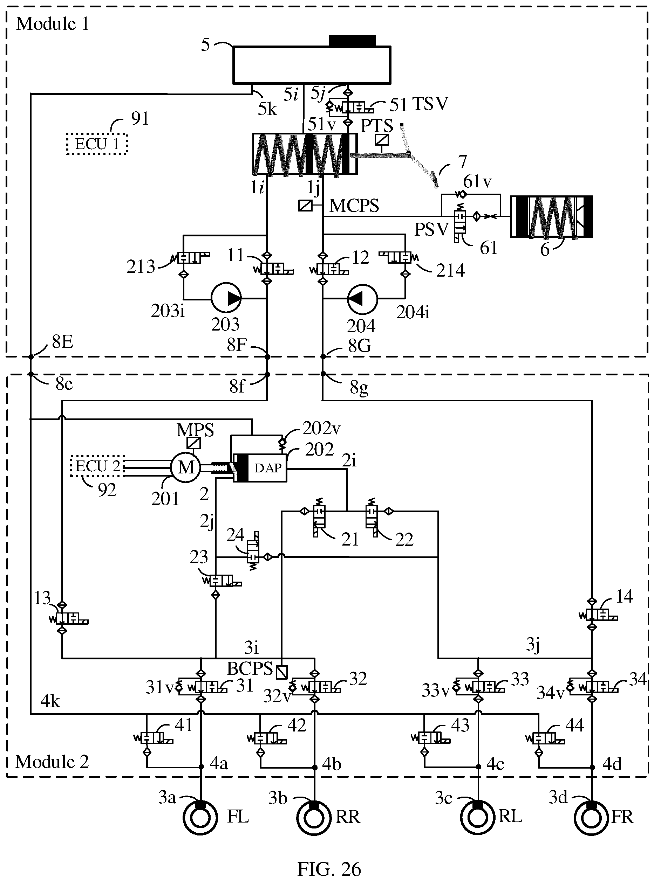

FIG. 26 is a schematic diagram of another brake system according to an embodiment of this application;

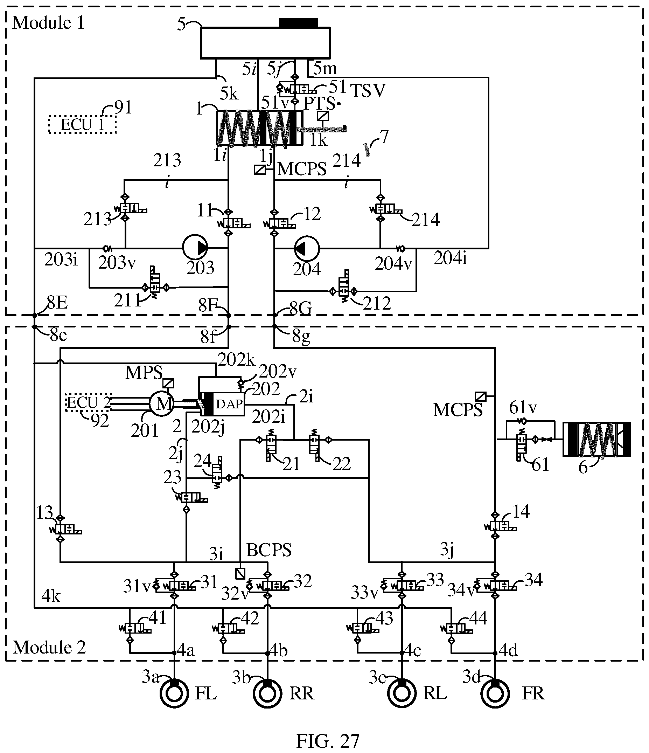

FIG. 27 is a schematic diagram of another brake system according to an embodiment of this application;

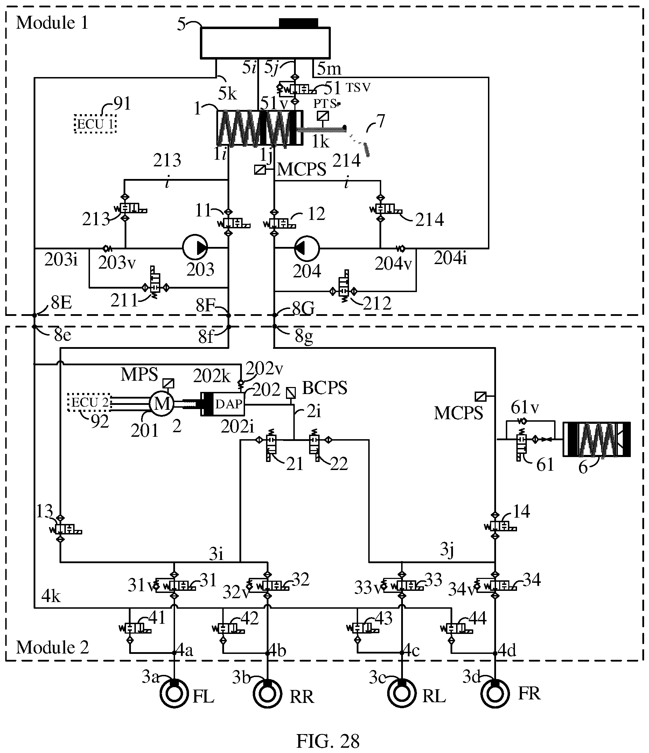

FIG. 28 is a schematic diagram of another brake system according to an embodiment of this application;

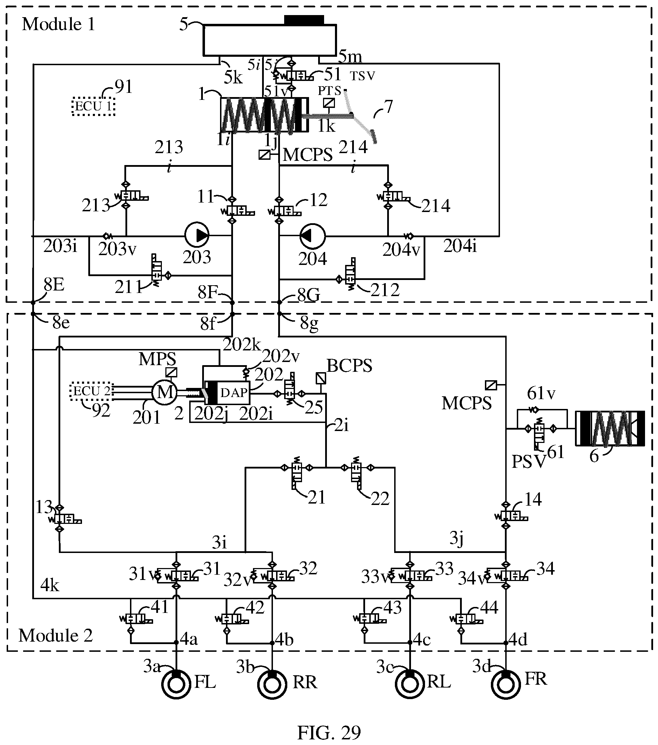

FIG. 29 is a schematic diagram of another brake system according to an embodiment of this application;

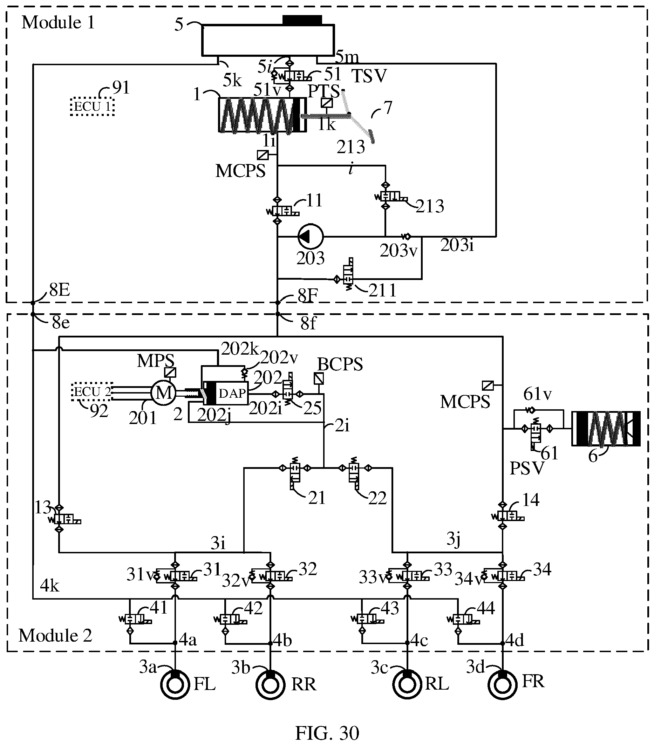

FIG. 30 is a schematic diagram of another brake system according to an embodiment of this application;

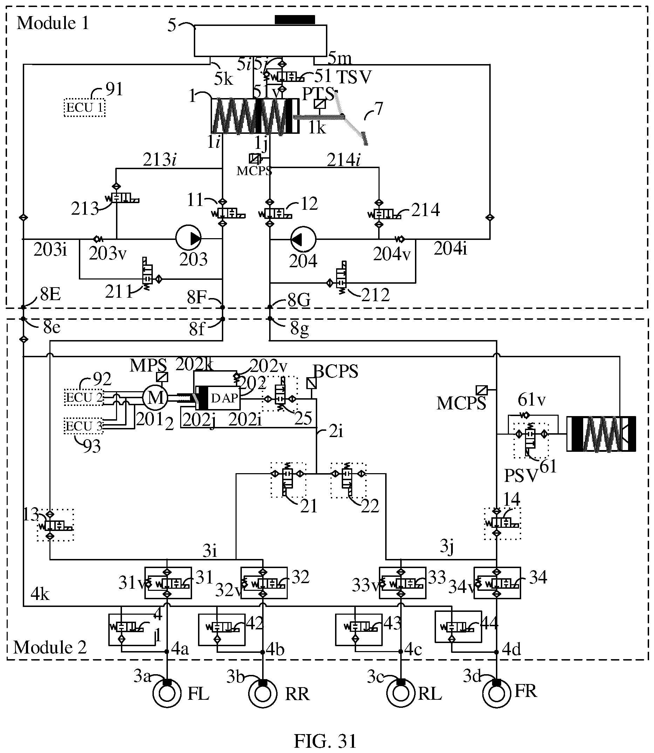

FIG. 31 is a schematic diagram of another brake system according to an embodiment of this application;

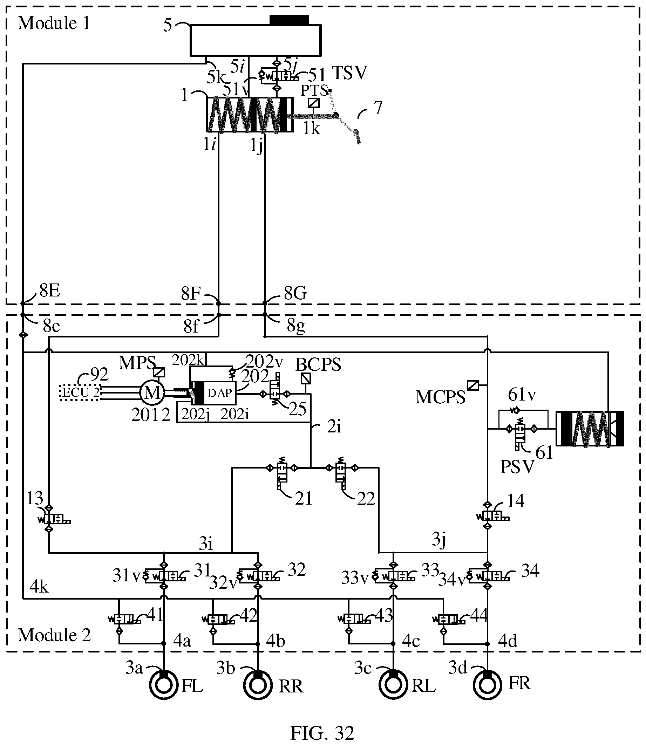

FIG. 32 is a schematic diagram of another brake system according to an embodiment of this application; and

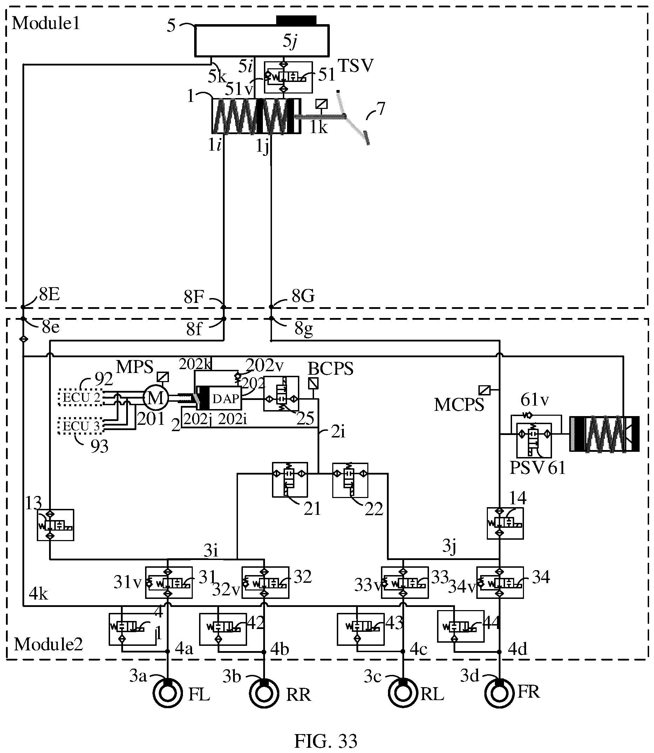

FIG. 33 is a schematic diagram of another brake system according to an embodiment of this application.

### DESCRIPTION OF EMBODIMENTS

The following describes technical solutions of this application with reference to accompanying drawings. It is clear that the described embodiments are merely some rather than all of embodiments provided in this application. All other embodiments obtained by a person of ordinary skill in the art based on embodiments of this application without creative efforts shall fall within the protection scope of this application.

For ease of understanding, the specification of this application first describes related terms and concepts that may be used in embodiments of this application.

Integrated brake system (integrated brake system, IBS): The integrated brake system is an electro-hydraulic brake system including an electric linear pump, a solenoid valve, a valve body, and the like, and can implement braking functions such as an ABS, AEB, a TCS, and ESC of a vehicle.

Redundant brake unit (redundant brake unit, RBU): The redundant brake unit is an independent brake unit used to back up a primary brake system. When the primary brake system of the vehicle fails, the RBU completes braking of the vehicle, to improve safety of the vehicle.

Basic brake function (basic brake function, BBF): The basic brake function is performed in response to a braking intention.

Antilock brake system (antilock brake system, ABS): Generally, wheels tend to lock when the vehicle is braking in emergency or on an icy and snowy road. Wheel locking causes problems such as an increased braking distance and a loss of a steering intention. The ABS appropriately reduces, based on a wheel lock situation, a braking force at the wheels that tend to lock, to implement an antilock function.

Electronic stability control (electronic stability control, ESC) system: A sensor collects vehicle information to determine whether the vehicle is unstable. When the vehicle tends to be unstable, the ESC system applies a braking force to one wheel or some wheels to obtain a yaw moment that stabilizes the wheels, to stabilize the vehicle.

Traction control system (traction control system, TCS): When running on the icy and snowy road or a wheel falls into a muddy road, the vehicle cannot run normally due to serious wheel slip. Based on a wheel slip situation, the TCS appropriately reduces a driving force or applies a braking force to a slipping wheel, to reduce the wheel slip and ensure normal running of the vehicle.

Adaptive cruise control (adaptive cruise control, ACC): A system for keeping a reasonable distance from a front vehicle is added to a system for cruise control at a specified speed. Sub-functions of the system include cruise control, follow cruise, corner cruise, driving mode selection, smart cornering, intelligent speed limit, and the like, and a vehicle speed is controlled mainly through a brake system and a propulsion system to implement a cruise function.

Automatic emergency braking (automatic emergency braking, AEB): When the vehicle encounters an emergency or a distance between the vehicle and the front vehicle or a pedestrian is less than a safety distance, the vehicle actively brakes to avoid or reduce a rear-end collision.

AEB prefill (AEB prefill, ABP): The AEB prefill better prepares for pressure build-up by reducing a distance between a brake disc and a friction lining.

Adaptive braking assist (adaptive braking assist, ABA): The adaptive braking assist adaptively adjusts a braking force of the vehicle by sensing a speed of another vehicle and a distance from the another vehicle. For example, when a collision may occur but a pedal force applied by a driver to a brake pedal is insufficient, a braking force of the brake system is actively increased.

Automatic warning braking (automatic warning braking, AWB): The automatic warning braking provides warning to the driver through short braking before full braking.

Vehicle longitudinal control (vehicle longitudinal control, VLC): The vehicle longitudinal control includes control of the vehicle speed and an acceleration in a longitudinal direction.

Controller driving deceleration (controller driving deceleration, CDD): The controller driving deceleration helps the vehicle complete a transition from braking to a stationary state, and helps the vehicle complete a comfortable start from the stationary state.

Automatic vehicle hold (automatic vehicle hold, AVH): The vehicle can automatically hold a braking state when the vehicle stops and waits. The driver does not need to step the brake pedal for a long time.

Brake disc washing (brake disc washing, BDW): The brake disc washing increases pressure of the brake system to bring a break pad into contact with the brake disc, to remove dirt and water stains.

Hazard lights (hazard lights, HAZ): When the vehicle performs emergency braking, an alarm is sent to an ambient vehicle by flashing signal lights of the vehicle.

Hydraulic brake assist (hydraulic brake assist, HBA): During emergency braking, when the pedal force applied by the driver to the brake pedal is insufficient, a hydraulic system can quickly increase the braking force.

Hydraulic fading compensation (hydraulic fading compensation, HFC): The hydraulic fading compensation identifies and compensates for brake system performance deterioration due to overheating of the brake system.

Hydraulic rear-wheel boost (hydraulic rear-wheel boost, HRB): The hydraulic rear-wheel boost increases braking forces of rear wheels during emergency braking.

Hill-start assist system (hill-start assist system, HAS): The hill-start assist system prevents the vehicle from sliding when the vehicle starts on a hill.

Hill descent control (hill descent control, HDC): When the vehicle goes downhill, the vehicle can go downhill smoothly through automatic control of the brake system, and the driver does not need to step the brake pedal.

Value added function (value added function, VAF): The value added function includes additional braking functions such as AEB, ABP, ABA, AWB, CDD, VLC, AVH, BDW, HAZ, HBA, HFC, HRB, an HAS, and HDC, and can be used to support an autonomous driving system (autonomous driving system, ADS) or an advanced driving assistance system (Advanced Driving Assistance System, ADAS).

Other terms or concepts involved in the specification of this application further include a reservoir level sensor (reservoir level sensor, RLS), a test simulation valve (test simulation valve, TSV), a pedal simulation valve (pedal simulation valve, PSV), a pedal travel sensor (pedal travel sensor, PTS), a master cylinder pressure sensor (master cylinder pressure sensor, MCPS), a brake circuit pressure sensor (brake circuit pressure sensor, BCPS), a motor position sensor (motor position sensor, MPS), an electronic control unit (electronic control unit, ECU), a dual apply plunger (dual apply plunger, DAP), and the like.

It should be noted that descriptions of the foregoing terms and concepts are merely for helping understanding, and should not be construed as a limitation on embodiments of this application.

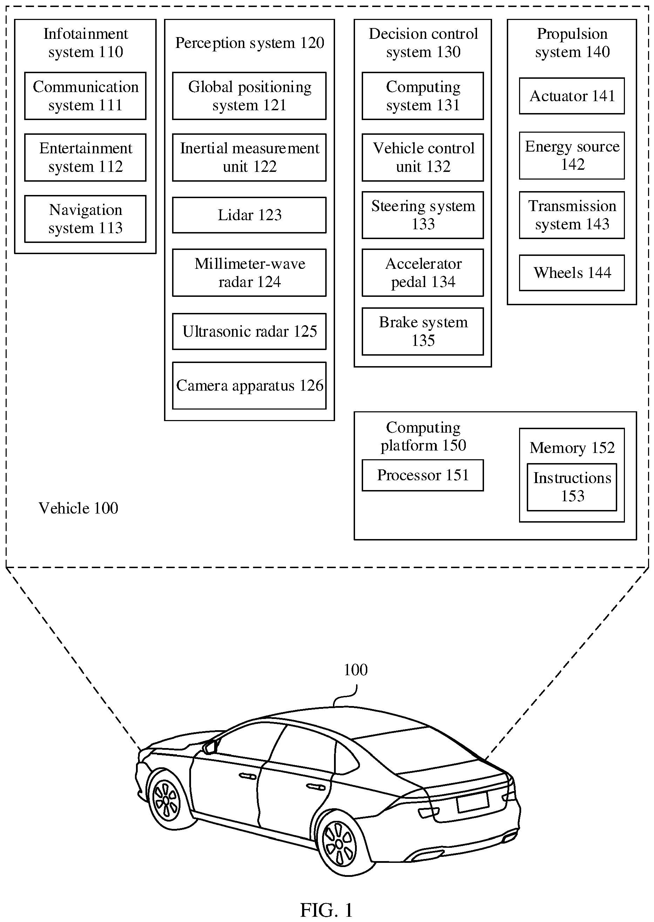

The following describes brake systems provided in embodiments of this application with reference to FIG. 1 to FIG. 21.

Vehicles are experiencing the transformation of electrification, network connection, and intelligence. For a vehicle, various systems, including a brake system, are also facing changes and upgrades. A structure change and function upgrade of the brake system are closely related to the innovation of a vehicle architecture. Specifically, the following describes various systems of the vehicle with reference to FIG. 1.

FIG. 1 is a schematic diagram of a vehicle 100 according to an embodiment of this application. The vehicle 100 may include various subsystems, such as an infotainment system 110, a perception system 120, a decision control system 130, a propulsion system 140, and a computing platform 150. Optionally, the vehicle 100 may include more or fewer subsystems, and each subsystem may include a plurality of components. In addition, each subsystem and component of the vehicle 100 may be interconnected in a wired or wireless manner.

For a vehicle, a brake system 135 is one of the most critical systems, and is directly related to comprehensive performance of the vehicle and safety of life and property of a passenger. The brake system 135 may be configured to control a speed of the vehicle 100. The brake system 135 may slow down a speed of wheels 144 by friction. In some embodiments, the brake system 135 may further have an energy regeneration braking function. In addition, the brake system 135 may alternatively control the speed of the vehicle 100 in another manner.

For the regeneration braking function, when the vehicle decelerates or brakes, a part of mechanical energy of the vehicle may be converted into electric energy by using a motor and the electric energy is stored in a battery, and a part of braking force is generated to implement deceleration or braking of the vehicle. When the vehicle accelerates again, the motor reconverts the energy stored in the battery into kinetic energy for driving of the vehicle. However, due to a braking strength limitation or other challenges, regeneration braking cannot meet requirements of all braking conditions. Therefore, a hydraulic brake system still has high application value in new energy vehicles.

Development of vehicle intelligence provides more possibilities for function development of the brake system. As shown in FIG. 1, the vehicle 100 provided in this embodiment of this application may be configured to be in a full or partial autonomous driving mode. For example, the vehicle 100 may obtain environment information around the vehicle 100 by using the perception system 120, and obtain an autonomous driving policy based on analysis of the ambient environment information, to implement full autonomous driving, or present an analysis result to a user, to implement partial autonomous driving. In some embodiments, the vehicle 100 may adjust a vehicle speed through perception of an ambient environment. The ambient environment may include other traffic participants such as another vehicle and/or a pedestrian, and may also include a road, infrastructure, or another object. In some examples, the vehicle 100 can autonomously recognize the ambient environment, and determine the vehicle speed based on information (for example, a speed, an acceleration, and a distance from the vehicle) about an object in the environment.

Improvement in computing and resource control of the vehicle provides more options for a design of a method for controlling a brake system. As shown in FIG. 1, some or all functions of the vehicle 100 provided in this embodiment of this application are controlled by the computing platform 150. The computing platform 150 may control the functions of the vehicle 100 based on inputs received from various subsystems (for example, the propulsion system 140, the perception system 120, and the decision control system 130). Especially for the brake system 135, the computing platform 150 can provide more possibilities for function development of the brake system 135. For example, the computing platform 150 may control the brake system 135 based on an input from the decision control system 130 to avoid a collision with an obstacle detected by the perception system 120.

The following describes the computing platform 150 with reference to FIG. 1.

The computing platform 150 may include at least one processor 151, and the processor 151 may execute instructions 153 stored in a non-transitory computer-readable medium like a memory 152. In some embodiments, the computing platform 150 may alternatively be a plurality of computing devices that control individual components or subsystems of the vehicle 100 in a distributed manner.

The processor 151 in the computing platform 150 shown in FIG. 1 may be any conventional processor, for example, a central processing unit (central processing unit, CPU). Alternatively, the processor 151 may further include a graphics processing unit (graphics processing unit, GPU), a field programmable gate array (field programmable gate array, FPGA), a system on chip (system on chip, SOC), an application-specific integrated circuit (application-specific integrated circuit, ASIC), or a combination thereof. Although FIG. 1 functionally illustrates a processor, a memory, and another component, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Thus, it is understood that a reference to the processor or the computer includes a reference to a set of processors or computers or memories that may or may not operate in parallel. Different from using a single processor to perform the steps described herein, some components such as a steering component and a braking component may include respective processors. The processor performs only computation related to a component-specific function. In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation. In some embodiments, the memory 152 may include the instructions 153, for example, program logic. The instructions 153 may be executed by the processor 151 to perform various functions of the vehicle 100. The memory 152 may also include additional instructions, including instructions for sending data to, receiving data from, interacting with, and/or controlling one or more of the infotainment system 110, the perception system 120, the decision control system 130, and the propulsion system 140. In some embodiments, in addition to the instructions 153, the memory 152 may further store data, for example, a road map, route information, a position, a direction, a speed, and other vehicle data of the vehicle, and other information. This information may be used by the vehicle 100 and the computing platform 150 during operation of the vehicle 100 in autonomous, semi-autonomous, and/or manual modes.

It should be noted that FIG. 1 should not be construed as a limitation on embodiments of this application. Optionally, one or more of the components may be installed separately from or associated with the vehicle 100. For example, the memory 152 may exist partially or completely separate from the vehicle 100. The foregoing components may be communicatively coupled together in a wired and/or wireless manner. Optionally, the foregoing components are merely an example. In actual application, components in the foregoing modules may be added, deleted, or re-divided based on an actual requirement. In addition, the vehicle 100 may be a passenger car, a commercial vehicle, a motorcycle, a special vehicle (for example, a fire truck, an ambulance, a mining vehicle, or a road construction vehicle), a rail vehicle, a ship, an aircraft, or the like. This is not specially limited in embodiments of this application.

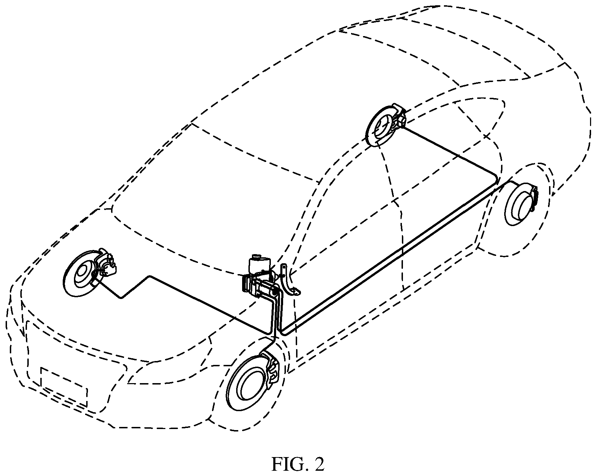

To facilitate understanding of an arrangement of a brake system in a vehicle, as shown in FIG. 2, the specification of this application further provides a schematic diagram of an arrangement of a brake system in a vehicle. In some embodiments, an arrangement of the brake system 135 in the vehicle may be shown in FIG. 2. In some embodiments, the brake system 135 may include components such as a brake pedal, a master cylinder, a booster, a brake pipe, and a brake wheel cylinder. When a driver steps the brake pedal, or when a brake signal is received, the master cylinder or booster supplies brake pressure to the brake wheel cylinder and further drives a brake actuator to brake the vehicle.

Certainly, in addition to the possible arrangement provided in FIG. 2, the brake system may also be arranged in another manner in the vehicle. For example, wheels on a rear axle can be mechanically braked. For another example, when the vehicle includes wheels of a larger quantity, for example, when the vehicle includes six wheels, the brake system may also include more brake pipes and more brake wheel cylinders. Therefore, it should be noted that FIG. 2 shows merely a possible arrangement of the brake system provided in an embodiment of this application, and should not be construed as a limitation on embodiments of this application.

Therefore, it can be understood from the above description that, the development trend of electrification, network connection, and intelligence has higher requirements on reliability and safety of the brake system of the vehicle, and also brings more possibilities for development of functions of the brake system.

With these new challenges and opportunities, the brake system provided in embodiments of this application can ensure that the vehicle can still implement a vehicle braking function by using a redundant controller when a primary brake system controller or a key solenoid valve fails. In addition, in some embodiments, requirements of braking functions such as an ABS, AEB, a TCS, and ESC of the vehicle can be met, and safety and reliability of the vehicle can be greatly improved.

The brake system provided in this application is described in detail below with reference to specific embodiments.

First, it should be noted that a name of a control valve in the brake system in the specification of this application does not represent a type of the control valve, but only represents a function of the control valve. For example, an "isolation valve", a "pressurization valve", a "depressurization valve", a "solenoid valve jointly driven by two controllers", and a "solenoid valve independently driven by a single controller" that may be used in embodiments of this application are not a limitation on a type of a related control valve. For example, a control valve for controlling connection or disconnection of a fluid inlet pipe may be referred to as a "fluid inlet valve" or a "pressurization valve"; a controller for controlling connection or disconnection of a fluid return pipe may be referred to as a "fluid outlet valve" or a "depressurization valve"; and a control valve for isolating brake subsystems of two levels may be referred to as an "isolation valve". The control valve may be a valve commonly used in an existing brake system, for example, a solenoid valve. It should be understood that a type of the control valve is not limited in this application.

In addition, it should be noted that the brake system provided in some embodiments of this application may further include a one-way valve (31v, 32v, 33v, 34v, 51v, 61v, or 202v). The one-way valve may be an independent unit, or may be implemented by selecting a control valve integrated with the one-way valve. This is not limited in this application.

In addition, it should be noted that a brake pipe in the specification of this application may be only a "fluid outlet pipe" or a "fluid inlet pipe", or the brake pipe may be a "fluid outlet pipe" and a "fluid inlet pipe". For example, in a process of depressurizing a brake wheel cylinder of a wheel of an automobile, a brake pipe in a brake system is used to deliver brake fluid in the brake wheel cylinder to a fluid storage apparatus. In this case, the brake pipe may be referred to as a "fluid outlet pipe". In a process of pressurizing the brake wheel cylinder of the wheel of the automobile, the brake pipe is used to provide the brake fluid for the wheel of the automobile, to provide a braking force for the wheel of the automobile. In this case, the brake pipe may be referred to as a "fluid inlet pipe".

Then, it should be noted that the brake system and the brake wheel cylinder provided in embodiments of this application may be connected in a plurality of forms, for example, may be connected in an X-shaped arrangement, an H-shaped arrangement, or an I-shaped arrangement. The X-shaped arrangement may be that one brake circuit is connected to a brake wheel cylinder of a front left (front left, FL) wheel and a brake wheel cylinder of a rear right (rear right, RR) wheel, and the other brake circuit is connected to a brake wheel cylinder of a front right (front right, FR) wheel and a brake wheel cylinder of a rear left (rear left, RL) wheel. The H-shaped arrangement may be that one brake circuit is connected to the brake wheel cylinder of the front left FL wheel and the brake wheel cylinder of the rear left RL wheel, and the other brake circuit is connected to the brake wheel cylinder of the front right FR wheel and the brake wheel cylinder of the rear right RR wheel. The I-shaped arrangement may be that one brake circuit is connected to the brake wheel cylinder of the front left FL wheel and the brake wheel cylinder of the front right FR wheel, and the other brake circuit is connected to the brake wheel cylinder of the rear left RL wheel and the brake wheel cylinder of the rear right RR wheel. It should be understood that although an X-shaped brake circuit is used as an example in some embodiments provided in this application, a type of the brake circuit is not limited in embodiments of this application.

In addition, it should be noted that, in some embodiments provided in this application, the specification of this application does not show a process of generating a motor control signal, and a connection relationship between a control unit and a booster drive apparatus only indicates a control relationship.

In addition, it should be noted that, in the specification of this application, a first control unit 91 is also referred to as an ECU 1 in some embodiments, a second control unit 92 is also referred to as an ECU 2 in some embodiments, and a third control unit 93 is also referred to as an ECU 3 in some embodiments.

In addition, it should be noted that, in some embodiments provided in this application, the control unit may be a controller or may be integrated into a controller, and the controller further includes at least various solenoid valve drives, motor drives, and various signal processing and control output interfaces. The controller receives measurement or detection signals of various sensors, such as an environmental condition, a driver input, and a brake system status, and controls the braking characteristics of the brake system through computing and determining.

In addition, it should be noted that, a normally open valve in the specification of this application may be understood as a control valve that is in a connected state under an initial condition of not being powered on or not acting, and the normally open valve switches from the connected state to a closed state when being powered on or acting. A normally closed valve in the specification of this application may be understood as a control valve that is in a closed state under an initial condition of not being powered on or not acting, and the normally closed valve switches from the closed state to a connected state when being powered on or acting.

Based on the foregoing description, the specification of this application describes embodiments of this application in detail with reference to FIG. 3 to FIG. 21.

### Embodiment 1

FIG. 3-a is a schematic diagram of a brake system according to Embodiment 1 of this application. The following describes a system composition, a connection relationship, an integration manner, an interface setting, a control relationship, and the like of the brake system provided in Embodiment 1 with reference to FIG. 3.

First, the system composition and connection relationship are introduced. As shown in FIG. 3, the brake system provided in Embodiment 1 of this application includes a master cylinder 1, a booster 2, first control valves (11 and 12), second control valves (21, 22, 23, and 24), third control valves (31, 32, 33, 34), fourth control valves (41, 42, 43, and 44), a first control unit 91, and a second control unit 92.

It should be noted that, the first control valves (11 and 12) described in the specification of this application may also be referred to as master cylinder isolation valves, the second control valves (21, 22, 23, and 24) may also be referred to as booster control valves in the specification of this application, the third control valves (31, 32, 33, 34) may also be referred to as pressurization valves or wheel cylinder pressurization valves, and the fourth control valves (41, 42, 43, and 44) may also be referred to as depressurization valves, wheel cylinder depressurization valves, or pressure relief valves. In some embodiments provided in this application, a fifth control valve (51) may also be referred to as a test simulation valve (test simulation valve, TSV), and a sixth control valve (61) may also be referred to as a pedal simulation valve (pedal simulation valve, PSV). It should be understood that a description of a function of a control valve should not be construed as a limitation on a type of the control valve.

Optionally, in Embodiment 1, the master cylinder 1 includes two hydraulic cavities that can output pressure outward, which are respectively denoted as a first main cavity 1i and a second main cavity 1j. The first main cavity 1i and the second main cavity 1j are connected to a wheel cylinder brake pipe through a first master cylinder isolation valve 11 and a second master cylinder isolation valve 12 respectively.

Optionally, in Embodiment 1, the brake system may further include a master cylinder pressure sensor (master cylinder pressure sensor, MCPS). As shown in FIG. 3, the master cylinder pressure sensor MCPS is connected to the second main cavity 1j of the master cylinder.

Optionally, in Embodiment 1, the brake system may further include a master cylinder push rod 1k. One end of the master cylinder push rod 1k is connected to a master cylinder piston, and the other end of the master cylinder push rod 1k is connected to a brake pedal 7. When a pedal force is received, the master cylinder push rod 1k may push the piston of the master cylinder 1 to increase oil pressure in the master cylinder 1.

Optionally, in Embodiment 1, the brake system may further include a pedal travel sensor PTS. The pedal travel sensor PTS may be configured to collect a travel signal of the brake pedal 7.

Optionally, in a possible implementation, the brake system may further include the brake pedal 7. The brake pedal 7 is connected to the master cylinder push rod of the brake system. As shown in FIG. 3-a, after stepping the brake pedal 7, a driver may obtain a target braking force based on a pedal travel signal collected by the pedal travel sensor PTS. Based on this target braking force, the brake system provides corresponding braking pressure to a brake wheel cylinder by controlling a related control valve.

Specifically, as shown in FIG. 3-a, a connection relationship between the master cylinder and the brake wheel cylinder may be described as follows: The first main cavity 1i of the master cylinder 1 is separately connected to a first wheel cylinder pressurization valve 31 and a second wheel cylinder pressurization valve 32 through the first master cylinder isolation valve 11, the first wheel cylinder pressurization valve 31 is connected to a first wheel cylinder 3a, and the second wheel cylinder pressurization valve 32 is connected to a second wheel cylinder 3b; and the second main cavity 1j of the master cylinder 1 is separately connected to a third wheel cylinder pressurization valve 33 and a fourth wheel cylinder pressurization valve 34 through the second master cylinder isolation valve 12, the third wheel cylinder pressurization valve 33 is connected to a third wheel cylinder 3c, and the fourth wheel cylinder pressurization valve 34 is connected to a fourth wheel cylinder 3d.

Optionally, in Embodiment 1, the master cylinder isolation valve 11 and the master cylinder isolation valve 12 are normally open valves.

Optionally, in Embodiment 1, the booster 2 includes a booster drive motor 201. It should be noted that, in the brake system provided in some embodiments of this application, the booster drive motor 201 may be a three-phase motor, a six-phase motor, a twelve-phase motor, or the like, for example, may be a three-phase permanent-magnet synchronous motor.

Optionally, in Embodiment 1, the booster drive motor 201 may further include a motor position sensor (motor position sensor, MPS). The motor position sensor MPS is used to obtain a motor position signal to implement motor control or improve motor control precision. Specifically, as shown in FIG. 3-a, the booster drive motor 201 is controlled by the second control unit 92.

Optionally, in Embodiment 1, the booster 2 includes a dual apply plunger (dual apply plunger, DAP) 202, and the dual apply plunger 202 includes a first booster cavity 202i and a second booster cavity 202j. The first booster cavity 202i is connected to a first booster branch 2i, and the second booster cavity 202j is connected to a second booster branch 2j. It should be noted that, the dual apply plunger 202 can make a pressurization process continuous and stable, and bring good pressurization characteristics to the brake system.

Specifically, as shown in FIG. 3-a, a connection relationship between the dual apply plunger of the booster 2 and the brake wheel cylinder may be described as follows: The first booster cavity 202i is separately connected to the first wheel cylinder pressurization valve 31 and the second wheel cylinder pressurization valve 32 through a first booster control valve 21 on the first booster branch 2i, the first wheel cylinder pressurization valve 31 is connected to the first wheel cylinder 3a, and the second wheel cylinder pressurization valve 32 is connected to the second wheel cylinder 3b. In addition, the first booster cavity 202i is separately connected to the third wheel cylinder pressurization valve 33 and the fourth wheel cylinder pressurization valve 34 through a second booster control valve 22 on the first booster branch 2i, the third wheel cylinder pressurization valve 33 is connected to the third wheel cylinder 3c, and the fourth wheel cylinder pressurization valve 34 is connected to the fourth wheel cylinder 3d. Similarly, the second booster cavity 202j is separately connected to the first wheel cylinder pressurization valve 31 and the second wheel cylinder pressurization valve 32 through a third booster control valve 23 on the second booster branch 2i, the first wheel cylinder pressurization valve 31 is connected to the first wheel cylinder 3a, and the second wheel cylinder pressurization valve 32 is connected to the second wheel cylinder 3b. In addition, the second booster cavity 202j is separately connected to the third wheel cylinder pressurization valve 33 and the fourth wheel cylinder pressurization valve 34 through a fourth booster control valve 24 on the second booster branch 2j, the third wheel cylinder pressurization valve 33 is connected to the third wheel cylinder 3c, and the fourth wheel cylinder pressurization valve 34 is connected to the fourth wheel cylinder 3d.

As shown in FIG. 3-a, in Embodiment 1, the brake system further includes a one-way valve 202v, a first end of the one-way valve 202v is connected to an interface 8e, a second end of the one-way valve 202v is connected to the first booster cavity 202i, and the one-way valve 202v is configured to allow brake fluid to flow from the interface 8e to the first booster cavity 202i through the one-way valve 202v under a specific condition.

Optionally, as shown in FIG. 3-a, in Embodiment 1, the first booster control valve 21, the second booster control valve 22, the third booster control valve 23, and the fourth booster control valve 24 are normally closed valves.

Optionally, in Embodiment 1, the brake system may further include a brake circuit pressure sensor (brake circuit pressure sensor, BCPS). In a possible implementation, as shown in FIG. 3-a, a connection point between the brake circuit pressure sensor BCPS and a brake circuit is located on a pipe between the first wheel cylinder pressurization valve 31 and the second wheel cylinder pressurization valve 32. It may be understood herein that, an access position of the brake circuit pressure sensor BCPS in the brake circuit is not limited to an access position shown in FIG. 3, and the access position of the brake circuit pressure sensor BCPS may alternatively be disposed on a pipe between the third wheel cylinder pressurization valve 33 and the fourth wheel cylinder pressurization valve 34. A specific access position is not limited in this application.

It should be noted that, in Embodiment 1, as shown in FIG. 3-a, a first end of the first wheel cylinder pressurization valve 31 is connected to a first end of the second wheel cylinder pressurization valve 32, a second end of the first wheel cylinder pressurization valve 31 is connected to the first wheel cylinder 3a, a second end of the second wheel cylinder pressurization valve 32 is connected to the second wheel cylinder 3b, a first end of the third wheel cylinder pressurization valve 33 is connected to a first end of the fourth wheel cylinder pressurization valve 34, a second end of the third wheel cylinder pressurization valve 33 is connected to the third wheel cylinder 3c, and a second end of the fourth wheel cylinder pressurization valve 34 is connected to the fourth wheel cylinder 3d. When the brake circuit pressure sensor BCPS is disposed on the pipe between the first wheel cylinder pressurization valve 31 and the second wheel cylinder pressurization valve 32, or is disposed on the pipe between the third wheel cylinder pressurization valve 33 and the fourth wheel cylinder pressurization valve 34, the brake circuit pressure sensor BCPS can obtain fluid pressure of the pipe.

Optionally, in Embodiment 1, the brake system may further include a brake fluid reservoir 5.

Optionally, in Embodiment 1, the brake system may further include a reservoir level sensor (reservoir level sensor, RLS). As shown in FIG. 3-a, the reservoir level sensor RLS may be disposed in the brake fluid reservoir 5 for detecting a fluid level of hydraulic oil in the brake fluid reservoir.

As shown in FIG. 3-a, the first main cavity 1i of the master cylinder 1 is connected to the brake fluid reservoir 5 through a first brake fluid pipe 5i, the second main cavity 2j of the master cylinder 1 is connected to the brake fluid reservoir 5 through a test simulation valve 51, the second main cavity 2j is connected to the brake fluid reservoir 5 through a second brake fluid pipe 5j, the first booster cavity 202i of the booster 2 is connected to the brake fluid apparatus 5 through a third brake fluid pipe 5k, the first booster cavity 202i of the booster 2 is connected to the brake fluid reservoir 5 through the one-way valve 202v, the one-way valve 202v is configured to allow the brake fluid to flow from the third brake fluid pipe 202k to the first booster cavity 202i through the one-way valve 202v under a specific condition, first ends of the depressurization valves (41, 42, 43, and 44) are connected to the brake fluid reservoir 5 through the third brake fluid pipe, and second ends of the depressurization valves (41, 42, 43, and 44) are connected to brake wheel cylinders (41, 42, 43, and 44) respectively.

Optionally, in Embodiment 1, the brake system may further include a pedal feeling simulator 6 and a pedal simulation valve 61.

As shown in FIG. 3-a, the pedal feeling simulator 6 is connected to the second main cavity of the master cylinder 1 through the pedal simulation valve 61. The pedal simulation valve 61 is also connected to the second main cavity of the master cylinder 1 through a one-way valve. Between the pedal feeling simulator 6 and the second main cavity, the pedal simulation valve 61 is connected in parallel to the one-way valve, and the one-way valve 61v is configured to allow the brake fluid to flow from the pedal feeling simulator 6 to the master cylinder 1 through the one-way valve 61v. In a possible implementation, the pedal simulation valve 61 and the one-way valve are integrated, and may be directly selected.

Optionally, as shown in FIG. 3-a, both ends of the wheel cylinder pressurization valves (31, 32, 33, 34) may be connected in parallel to one-way valves (31v, 32v, 33v, and 34v), and each of the one-way valves (31v, 32v, 33v, and 34v) that are connected in parallel to the wheel cylinder pressurization valves (31, 32, 33, 34) is configured to allow the brake fluid to flow from the brake wheel cylinder to the brake circuit through the one-way valve. In a possible implementation, the one-way valves (31v, 32v, 33v, and 34v) that are connected in parallel to both ends of the wheel cylinder pressurization valves (31, 32, 33, 34) may be integrated with the wheel cylinder pressurization valves (31, 32, 33, 34). During actual implementation, wheel cylinder pressurization valves (31, 32, 33, 34) with an integrated one-way valve function can be directly selected, so that a composition of the brake system is simpler.

Optionally, as shown in FIG. 3-a, both ends of the test simulation valve 51 may be connected in parallel to a one-way valve 51v, and the one-way valve 51v connected in parallel to both ends of the test simulation valve 51 is configured to allow the brake fluid to flow from the brake fluid reservoir 5 to the master cylinder 1 through the one-way valve 51v. In a possible implementation, the one-way valve 51v connected in parallel to both ends of the test simulation valve 51 may be integrated with the test simulation valve 51, and may be directly selected.

Optionally, as shown in FIG. 3-a, both ends of the pedal simulation valve 61 may be connected in parallel to the one-way valve 61v, and the one-way valve 61v connected in parallel to both ends of the pedal simulation valve 61 is configured to allow the brake fluid to flow from the pedal feeling simulator to the master cylinder 1 through the one-way valve 61v.

Optionally, as shown in FIG. 3-a, the booster 2 is connected to the brake fluid reservoir 5 through the one-way valve 202v, and the one-way valve 202v is configured to allow the brake fluid to flow from the brake fluid reservoir 5 to the booster 2 through the one-way valve 202v under a specific condition.

It should be noted that there may be leakage in the master cylinder 1 or booster 2, and a solenoid valve may be stuck or have other faults. Therefore, when the above situation occurs, the fluid can be replenished through the one-way valve. For example, the brake fluid in the brake fluid reservoir 5 may enter the master cylinder 1 through the one-way valve 5 1v; or the brake fluid may enter the booster 2 through the one-way valve 202v.

It should be noted that the interface described in this embodiment of this application may be a fluid inlet, or may be a fluid outlet, or may include a fluid inlet and a fluid outlet.

Optionally, in Embodiment 1, as shown in FIG. 3, the brake system may further include a filter. The filter can filter impurities in a hydraulic circuit. The filter can be installed separately in the brake system, or a control valve with a filter, a brake fluid reservoir with a filter, and the like may be selected to filter impurities.

The foregoing describes the system composition and connection relationship of the brake system provided in Embodiment 1. The following describes an integration manner and an interface setting of the brake system provided in Embodiment 1 with reference to FIG. 3-a.

As shown in FIG. 3-a, the brake system provided in Embodiment 1 of this application includes two subsystems.
(1) A first subsystem includes the first control unit 91, the master cylinder 1, the brake fluid reservoir 5, the pedal feeling simulator 6, the first master cylinder isolation valve 11, the second master cylinder isolation valve 12, the test simulation valve 51, the pedal simulation valve 61, the pedal travel sensor PTS, the master cylinder pressure sensor MCPS, the reservoir level sensor RLS, and the master cylinder push rod 1k.

As shown in FIG. 3-a, the first subsystem further includes interfaces (8E, 8F, and 8G).

When the test simulation valve 51 and the pedal simulation valve 61 in the first subsystem do not include a one-way valve, the first subsystem further includes a fifth one-way valve 51v and a sixth one-way valve 61v.

The first subsystem can also be integrated with a filter, or a control valve with a filter or the brake fluid reservoir 5 with a filter is selected to implement an impurity filtering function.

It should be noted that the first subsystem may include the master cylinder push rod 1k, but does not include the brake pedal 7. The first subsystem can be used with different types of brake pedals 7 to adapt to more types of vehicles and provide more possibilities for personalization.

(2) A second subsystem includes the second control unit 92, the booster drive motor 201, the dual apply plunger 202, the booster one-way valve 202v, the first booster control valve 21, the second booster control valve 22, the third booster control valve 23, the fourth booster control valve 24, the first wheel cylinder pressurization valve 31, the second wheel cylinder pressurization valve 32, the third wheel cylinder pressurization valve 33, the fourth wheel cylinder pressurization valve 34, the first wheel cylinder depressurization valve 41, the second wheel cylinder depressurization valve 42, the third wheel cylinder depressurization valve 43, the fourth wheel cylinder depressurization valve 44, and the brake circuit pressure sensor BCPS.

When the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

As shown in FIG. 3-a, the second subsystem includes a first interface, second interfaces (8f and 8g), and a third interface (8e). The first interface is separately connected to the brake wheel cylinders (3a, 3b, 3c, and 3d) of wheels, the second interfaces (8f and 8g) are connected to the master cylinder 1, and the third interface (8e) is connected to the brake fluid reservoir 5.

In Embodiment 1, as shown in FIG. 3-a, the second subsystem is connected to the interface 8E, the interface 8F, and the interface 8G of the first subsystem through the interface 8e, the interface 8f, and the interface 8g respectively, and the first subsystem and the second subsystem form the brake system.

Specifically, the following describes a connection relationship of interfaces of the brake system provided in Embodiment 1 of this application with reference to FIG. 3-a.

It should be noted that the second subsystem does not include the brake wheel cylinders (3a, 3b, 3c, and 3d), but has at least one wheel cylinder interface, for example, the first interface in Embodiment 1. At least one first interface is connected to at least one brake wheel cylinder (3a, 3b, 3c, and 3d), and can supply brake pressure to the wheel cylinder.

As shown in FIG. 3-a, a connection relationship between the master cylinder 1 and the brake wheel cylinders (3a, 3b, 3c, and 3d) may be described as follows: The first main cavity 1i of the master cylinder 1 is connected to the interface 8F through the first master cylinder isolation valve 11, and is separately connected to the first wheel cylinder pressurization valve 31 and the second wheel cylinder pressurization valve 32 through the interface 8f. The first wheel cylinder pressurization valve 31 is connected to the interface 4a, and is connected to the first wheel cylinder 3a through the interface 4a. The second wheel cylinder pressurization valve 32 is connected to the interface 4b, and is connected to the second wheel cylinder 3b through the interface 4b. The second main cavity 1j of the master cylinder 1 is connected to the interface 8G through the second master cylinder isolation valve 12, and is separately connected to the third wheel cylinder pressurization valve 33 and the fourth wheel cylinder pressurization valve 34 through the interface 8g. The third wheel cylinder pressurization valve 33 is connected to the interface 4c, and is connected to the third wheel cylinder 3c through the interface 4c. The fourth wheel cylinder pressurization valve 34 is connected to the interface 4d, and is connected to the fourth wheel cylinder 3d through the interface 4d.

As shown in FIG. 3-a, the first booster cavity 202i of the booster 2 is connected to the interface 8e through the one-way valve 202v, and is connected to the brake fluid reservoir 5 through the interface 8E and the third brake fluid pipe 5k. The one-way valve 202v is configured to allow the brake fluid to flow from a booster brake fluid pipe 202k to the first booster cavity 202i through the one-way valve 202v under a specific condition.

It should be noted that, in FIG. 3-a, a connection line between the second booster cavity 202j of the dual apply plunger 202 and the brake fluid reservoir 5 only indicates that fast depressurization can be implemented when a piston of the dual apply plunger returns to the leftmost, and does not indicate that the pipe is used for fluid replenishment. Similarly, this description is also applicable to other embodiments provided in the specification of this application.

As shown in FIG. 3-a, first ends of the wheel cylinder depressurization valves (41, 42, 43, and 44) are connected to the interface 8e, and are connected to the brake fluid reservoir 5 through the interface 8E and the third brake fluid pipe 5k; and second ends of the wheel cylinder depressurization valves (41, 42, 43, and 44) are separately connected to the first interface, and the first interface is separately connected to the brake wheel cylinders (41, 42, 43, and 44).

The foregoing describes the system composition, connection relationship, integration manner, and interface setting of the brake system provided in Embodiment 1. The following describes a control relationship of the brake system provided in Embodiment 1. In Embodiment 1, objects controlled by each of the first control unit 91 and the second control unit 92 are as follows:
(1) Objects controlled by the first control unit 91 include the first master cylinder isolation valve 11, the second master cylinder isolation valve 12, the test simulation valve 51, and the pedal simulation valve 61.

The first control unit 91 also receives signals of the master cylinder pressure sensor MCPS and the pedal travel sensor PTS.

(2) Objects controlled by the second control unit 92 include the booster drive motor 201, the first booster control valve 21, the second booster control valve 22, the third booster control valve 23, the fourth booster control valve 24, the first wheel cylinder pressurization valve 31, the second wheel cylinder pressurization valve 32, the third wheel cylinder pressurization valve 33, the fourth wheel cylinder pressurization valve 34, the first wheel cylinder depressurization valve 41, the second wheel cylinder depressurization valve 42, the third wheel cylinder depressurization valve 43, and the fourth wheel cylinder depressurization valve 44.

The second control unit 92 also receives signals of the brake circuit pressure sensor BCPS and the motor position sensor MPS.

Optionally, in Embodiment 1, the first control unit 91 and the second control unit 92 may be integrated into a same controller, or may be independent of each other.

In a possible implementation, a controller of the brake system includes the first control unit 91 and the second control unit 92, and the controller further includes at least various solenoid valve drives, motor drives, and various signal processing and control output interfaces. The controller receives measurement or detection signals of various sensors, such as an environmental condition, a driver input, and a brake system status, and controls the braking characteristics of the brake system through computing and determining.

In another possible implementation, the brake system includes a first controller and a second controller. The first controller includes the first control unit 91, the second controller includes the second control unit 92, and the first controller and the second controller further include at least various solenoid valve drives and various signal processing and control output interfaces. The second controller further includes a signal processing and control output interface related to a motor drive. The controller may further receive measurement or detection signals of various sensors, such as an environmental condition, a driver input, and a brake system status, and controls the braking characteristics of the brake system through computing and determining.

The foregoing describes the system composition, connection relationship, integration manner, interface setting, and control relationship of the brake system provided in Embodiment 1 with reference to FIG. 3-a. The following describes a working mode of the brake system provided in Embodiment 1 with reference to FIG. 3-b.

As shown in FIG. 3-b, when the driver steps the brake pedal 7, the first control unit 91 of the first subsystem controls the first master cylinder isolation valve 11 and the second master cylinder isolation valve 12 to be energized and closed, and the first control unit 91 controls the pedal simulation valve 61 to be energized and opened. The brake pedal 7 pushes the fluid in the master cylinder 1 to flow into the pedal feeling simulator 6 through the pedal simulation valve 61. The first control unit 91 collects a signal of the brake pedal travel sensor PTS, a signal of the master cylinder pressure sensor MCPS, and a signal of the reservoir level sensor RLS of the brake fluid reservoir 5, and transmits the signals to the second control unit through a communication line.

As shown in FIG. 3-b, the second control unit 92 determines a braking intention of the driver based on the signal of the pedal travel sensor PTS and the signal of the master cylinder pressure sensor MCPS transmitted by the first control unit 91.

When a brake requirement is recognized, a conventional pressure build-up process of the brake system provided in Embodiment 1 may be described as follows: The second control unit 92 controls the booster drive motor 201 to push the piston of the dual apply plunger 202 to move rightward, and the second control unit 92 controls the first booster control valve 21, the second booster control valve 22, the third booster control valve 23, and the fourth booster control valve 24 to be opened. One part of the fluid in the first booster cavity 202i passes through the first booster control valve 21 and the second booster control valve 22, and flows into the brake wheel cylinders (3a, 3b, 3c, and 3d) through the wheel cylinder pressurization valves (31, 32, 33, 34) respectively, to implement wheel braking; and the other part of the fluid flows into the second booster cavity 202j of the dual apply plunger 202 through the third booster control valve 23 and the fourth booster control valve 24.

Further, the second control unit 92 determines a position of the piston of the dual apply plunger 202 based on the signal of the motor position sensor MPS. If the position of the piston reaches a rightmost side of the dual apply plunger 202, and the brake wheel cylinder still needs to be pressurized, the second control unit 92 controls the first booster control valve 21 and the second booster control valve 22 to be in a closed state, and controls the booster drive motor 201 to reverse. The piston of the dual apply plunger moves leftward, and the brake fluid in the second booster cavity 202j flows into the brake wheel cylinder through the third booster control valve 23, the fourth booster control valve, and the wheel cylinder pressurization valves (31, 32, 33, 34), to implement wheel pressurization. When the position of the piston reaches a leftmost side of the dual apply plunger 202 and the system still has a pressurization requirement, the principle is similar to the above, and details are not described herein again. It should be noted that, the dual apply plunger 202 can make a pressurization process continuous and stable, and bring good pressurization characteristics to the brake system.

When brake pressure of a wheel cylinder is large, a conventional depressurization process of the brake system provided in Embodiment 1 may be described as follows: For example, when pressure of the brake wheel cylinder 3a is large, the wheel cylinder pressurization valve 31 corresponding to the brake wheel cylinder 3a is closed, and the corresponding wheel cylinder depressurization valve 41 is opened, so that the brake fluid in the wheel cylinder flows into the brake fluid reservoir 5 through the wheel cylinder depressurization valve 41, to implement depressurization.

In addition, when both the first control unit 91 and the second control unit 92 fail, the brake system provided in Embodiment 1 can perform mechanical backup. When the driver steps the brake pedal, the brake fluid may flow from the master cylinder 1 to the brake wheel cylinders (4a, 4b, 4c, and 4d) through the first master cylinder isolation valve 11 and the second master cylinder isolation valve 12, to implement braking. It should be noted that all brake systems according to this embodiment of this application can implement the mechanical backup function.

The brake system provided in Embodiment 1 uses a split design, which can greatly improve NVH (noise, vibration, harshness, NVH) characteristics, improve driving and riding experience, and facilitate a vehicle arrangement.

### Embodiment 2

FIG. 4 is a schematic diagram of another brake system according to Embodiment 2 of this application. As shown in FIG. 4, the brake system provided in Embodiment 2 is similar to the brake system provided in Embodiment 1. The following describes a difference of the brake system provided in Embodiment 2. For other content, refer to the description of the brake system in Embodiment 1. Details are not described herein again.

As shown in FIG. 4, the brake system provided in Embodiment 2 includes a first subsystem and a second subsystem.
(1) The first subsystem includes a first control unit 91, a master cylinder 1, a first brake fluid reservoir 5a, a pedal feeling simulator 6, a first master cylinder isolation valve 11, a second master cylinder isolation valve 12, a test simulation valve 51, a pedal simulation valve 61, a pedal travel sensor PTS, a master cylinder pressure sensor MCPS, a reservoir level sensor RLS, and a master cylinder push rod 1k.

As shown in FIG. 4, the first subsystem further includes interfaces (8F and 8G).

When the test simulation valve 51 and the pedal simulation valve 61 in the first subsystem do not include a one-way valve, the first subsystem further includes a fifth one-way valve 51v and a sixth one-way valve 61v.

The first subsystem can also be integrated with a filter, or a control valve with a filter or a brake fluid reservoir 5 with a filter is selected to implement an impurity filtering function.

(2) The second subsystem includes a second control unit 92, a second brake fluid reservoir 5b, a booster drive motor 201, a dual apply plunger 202, a first booster control valve 21, a second booster control valve 22, a third booster control valve 23, a fourth booster control valve 24, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, a brake circuit pressure sensor BCPS, and a booster one-way valve 202v.

When the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

As shown in FIG. 4, the second subsystem includes a first interface and second interfaces (8f and 8g). The first interface is separately connected to brake wheel cylinders (3a, 3b, 3c, and 3d) of wheels, and the second interfaces (8f and 8g) are connected to the master cylinder 1.

In Embodiment 2, as shown in FIG. 4, the second subsystem is connected to the interface 8F and the interface 8G of the first subsystem through the interface 8f and the interface 8g respectively, and the first subsystem and the second subsystem form the brake system.

Different from the brake system provided in Embodiment 1, the brake system provided in Embodiment 2 further includes the second brake fluid reservoir 5b. As shown in FIG. 4, a first booster cavity 202i of a booster 2 is connected to the second brake fluid reservoir 5b through the one-way valve 202v. The one-way valve 202v is configured to allow brake fluid to flow from a booster brake fluid pipe 202k to the first booster cavity 202i through the one-way valve 202v under a specific condition. A second booster cavity 202j of the booster 2 is connected to the second brake fluid reservoir 5b.

As shown in FIG. 4, first ends of the wheel cylinder depressurization valves (41, 42, 43, and 44) are connected to the second brake fluid reservoir 5b, and are connected to the second brake fluid reservoir 5b through an interface 8E and a third brake fluid pipe 5k; and second ends of the wheel cylinder depressurization valves (41, 42, 43, and 44) are separately connected to the first interface, and the first interface is separately connected to the brake wheel cylinders (41, 42, 43, and 44).

It should be noted that, in the brake system provided in Embodiment 2, the first brake fluid reservoir 5a and the second brake fluid reservoir 5b may be connected through a pipe, or may be independent of each other.

Compared with the brake system provided in Embodiment 1, the brake system provided in Embodiment 2 provides more redundancy by adding the second brake fluid reservoir 5b to the second subsystem, and reduces interfaces between the first subsystem and the second subsystem, with a simpler connection relationship and higher reliability.

For features that are of the brake system provided in Embodiment 2 and that are not described herein, refer to related descriptions in the brake system provided in Embodiment 1.

### Embodiment 3

FIG. 5 is a schematic diagram of another brake system according to Embodiment 3 of this application. As shown in FIG. 5, the brake system provided in Embodiment 3 is very similar to the brake system provided in Embodiment 1. The following describes a difference of the brake system provided in Embodiment 3. For other content, refer to the description of the brake system in Embodiment 1. Details are not described herein again.

As shown in FIG. 5, the brake system provided in Embodiment 3 includes a first subsystem and a second subsystem.
(1) The first subsystem includes a first control unit 91, a master cylinder 1, a brake fluid reservoir 5, a pedal feeling simulator 6, a first master cylinder isolation valve 11, a second master cylinder isolation valve 12, a test simulation valve 51, a pedal simulation valve 61, a pedal travel sensor PTS, a master cylinder pressure sensor MCPS, a reservoir level sensor RLS, and a master cylinder push rod 1k.

As shown in FIG. 5, the first subsystem further includes interfaces (8E, 8F, and 8G).

When the test simulation valve 51 and the pedal simulation valve 61 in the first subsystem do not include a one-way valve, the first subsystem further includes a fifth one-way valve 51v and a sixth one-way valve 61v.

The first subsystem can also be integrated with a filter, or a control valve with a filter or the brake fluid reservoir 5 with a filter is selected to implement an impurity filtering function.

(2) The second subsystem includes a second control unit 92, a booster drive motor 201, a one-way apply plunger 202, a booster one-way valve 202v, a first booster control valve 21, a second booster control valve 22, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

As shown in FIG. 5, the second subsystem includes a first interface, second interfaces (8f and 8g), and a third interface (8e). The first interface is separately connected to brake wheel cylinders (3a, 3b, 3c, and 3d) of wheels, the second interfaces (8f and 8g) are connected to the master cylinder 1, and the third interface (8e) is connected to the brake fluid reservoir 5.

In Embodiment 3, as shown in FIG. 5, the second subsystem is connected to the interface 8E, the interface 8F, and the interface 8G of the first subsystem through the interface 8e, the interface 8f, and the interface 8g respectively, and the first subsystem and the second subsystem form the brake system.

Specifically, the following describes a connection relationship of the brake system provided in Embodiment 3 of this application with reference to FIG. 5.

As shown in FIG. 5, compared with that in the brake system provided in Embodiment 1, in the brake system provided in Embodiment 3, the second subsystem uses the one-way apply plunger 202, and removes a third booster control valve 23 and a fourth booster control valve 24.

In the brake system provided in Embodiment 3, a connection relationship between the one-way apply plunger 202 of the booster 2 in the second subsystem and a brake wheel cylinder may be described as follows: The one-way apply plunger 202 is separately connected to the first wheel cylinder pressurization valve 31 and the second wheel cylinder pressurization valve 32 through the first booster control valve 21 on a first booster branch. The first wheel cylinder pressurization valve 31 is connected to an interface 4a, and is connected to a first wheel cylinder 3a through the interface 4a. The second wheel cylinder pressurization valve 32 is connected to an interface 4b, and is connected to a second wheel cylinder 3b through the interface 4b. In addition, the one-way apply plunger 202 is separately connected to the third wheel cylinder pressurization valve 33 and the fourth wheel cylinder pressurization valve 34 through the second booster control valve 22 on the first booster branch. The third wheel cylinder pressurization valve 33 is connected to an interface 4c, and is connected to a third wheel cylinder 3c through the interface 4c. The fourth wheel cylinder pressurization valve 34 is connected to an interface 4d, and is connected to a fourth wheel cylinder 3d through the interface 4d.

In the second subsystem, the brake circuit pressure sensor BCPS is disposed between the one-way apply plunger 202 and the first booster control valve 21, or between the one-way apply plunger 202 and the second booster control valve 22.

In addition, the one-way apply plunger 202 of the booster 2 is connected to the interface 8e through the one-way valve 202v, and is connected to the brake fluid reservoir 5 through the interface 8E and a third brake fluid pipe 5k. The one-way valve 202v is configured to allow brake fluid to flow from a booster brake fluid pipe 202k to the one-way apply plunger 202 through the one-way valve 202v under a specific condition.

As shown in FIG. 5, in the brake system provided in Embodiment 3, when a piston of the booster 2 reaches a rightmost side and the system still needs to be pressurized, the first booster control valve 21 and the second booster control valve 22 need to be closed, and the booster drive motor 201 moves the piston to a leftmost side and then performs a pressurization action.

As shown in FIG. 5, compared with the brake system provided in Embodiment 1, the brake system provided in Embodiment 3 uses the one-way apply plunger 202, and removes a third booster control valve and a fourth booster control valve, with a simpler structure and lower costs. For features that are of the brake system provided in Embodiment 3 and that are not described herein, refer to related descriptions in the brake system provided in Embodiment 1.

### Embodiment 4

FIG. 6-a is a schematic diagram of another brake system according to Embodiment 4 of this application. As shown in FIG. 6-a, the brake system provided in Embodiment 4 is similar to the brake system provided in Embodiment 1. The following describes a difference of the brake system provided in Embodiment 4. For other content, refer to the description of the brake system in Embodiment 1. Details are not described herein again.

As shown in FIG. 6-a, the brake system provided in Embodiment 4 includes a first subsystem and a second subsystem.
(1) The first subsystem includes a first control unit 91, a master cylinder 1, a brake fluid reservoir 5, a pedal feeling simulator 6, a pedal travel sensor PTS, a reservoir level sensor RLS, and a master cylinder push rod 1k.

As shown in FIG. 6-a, the first subsystem further includes interfaces (8F, 8G, 8H, 8I, and 8J).

The first subsystem can also be integrated with a filter, or a control valve with a filter or the brake fluid reservoir 5 with a filter is selected to implement an impurity filtering function.

(2) The second subsystem includes a second control unit 92, a first master cylinder isolation valve 11, a second master cylinder isolation valve 12, a pedal simulation valve 61, a test simulation valve 51, a master cylinder pressure sensor MCPS, a booster drive motor 201, a dual apply plunger 202, a booster one-way valve 202v, a first booster control valve 21, a second booster control valve 22, a third booster control valve 23, a fourth booster control valve 24, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the test simulation valve 51, the pedal simulation valve 61, the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a fifth one-way valve 51v, a sixth one-way valve 61v, a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

As shown in FIG. 6-a, the second subsystem includes a first interface, second interfaces (8f and 8g), and fourth interfaces (8h, 8i, and 8j). The first interface is separately connected to brake wheel cylinders (3a, 3b, 3c, and 3d) of wheels, the second interfaces (8f and 8g) are connected to the master cylinder 1, and the third interfaces (8h, 8i, and 8j) are connected to the brake fluid reservoir 5 or the pedal feeling simulator 6.

In Embodiment 4, as shown in FIG. 6-a, the second subsystem is connected to the interface 8F, the interface 8G, the interface 8H, the interface 8I, and the interface 8J of the first subsystem through the interface 8f, the interface 8g, the interface 8h, the interface 8i, and the interface 8j respectively, and the first subsystem and the second subsystem form the brake system.

FIG. 6-b shows a working status of the brake system according to Embodiment 4. As shown in FIG. 6-b, a working principle of the brake system provided in Embodiment 4 is the same as that of the brake system provided in Embodiment 1. A difference from the brake system provided in Embodiment 1 lies in that, in the brake system provided in Embodiment 4, the second subsystem further includes the master cylinder pressure sensor MCPS, the pedal simulation valve 61, and the test simulation valve 51. The second control unit 92 directly receives a signal of the master cylinder pressure sensor MCPS. The second control unit 92 may further control the pedal simulation valve 61 and the test simulation valve 51. In the brake system provided in Embodiment 4, the first control unit 91 in the first subsystem detects a signal of the pedal travel sensor PTS and sends the signal to the second control unit 92 in the second subsystem. Further, the first control unit 91 may collect a signal of the reservoir level sensor RLS and send the signal to the second control unit 92.

Compared with that in the brake system provided in Embodiment 1, in the brake system provided in Embodiment 4, the first subsystem has a smaller volume, a simpler structure, and a more flexible arrangement.

### Embodiment 5

FIG. 7 is a schematic diagram of another brake system according to Embodiment 5 of this application. As shown in FIG. 7, the brake system provided in Embodiment 5 is similar to the brake system provided in Embodiment 1. The following describes a difference of the brake system provided in Embodiment 5. For other content, refer to the description of the brake system in Embodiment 1. Details are not described herein again.

As shown in FIG. 7, the brake system provided in Embodiment 5 includes a first subsystem and a second subsystem.
(1) The first subsystem includes a first control unit 91, a master cylinder 1, a brake fluid reservoir 5, a pedal feeling simulator 6, a pedal travel sensor PTS, a reservoir level sensor RLS, and a master cylinder push rod 1k.

As shown in FIG. 6-a, the first subsystem further includes interfaces (8F, 8G, 8H, 8I, and 8J).

The first subsystem can also be integrated with a filter, or a control valve with a filter or the brake fluid reservoir 5 with a filter is selected to implement an impurity filtering function.

(2) The second subsystem includes a second control unit 92, a first master cylinder isolation valve 11, a second master cylinder isolation valve 12, a pedal simulation valve 61, a test simulation valve 51, a master cylinder pressure sensor MCPS, a booster drive motor 201, a one-way apply plunger 202, a booster one-way valve 202v, a first booster control valve 21, a second booster control valve 22, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the test simulation valve 51, the pedal simulation valve 61, the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a fifth one-way valve 51v, a sixth one-way valve 61v, a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

In the brake system provided in Embodiment 5, the brake circuit pressure sensor BCPS is disposed between a booster 2 and the first booster control valve 21, or between a booster 2 and the second booster control valve 22.

Compared with the brake system provided in Embodiment 4, the brake system provided in Embodiment 5 uses the one-way apply plunger 202, and removes a third booster control valve 23 and a fourth booster control valve 24, with a simpler structure and lower costs. For features that are of the brake system provided in Embodiment 5 and that are not described herein, refer to related descriptions in the brake system provided in Embodiment 1 or Embodiment 4.

### Embodiment 6

FIG. 8 is a schematic diagram of another brake system according to Embodiment 6 of this application. As shown in FIG. 8, the brake system provided in Embodiment 6 is similar to the brake system provided in Embodiment 1. The following describes a difference of the brake system provided in Embodiment 6. For other content, refer to the description of the brake system in Embodiment 1. Details are not described herein again.

As shown in FIG. 8, the brake system provided in Embodiment 6 includes a first subsystem and a second subsystem.
(1) The first subsystem includes a first control unit 91, a master cylinder 1, a brake fluid reservoir 5, a pedal travel sensor PTS, a reservoir level sensor RLS, and a master cylinder push rod 1k.

As shown in FIG. 6-a, the first subsystem further includes interfaces (8F, 8G, 8I, and 8J).

The first subsystem can also be integrated with a filter, or the brake fluid reservoir 5 with a filter is selected to implement an impurity filtering function.

(2) The second subsystem includes a second control unit 92, a first master cylinder isolation valve 11, a second master cylinder isolation valve 12, a pedal feeling simulator 6, a pedal simulation valve 61, a test simulation valve 51, a master cylinder pressure sensor MCPS, a booster drive motor 201, a dual apply plunger 202, a booster one-way valve 202v, a first booster control valve 21, a second booster control valve 22, a third booster control valve 23, a fourth booster control valve 24, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the test simulation valve 51, the pedal simulation valve 61, the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a fifth one-way valve 51v, a sixth one-way valve 61v, a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

As shown in FIG. 8, the second subsystem includes a first interface, second interfaces (8f and 8g), and fourth interfaces (8i and 8j). The first interface is separately connected to brake wheel cylinders (3a, 3b, 3c, and 3d) of wheels, the second interfaces (8f and 8g) are connected to the master cylinder 1, and the third interfaces (8i and 8j) are connected to the brake fluid reservoir 5 or the master cylinder 1.

In Embodiment 6, as shown in FIG. 8, the second subsystem is connected to the interface 8F, the interface 8G, the interface 8I, and the interface 8J of the first subsystem through the interface 8f, the interface 8g, the interface 8i, and the interface 8j respectively, and the first subsystem and the second subsystem form the brake system.

A working principle of the brake system provided in Embodiment 6 is the same as that of the brake system provided in Embodiment 1. A difference from the brake system provided in Embodiment 1 lies in that, in the brake system provided in Embodiment 6, the second subsystem further includes the master cylinder pressure sensor MCPS, the pedal feeling simulator 6, the pedal simulation valve 61, and the test simulation valve 51. The second control unit 92 directly receives a signal of the master cylinder pressure sensor MCPS. The second control unit 92 may further control the pedal simulation valve 61 and the test simulation valve 51. In the brake system provided in Embodiment 6, the first control unit 91 in the first subsystem detects a signal of the pedal travel sensor PTS and sends the signal to the second control unit 92 in the second subsystem. Further, the first control unit 91 may collect a signal of the reservoir level sensor RLS and send the signal to the second control unit 92.

Compared with that in the brake system provided in Embodiment 1, in the brake system provided in Embodiment 6, the first subsystem has a smaller volume, a simpler structure, and a more flexible arrangement. In addition, compared with the brake system provided in Embodiment 4, the brake system provided in Embodiment 6 has fewer interfaces and a simpler connection relationship.

### Embodiment 7

FIG. 9 is a schematic diagram of another brake system according to Embodiment 7 of this application. As shown in FIG. 9, the brake system provided in Embodiment 7 is similar to the brake system provided in Embodiment 1. The following describes a difference of the brake system provided in Embodiment 7. For other content, refer to the description of the brake system in Embodiment 1. Details are not described herein again.

As shown in FIG. 9, the brake system provided in Embodiment 7 includes a first subsystem and a second subsystem.
(1) The first subsystem includes a first control unit 91, a master cylinder 1, a brake fluid reservoir 5, a pedal travel sensor PTS, a reservoir level sensor RLS, and a master cylinder push rod 1k.

As shown in FIG. 6-a, the first subsystem further includes interfaces (8F, 8G, 81, and 8J).

The first subsystem can also be integrated with a filter, or a control valve with a filter or the brake fluid reservoir 5 with a filter is selected to implement an impurity filtering function.

(2) The second subsystem includes a second control unit 92, a first master cylinder isolation valve 11, a second master cylinder isolation valve 12, a pedal feeling simulator 6, a pedal simulation valve 61, a test simulation valve 51, a master cylinder pressure sensor MCPS, a booster drive motor 201, a one-way apply plunger 202, a booster one-way valve 202v, a first booster control valve 21, a second booster control valve 22, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the test simulation valve 51, the pedal simulation valve 61, the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a fifth one-way valve 51v, a sixth one-way valve 61v, a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

In the brake system provided in Embodiment 7, the brake circuit pressure sensor BCPS is disposed between a booster 2 and the first booster control valve 21, or between a booster 2 and the second booster control valve 22.

Compared with those in the brake system provided in Embodiment 1, in the brake system provided in Embodiment 7, the first subsystem has a smaller volume, a simpler structure, and a more flexible arrangement; and the second subsystem uses the one-way apply plunger 202, and removes a third booster control valve 23 and a fourth booster control valve 24, with a simpler structure and lower costs. For features that are of the brake system provided in Embodiment 7 and that are not described herein, refer to related descriptions in the brake system provided in Embodiment 1 or Embodiment 5.

### Embodiment 8

FIG. 10 is a schematic diagram of another brake system according to Embodiment 8 of this application. As shown in FIG. 10, the brake system provided in Embodiment 8 is similar to the brake system provided in Embodiment 1. The following describes a difference of the brake system provided in Embodiment 8. For other content, refer to the description of the brake system in Embodiment 1. Details are not described herein again.

As shown in FIG. 10, the brake system provided in Embodiment 8 includes a first subsystem and a second subsystem.
(1) The first subsystem includes a first control unit 91, a master cylinder 1, a brake fluid reservoir 5, a pedal feeling simulator 6, a test simulation valve 51, a pedal simulation valve 61, a pedal travel sensor PTS, a master cylinder pressure sensor MCPS, a reservoir level sensor RLS, and a master cylinder push rod 1k.

As shown in FIG. 10, the first subsystem further includes interfaces (8E, 8F, and 8G).

When the test simulation valve 51 and the pedal simulation valve 61 in the first subsystem do not include a one-way valve, the first subsystem further includes a fifth one-way valve 51v and a sixth one-way valve 61v.

The first subsystem can also be integrated with a filter, or a control valve with a filter or the brake fluid reservoir 5 with a filter is selected to implement an impurity filtering function.

It should be noted that the first subsystem may include the master cylinder push rod 1k, but does not include a brake pedal 7. The first subsystem can be used with different types of brake pedals 7 to adapt to more types of vehicles and provide more possibilities for personalization.

(2) The second subsystem includes a second control unit 92, a first master cylinder isolation valve 11, a second master cylinder isolation valve 12, a booster drive motor 201, a dual apply plunger 202, a booster one-way valve 202v, a first booster control valve 21, a second booster control valve 22, a third booster control valve 23, a fourth booster control valve 24, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

As shown in FIG. 10, the second subsystem includes a first interface, second interfaces (8f and 8g), and a third interface (8e). The first interface is separately connected to brake wheel cylinders (3a, 3b, 3c, and 3d) of wheels, the second interfaces (8f and 8g) are connected to the master cylinder 1, and the third interface (8e) is connected to the brake fluid reservoir 5.

In Embodiment 8, as shown in FIG. 10, the second subsystem is connected to the interface 8E, the interface 8F, and the interface 8G of the first subsystem through the interface 8e, the interface 8f, and the interface 8g respectively, and the first subsystem and the second subsystem form the brake system.

Specifically, the following describes a connection relationship of interfaces of the brake system provided in Embodiment 8 of this application with reference to FIG. 10.

It should be noted that the second subsystem does not include the brake wheel cylinders (3a, 3b, 3c, and 3d), but has at least one wheel cylinder interface, for example, the first interface in Embodiment 1. At least one first interface is connected to at least one brake wheel cylinder (3a, 3b, 3c, and 3d), and can supply brake pressure to the wheel cylinder.

Compared with those in the brake system provided in Embodiment 1, in the brake system provided in Embodiment 8, the first master cylinder isolation valve 11 and the second master cylinder isolation valve 12 are integrated into the second subsystem, the first master cylinder isolation valve 11 is connected to the master cylinder 1 through the interface 8f in the second subsystem and the interface 8F in the first subsystem, and the second master cylinder isolation valve 12 is connected to the master cylinder 1 through the interface 8g in the first subsystem and the interface 8G in the second subsystem.

For descriptions of a principle and other features of the brake system provided in Embodiment 8, refer to the brake system provided in Embodiment 1.

### Embodiment 9

FIG. 11 is a schematic diagram of another brake system according to Embodiment 9 of this application. Compared with the brake system provided in Embodiment 8, the brake system provided in Embodiment 9 uses a one-way booster. For a change of a pipe and a connection relationship of the brake system, refer to descriptions in other embodiments. Details are not described herein again.

FIG. 12 shows an architecture of a brake system according to this application. Brake systems provided in Embodiment 10 to Embodiment 27 of this application may be derived from the architecture of the brake system. The brake system provided in this application may be integrated in a plurality of forms. For example, the brake systems provided in Embodiment 10 to Embodiment 27 of this application may include a primary booster and a redundant booster. The primary booster may include an interface connected to a brake fluid reservoir, or may include an interface connected to a brake circuit. The redundant booster may also include an interface connected to a master cylinder, an interface connected to the brake fluid reservoir, and an interface connected to the brake circuit. As shown in FIG. 12, in the brake systems provided in Embodiment 10 to Embodiment 27, the primary booster and the redundant booster may be independent integrated modules, or the primary booster may be integrated with another pipe and a control valve, and the redundant booster may be integrated with a master cylinder. This is not limited in this application.

### Embodiment 10

FIG. 13 is a schematic diagram of another brake system according to Embodiment 10 of this application. As shown in FIG. 13, the brake system provided in Embodiment 10 is described below. For a part that is not mentioned, refer to the description of the brake system in Embodiment 1. Details are not described herein again.

As shown in FIG. 13, the brake system provided in Embodiment 10 includes a first subsystem and a second subsystem. Compared with those in Embodiment 1, both the first subsystem and the second subsystem in Embodiment 10 are changed. A first booster pump 203, a second booster pump 204, a first booster pump control valve 211, a second booster pump control valve 212, a one-way valve 203v, and a one-way valve 204v are added to the first subsystem. A third master cylinder isolation valve 13 and a fourth master cylinder isolation valve 14 are added to the second subsystem. The following describes in detail a difference of the brake system provided in Embodiment 10.

First, a system composition is described.
(1) The first subsystem includes a first control unit 91, a master cylinder 1, a master cylinder push rod 1k, a pedal travel sensor PTS, a test simulation valve 51, a brake fluid reservoir 5, a reservoir level sensor RLS, a pedal feeling simulator 6, a pedal simulation valve 61, a first master cylinder isolation valve 11, a second master cylinder isolation valve 12, a first master cylinder pressure sensor MCPS, the first booster pump 203, the second booster pump 204, the first booster pump control valve 211, the second booster pump control valve 212, the first booster pump one-way valve 203v, and the second booster pump one-way valve 204v.

When the test simulation valve 51 and the pedal simulation valve 61 in the first subsystem do not include a one-way valve, the first subsystem further includes a fifth one-way valve 51v and a sixth one-way valve 61v.

The first subsystem can also be integrated with a filter, or a control valve with a filter or the brake fluid reservoir 5 with a filter is selected to implement an impurity filtering function.

It should be noted that the first subsystem may include the master cylinder push rod 1k, but does not include a brake pedal 7. The first subsystem can be used with different types of brake pedals 7 to adapt to more types of vehicles and provide more possibilities for personalization.

It should be noted that the first booster pump 203 and the second booster pump 204 may be driven by at least one motor, and the drive motor is not shown in FIG. 13. A booster pump that appears in another embodiment provided in the specification of this application is also driven by a motor, and the drive motor is not shown.

(2) The second subsystem includes a second control unit 92, a third master cylinder isolation valve 13, a fourth master cylinder isolation valve 14, a second master cylinder pressure sensor MCPS, a booster drive motor 201, a dual apply plunger 202, a booster one-way valve 202v, a first booster control valve 21, a second booster control valve 22, a third booster control valve 23, a fourth booster control valve 24, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

It should be noted that a default state of each control valve in the brake system is shown in FIG. 13. For example, the first master cylinder isolation valve 11, the second master cylinder isolation valve 12, the third master cylinder isolation valve 13, and the fourth master cylinder isolation valve 14 are normally open valves. The normally open valve is in an initial state in which pipes at both ends of a control valve are connected. When the normally open valve is controlled to be powered on, the normally open valve switches to be in a state in which the pipes at both ends of the control valve are disconnected. In other words, when the normally open valve is powered on and disconnected, fluid in the pipe cannot flow from one end of the normally open valve to the other end of the normally open valve through the normally open valve.

Similarly, in the brake system shown in FIG. 13, the normally open valves may include the test simulation valve 51, the first master cylinder isolation valve 11, the second master cylinder isolation valve 12, the third master cylinder isolation valve 13, the fourth master cylinder isolation valve 14, the first wheel cylinder pressurization valve 31, the second wheel cylinder pressurization valve 32, the third wheel cylinder pressurization valve 33, and the fourth wheel cylinder pressurization valve 34.

Similarly, in the brake system shown in FIG. 13, normally closed valves may include the first booster pump control valve 211, the second booster pump control valve 212, the pedal simulation valve 61, the first booster control valve 21, the second booster control valve 22, the third booster control valve 23, the fourth booster control valve 24, the first wheel cylinder depressurization valve 41, the second wheel cylinder depressurization valve 42, the third wheel cylinder depressurization valve 43, and the fourth wheel cylinder depressurization valve 44.

Then, the following describes an interface setting and a connection relationship of the brake system provided in Embodiment 10 of this application with reference to FIG. 13.

A connection relationship of the first subsystem is first described. As shown in FIG. 13, the first subsystem includes an interface 8E, an interface 8F, and an interface 8G.

As shown in FIG. 13, a first main cavity 1i of the master cylinder 1 is connected to the interface 8F through the first master cylinder isolation valve 11, and a second main cavity 1j of the master cylinder 1 is connected to the interface 8G through the second master cylinder isolation valve 12.

As shown in FIG. 13, the brake fluid reservoir 5 is connected to the interface 8E. The first main cavity 1i of the master cylinder 1 is connected to the brake fluid reservoir 5 through a pipe 5i, and the second main cavity 1j of the master cylinder 1 is connected to the brake fluid reservoir 5 through the test simulation valve 51 and a pipe 5j. Both ends of the test simulation valve 51 are connected in parallel to the one-way valve 51v, and the one-way valve 51v is configured to allow brake fluid to flow from the brake fluid reservoir 5 to the master cylinder 1 through the one-way valve 51v under a specific condition. The master cylinder push rod 1k can push a master cylinder piston under an external force, the master cylinder push rod 1k can be connected to the brake pedal 7, and the pedal travel sensor PTS can detect pedal travel.

It should be noted that, an input end of the first booster pump 203 is denoted as a first end of the first booster pump 203, and an output end of the first booster pump 203 is denoted as a second end of the first booster pump 203. Similarly, an input end of the second booster pump 204 is denoted as a first end of the second booster pump 204, and an output end of the second booster pump 204 is denoted as a second end of the second booster pump 204. It should be noted that, the description of the first end or the second end of the first booster pump 203 or the second booster pump 204 in the specification of this application should not be construed as a limitation on the protection scope of this application. An input end of a booster pump may alternatively be denoted as a second end, and an output end of the booster pump may alternatively be denoted as a first end. This is not limited in this application.

As shown in FIG. 13, the brake fluid reservoir 5 is connected to the first end of the first booster pump 203 through the one-way valve 203v. The one-way valve 203v is configured to allow the brake fluid to flow from the brake fluid reservoir 5 to the first end of the first booster pump 203 through the one-way valve 203v under a specific condition. The first end of the first booster pump 203 is also connected to the interface 8G through the first booster pump control valve 211. The second end of the first booster pump is connected to the interface 8F, and the second end of the first booster pump 203 is also connected to the first main cavity 1i of the master cylinder 1 through the first master cylinder isolation valve 11.

As shown in FIG. 13, the brake fluid reservoir 5 is connected to the first end of the second booster pump 204 through the one-way valve 204v. The one-way valve 204v is configured to allow the brake fluid to flow from the brake fluid reservoir 5 to the first end of the second booster pump 204 through the one-way valve 204v under a specific condition. The first end of the second booster pump 204 is also connected to the interface 8G through the second booster pump control valve 212. The second end of the second booster pump is connected to the interface 8G, and the second end of the second booster pump 204 is also connected to the second main cavity 2j of the master cylinder 1 through the second master cylinder isolation valve 12.

It should be noted that, a connection relationship of the brake fluid reservoir 5 in the first subsystem is merely a possible case provided in Embodiment 10, and a quantity of interfaces on the brake fluid reservoir 5 is not limited in this application. For example, as shown in FIG. 13, a pipe 5k, the pipe 5i, the pipe 5j, and a pipe 5m that are connected to the brake fluid reservoir 5 may be connected to the brake fluid reservoir 5 through four brake fluid reservoir interfaces. In a possible implementation, the pipe 5k, the pipe 5i, the pipe 5j, and the pipe 5m that are connected to the brake fluid reservoir 5 may be converged before being connected to the brake fluid reservoir 5, and are connected to the brake fluid reservoir 5 through one interface.

As shown in FIG. 13, the master cylinder pressure sensor MCPS may be further disposed between the second main cavity 1j and the second master cylinder isolation valve 12.

As shown in FIG. 13, the pedal feeling simulator 6 is connected to the second main cavity 1j of the master cylinder through the pedal simulation valve 61. Both ends of the pedal simulation valve 61 are also connected in parallel to the one-way valve 61v. It should be noted that, when the pedal simulation valve 61 includes a one-way valve function, both ends of the pedal simulation valve 61 do not need to be connected in parallel to the one-way valve.

It should be noted herein that the master cylinder pressure sensor MCPS and the pedal feeling simulator 6 may be connected to the second main cavity 1j of the master cylinder 1, or may be connected to the first main cavity 1i of the master cylinder. This is not limited in this application.

Then, a connection relationship of the second subsystem is described. As shown in FIG. 13, the second subsystem includes a first interface, second interfaces (8f and 8g), and a third interface (8e). The first interface of the second subsystem is separately connected to brake wheel cylinders (3a, 3b, 3c, and 3d) of wheels.

As shown in FIG. 13, the interface 8f is connected to a first end of the third master cylinder isolation valve 13, and a second end of the third master cylinder isolation valve 13 is connected to a first brake pipe 3i. Specifically, the second end of the third master cylinder isolation valve 13 is connected to a first end of the first wheel cylinder pressurization valve 31, a second end of the first wheel cylinder pressurization valve 31 is connected to an interface 4a, the second end of the third master cylinder isolation valve 13 is connected to a first end of the second wheel cylinder pressurization valve 32, and a second end of the second wheel cylinder pressurization valve 32 is connected to an interface 4b.

As shown in FIG. 13, the interface 8g is connected to a first end of the fourth master cylinder isolation valve 14, and a second end of the fourth master cylinder isolation valve 14 is connected to a second brake pipe 3j. Specifically, the second end of the fourth master cylinder isolation valve 14 is connected to a first end of the third wheel cylinder pressurization valve 33, a second end of the third wheel cylinder pressurization valve 33 is connected to an interface 4c, the second end of the fourth master cylinder isolation valve 14 is connected to a first end of the fourth wheel cylinder pressurization valve 34, and a second end of the fourth wheel cylinder pressurization valve 34 is connected to an interface 4d.

As shown in FIG. 13, a first booster cavity 202i of the dual apply plunger 202 is separately connected to a first end of the first booster control valve 21 and a first end of the second booster control valve 22 through a first booster branch 2i, and a second end of the first booster control valve 21 is connected to the first brake pipe 3i. Specifically, the second end of the first booster control valve 21 is connected to the first end of the first wheel cylinder pressurization valve 31, the second end of the first booster control valve 21 is connected to the first end of the second wheel cylinder pressurization valve 32, and a second end of the second booster control valve 22 is connected to the second brake pipe 3j. Specifically, the second end of the second booster control valve 22 is connected to the first end of the third wheel cylinder pressurization valve 33, and the second end of the second booster control valve 22 is connected to the first end of the fourth wheel cylinder pressurization valve 34.

As shown in FIG. 13, a second booster cavity 202j of the dual apply plunger 202 is separately connected to a first end of the third booster control valve 23 and a first end of the fourth booster control valve 24 through a second booster branch 2j, and a second end of the third booster control valve 23 is connected to the first brake pipe 3i. Specifically, the second end of the third booster control valve 23 is connected to the first end of the first wheel cylinder pressurization valve 31, the second end of the third booster control valve 23 is connected to the first end of the second wheel cylinder pressurization valve 32, and a second end of the fourth booster control valve 24 is connected to the second brake pipe 3j. Specifically, the second end of the fourth booster control valve 24 is connected to the first end of the third wheel cylinder pressurization valve 33, and the second end of the fourth booster control valve 24 is connected to the first end of the fourth wheel cylinder pressurization valve 34.

As shown in FIG. 13, the interface 8e is connected to the first booster cavity 202i of the dual apply plunger 202 through the one-way valve 202v. A first end of the one-way valve 202v is connected to the interface 8e, and a second end of the one-way valve 202v is connected to the first booster cavity 202i. The one-way valve 202v is configured to allow the brake fluid to flow from a pipe 202k to the first booster cavity 202i through the one-way valve 202v under a specific condition. In other words, the one-way valve 202v allows the brake fluid to flow from the first end of the one-way valve 202v to the second end of the one-way valve 202v under a specific condition.

It should be noted that, in FIG. 13, a connection line between the second booster cavity 202j of the dual apply plunger 202 and the brake fluid reservoir 5 only indicates that fast depressurization can be implemented when a piston of the dual apply plunger returns to the leftmost, and does not indicate that the pipe is used for fluid replenishment. Similarly, this description is also applicable to other embodiments provided in the specification of this application.

As shown in FIG. 13, the brake circuit pressure sensor BCPS is disposed at the first brake pipe 3i and can collect pressure at the first wheel cylinder pressurization valve 31 or the second wheel cylinder pressurization valve 32. It should be noted that, the brake circuit pressure sensor BCPS may alternatively be disposed at the second brake pipe 3j and can collect pressure at the third wheel cylinder pressurization valve 33 or the fourth wheel cylinder pressurization valve 34. This is not limited in this application.

As shown in FIG. 13, the interface 4a is connected to the interface 8e through the first wheel cylinder depressurization valve 41, the interface 4b is connected to the interface 8e through the second wheel cylinder depressurization valve 42, the interface 4c is connected to the interface 8e through the third wheel cylinder depressurization valve 43, and the interface 4d is connected to the interface 8e through the fourth wheel cylinder depressurization valve 44.

The first subsystem and the second subsystem form the brake system. The second subsystem is connected to the interface 8E, the interface 8F, and the interface 8G of the first subsystem through the interface 8e, the interface 8f, and the interface 8g respectively. In addition, the brake system is also connected to the brake wheel cylinder through the interface 4a, the interface 4b, the interface 4c, and the interface 4d.

For the brake system including the first subsystem and the second subsystem, as shown in FIG. 13, a connection relationship between the master cylinder 1 and the brake wheel cylinders (3a, 3b, 3c, and 3d) may be described as follows: The first main cavity 1i of the master cylinder 1 is connected to the interface 8F through the first master cylinder isolation valve 11, and is connected to the third master cylinder isolation valve 13 through the interface 8f. The third master cylinder isolation valve 13 is connected to the first brake pipe 3i. Specifically, the third master cylinder isolation valve 13 is separately connected to the first wheel cylinder pressurization valve 31 and the second wheel cylinder pressurization valve 32. The first wheel cylinder pressurization valve 31 is connected to the interface 4a, and is connected to a first wheel cylinder 3a through the interface 4a. The second wheel cylinder pressurization valve 32 is connected to the interface 4b, and is connected to a second wheel cylinder 3b through the interface 4b. The second main cavity 1j of the master cylinder 1 is connected to the interface 8G through the second master cylinder isolation valve 12, and is connected to the fourth master cylinder isolation valve 14 through the interface 8g. The fourth master cylinder isolation valve 14 is connected to the second brake pipe 3j. Specifically, the fourth master cylinder isolation valve 14 is separately connected to the third wheel cylinder pressurization valve 33 and the fourth wheel cylinder pressurization valve 34. The third wheel cylinder pressurization valve 33 is connected to the interface 4c, and is connected to a third wheel cylinder 3c through the interface 4c. The fourth wheel cylinder pressurization valve 34 is connected to the interface 4d, and is connected to a fourth wheel cylinder 3d through the interface 4d.

Similarly, as shown in FIG. 13, the output end of the first booster pump 203 is connected to the interface 8F, and is connected to the third master cylinder isolation valve 13 through the interface 8f; and the output end of the second booster pump 204 is connected to the interface 8G, and is connected to the fourth master cylinder isolation valve 14 through the interface 8g. For a connection relationship between the first booster pump 203 and the second booster pump 204 and the brake wheel cylinders (3a, 3b, 3c, and 3d) in the second subsystem, refer to the connection relationship between the master cylinder 1 and the brake wheel cylinders (3a, 3b, 3c, and 3d). Details are not described herein again.

As shown in FIG. 13, the first booster cavity 202i of a booster 2 is connected to the interface 8e through the one-way valve 202v, and is connected to the brake fluid reservoir 5 through the interface 8E and the pipe 5k. First ends of the wheel cylinder depressurization valves (41, 42, 43, and 44) are separately connected to the interface 8e, and are connected to the brake fluid reservoir 5 through the interface 8E and the pipe 5k.

The foregoing describes the system composition, connection relationship, integration manner, and interface setting of the brake system provided in Embodiment 10. The following describes a control relationship of the brake system provided in Embodiment 10. In Embodiment 10, objects controlled by each of the first control unit 91 and the second control unit 92 are as follows:
(1) Objects controlled by the first control unit 91 include the pedal simulation valve 61, the first master cylinder isolation valve 11, the second master cylinder isolation valve 12, the test simulation valve 51, the first booster pump control valve 211, and the second booster pump control valve 212.

The first control unit 91 receives signals of the master cylinder pressure sensor MCPS, the pedal travel sensor PTS, and the reservoir level sensor RLS.

(2) Objects controlled by the second control unit 92 include the booster drive motor 201, the third master cylinder isolation valve 13, the fourth master cylinder isolation valve 14, the first booster control valve 21, the second booster control valve 22, the third booster control valve 23, the fourth booster control valve 24, the first wheel cylinder pressurization valve 31, the second wheel cylinder pressurization valve 32, the third wheel cylinder pressurization valve 33, the fourth wheel cylinder pressurization valve 34, the first wheel cylinder depressurization valve 41, the second wheel cylinder depressurization valve 42, the third wheel cylinder depressurization valve 43, and the fourth wheel cylinder depressurization valve 44.

The second control unit 92 receives signals of the brake circuit pressure sensor BCPS and the motor position sensor MPS.

In a possible implementation, the brake system includes a first controller and a second controller. The first controller includes the first control unit 91, the second controller includes the second control unit 92, and the first controller and the second controller further include at least various solenoid valve drives and various signal processing and control output interfaces. The second controller further includes a signal processing and control output interface related to a motor drive. The controller may further receive measurement or detection signals of various sensors, such as an environmental condition, a driver input, and a brake system status, and controls the braking characteristics of the brake system through computing and determining.

The foregoing describes the system composition, connection relationship, integration manner, interface setting, and control relationship of the brake system provided in Embodiment 10 with reference to FIG. 13. The following describes a working mode of the brake system provided in Embodiment 10 with reference to FIG. 13.

The braking intention described in the specification of this application may include a braking intention from a driver and an active braking intention from a vehicle.

Specifically, the braking intention may be obtained based on a pedal stepping action of the driver, the braking intention of the driver may be obtained through the signal of the pedal travel sensor PTS, or the braking intention may be determined by combining signals of the pedal travel sensor PTS and the master cylinder pressure sensor MCPS.

In addition, the braking intention may also be obtained based on an active braking request of an autonomous driving system ADS or an advanced driver assistant system ADAS. For example, the active braking request may be generated by an autonomous driving controller and received by a control unit of the brake system. For another example, in an ACC mode, when a follow-up distance is less than a preset distance, an ACC system sends an active braking request, and a control unit of the brake system receives the braking request and executes a corresponding braking action. A method for obtaining the braking intention is not limited in the specification of this application.

Based on the braking intention, the brake system provided in this embodiment of this application may provide functions such as an ABS, a TCS, ESC, a BBF, AEB, and ACC. In addition, the brake system may also provide other value added functions VAFs such as AEB, ABP, ABA, AWB, CDD, VLC, AVH, BDW, HAZ, HBA, HFC, HRB, an HAS, and HDC.

For acronyms and abbreviations included in embodiments provided in the specification of this application and an explanation of the acronyms and abbreviations, refer to the description at the beginning of embodiments.

It should be noted that, in the specification of this application, the first control unit 91 is also referred to as an ECU 1 in some embodiments, and the second control unit 92 is also referred to as an ECU 2 in some embodiments.

After the braking intention is obtained, the brake system has different working modes in different fault scenarios. The brake system provided in Embodiment 10 of this application includes at least four working modes: (1) The ECU 1 and the ECU 2 work together. (2) The ECU 1 works independently. (3) The ECU 2 works independently. (4) Mechanical backup mode.

Working mode 1: a conventional braking mode, where the ECU 1 and the ECU 2 work together

As shown in FIG. 14, when the brake system has no fault, the ECU 1 and the ECU 2 work together. In a possible application scenario, when the driver steps the brake pedal, the master cylinder push rod 1k pushes the master cylinder piston, and pressure in the master cylinder increases. The ECU 1 controls the first master cylinder isolation valve 11 and the second master cylinder isolation valve 12 to be disconnected. The ECU 1 controls the pedal simulation valve 61 to be connected, so that the second main cavity 1j of the master cylinder 1 is connected to the pedal feeling simulator 6, and the pedal feeling simulator works to generate a pedal feeling. At this time, the first booster pump 203 and the second booster pump 204 do not work. The ECU 1 also receives the signal of the pedal travel sensor PTS and the signal of the first master cylinder pressure sensor MCPS, and transmits the received signals to the ECU 2. In addition, the ECU 1 also receives the signal of the reservoir level sensor RLS.

Herein, the ECU 1 may transmit the signal to the ECU 2 by using a CAN (Controller Area Network), an Ethernet, or another method. This is not limited in this application.

The ECU 2 determines the braking intention of the driver based on the signal of the pedal travel sensor PTS and the signal of the master cylinder pressure sensor MCPS that are transmitted by the ECU 1.

Specifically, based on the braking intention, a conventional pressure build-up process of the brake system provided in Embodiment 10 may be described as follows: The ECU 2 controls the first booster control valve 21, the second booster control valve 22, the third booster control valve 23, and the fourth booster control valve 24 to open, and controls the booster drive motor 201 to push the piston of the dual apply plunger 202 to move rightward. One part of the fluid in the first booster cavity 202i passes through the first booster control valve 21 and the second booster control valve 22, and flows into the brake wheel cylinders (3a, 3b, 3c, and 3d) through the wheel cylinder pressurization valves (31, 32, 33, 34) respectively, to implement wheel braking; and the other part of the fluid flows into the second booster cavity 202j of the dual apply plunger 202 through the third booster control valve 23 and the fourth booster control valve 24.

Further, the ECU 2 determines a position of the piston of the dual apply plunger 202 based on the signal of the motor position sensor MPS. If the position of the piston reaches a rightmost side of the dual apply plunger 202, and the brake wheel cylinder still needs to be pressurized, the ECU 2 controls the first booster control valve 21 and the second booster control valve 22 to be in a closed state, and controls the booster drive motor 201 to reverse. The piston of the dual apply plunger moves leftward, and the brake fluid in the second booster cavity 202j flows into the brake wheel cylinder through the third booster control valve 23, the fourth booster control valve, and the wheel cylinder pressurization valves (31, 32, 33, 34), to implement wheel pressurization. When the position of the piston reaches a leftmost side of the dual apply plunger 202 and the system still has a pressurization requirement, the principle is similar to the above, and details are not described herein again. It should be noted that, the dual apply plunger 202 can make a pressurization process continuous and stable, and bring good pressurization characteristics to the brake system.

When brake pressure of a wheel cylinder is large, a conventional depressurization process of the brake system provided in Embodiment 10 may be described as follows: For example, when pressure of the brake wheel cylinder 3a is large, the wheel cylinder pressurization valve 31 corresponding to the brake wheel cylinder 3a is disconnected, and the corresponding wheel cylinder depressurization valve 41 is connected, so that the brake fluid in the wheel cylinder flows into the brake fluid reservoir 5 through the wheel cylinder depressurization valve 41, to implement depressurization.

Accordingly, the ECU 2 calculates control signals of the booster drive motor 201 and solenoid valves in the second subsystem based on the sensor signals. The ECU 2 controls statuses of the first booster control valve 21, the second booster control valve 22, the third booster control valve 23, and the fourth booster control valve 24, and controls the booster drive motor 201 to push the booster piston to build up pressure. The ECU 2 controls pressure of each of the brake wheel cylinders (3a, 3b, 3c, and 3d) by controlling connection and disconnection of the wheel cylinder pressurization valves (31, 32, 33, 34) and the wheel cylinder depressurization valves (41, 42, 43, and 44), to implement functions such as an ABS, a TCS, ESC, a BBF, AEB, and ACC.

Working mode 2: a redundant braking mode, where the ECU 1 works independently

As shown in FIG. 15, when the ECU 2 is faulty, the ECU 1 works independently. Because the third master cylinder isolation valve 13 and the fourth master cylinder isolation valve 14 are normally open valves, when the ECU 2 is faulty and fails to work normally, brake pressure generated by the first subsystem can still be transmitted to the brake wheel cylinder through the third master cylinder isolation valve 13 and the fourth master cylinder isolation valve 14.

When the ECU 2 is faulty, the ECU 1 controls the first master cylinder isolation valve 11 and the second master cylinder isolation valve 12 to be disconnected, and controls the pedal simulation valve 61 to be connected, so that the brake fluid of the master cylinder 1 enters the pedal feeling simulator 6, and the pedal feeling simulator 6 works to provide a pedal feeling. In addition, pipe pressure obtained through pressurization by the first booster pump 203 and the second booster pump 204 does not return to the master cylinder through the first master cylinder isolation valve 11 or the second master cylinder isolation valve 12. This protects the driver from being potentially hurt by failure to step the brake pedal, a sudden increase of pressure of the master cylinder 1, or a like factor.

The ECU 1 controls the first booster pump 203 and the second booster pump 204 to work, to pressurize a brake pipe. At this time, the brake fluid flows from the brake fluid reservoir 5 to the input end of the first booster pump 203 through the one-way valve 203v, and the brake fluid also flows from the brake fluid reservoir 5 to the input end of the second booster pump 204 through the one-way valve 204v.

The ECU 1 may pressurize the brake wheel cylinder by controlling the first booster pump 203 and the second booster pump 204, and control pressurization pressure of the brake wheel cylinder by using the first booster pump control valve 211 and the second booster pump control valve 212. Therefore, when the ECU 2 is faulty, the ECU 1 can implement a braking function by controlling the first subsystem. However, the system cannot implement active depressurization of wheels and separate pressurization of each of the four wheels. Therefore, a backup function is weak and only functions such as simple service brake can be supported.

Working mode 3: a redundant braking mode, where the ECU 2 works independently

As shown in FIG. 16, the ECU 1 is faulty at this time and cannot collect the signals of the PTS and the MCPS. Therefore, the ECU 2 cannot sense the braking intention of the driver through the pedal travel sensor PTS. However, in this mode, the brake system provided in Embodiment 10 can respond to an active braking request, for example, AEB, ESC, a TCS, a value added function (value added function, VAF), and the like (where the above functions can be triggered without the driver stepping the brake pedal).

In a possible implementation, when the pedal travel sensor PTS separately transmits signals to the ECU 1 and the ECU 2, when the ECU 1 is faulty, the ECU 2 may obtain the PTS signal. In this case, the ECU 2 may obtain the braking intention. This is not limited in this application.

In response to the braking request, the ECU 2 calculates the control signals of the booster drive motor 201 and the solenoid valves in the second subsystem. A principle of working independently by the ECU 2 is similar to that of the working mode 1 in which the ECU 1 and the ECU 2 work together. Details are not described herein again.

In a possible implementation, the ECU 2 controls the third master cylinder isolation valve 13 and the fourth master cylinder isolation valve 14 to be disconnected. In addition, the ECU 2 controls the booster drive motor 201 to push the booster piston to build up pressure, controls the statuses of the first booster control valve 21, the second booster control valve 22, the third booster control valve 23, and the fourth booster control valve 24 to perform pressurization, and controls the pressure of each of the brake wheel cylinders (3a, 3b, 3c, and 3d) by controlling connection and disconnection of the wheel cylinder pressurization valves (31, 32, 33, 34) and the wheel cylinder depressurization valves (41, 42, 43, and 44), to implement functions such as an ABS, a TCS, ESC, a BBF, AEB, and ACC.

Working mode 4: a redundant braking mode, mechanical backup

In addition, when both the ECU 1 and the ECU 2 fail, the brake system provided in this embodiment can perform mechanical backup. When the driver steps the brake pedal, the brake fluid may flow from the master cylinder 1 to the first wheel cylinder 3a and the second wheel cylinder 3b through the first master cylinder isolation valve 11 and the third master cylinder isolation valve 13, or may flow from the master cylinder 1 to the third wheel cylinder 3c and the fourth wheel cylinder 3d through the second master cylinder isolation valve 12 and the fourth master cylinder isolation valve 14, to implement braking.

### Embodiment 11

FIG. 17 is a schematic diagram of another brake system according to Embodiment 11 of this application.

As shown in FIG. 17, a difference between the brake system provided in Embodiment 11 and that in Embodiment 10 lies in that a booster 2 in a second subsystem is a one-way booster apparatus, and a one-way apply plunger 202 of the booster 2 is connected to a first brake circuit 3i through a first booster control valve 21, the one-way apply plunger 202 of the booster 2 is connected to a second brake circuit 3j through a second booster control valve 22, and the one-way apply plunger 202 is also connected to an interface 8e through a booster one-way valve 202v.

For other system compositions, connection relationships, interface settings, and working principles in different working modes in the brake system provided in Embodiment 11, refer to descriptions in other embodiments in the specification of this application. Details are not described herein again.

The brake system provided in Embodiment 11 reduces a third booster control valve 23 and a fourth booster control valve 24, and has a simpler structure. Therefore, the brake system provided in Embodiment 11 can reduce costs and improve system reliability. However, the system provided in Embodiment 11 cannot implement dual continuous pressurization. When a piston of the booster 2 reaches a rightmost side and the system still needs to be pressurized, the first booster control valve 11 and the second booster control valve 12 need to be disconnected, a booster drive motor 201 is controlled to reverse to push the piston of the booster 2 to the left side, and then pressure is rebuilt. To be specific, pressure needs to be maintained for a period of time before pressurization can be continued.

### Embodiment 12

FIG. 18 and FIG. 19 are schematic diagrams of brake systems according to Embodiment 12 and Embodiment 13 of this application.

As shown in FIG. 18 and FIG. 19, compared with that in Embodiment 10, the brake systems provided in Embodiment 12 and Embodiment 13 each add an ECU 3 and change a booster drive motor 201 from a three-phase motor to a six-phase motor. The six-phase motor includes two sets of three-phase windings. An ECU 2 controls one set of three-phase winding of the booster drive motor 201, and the ECU 3 controls the other set of three-phase winding of the booster drive motor 201.

In the brake system provided in Embodiment 12 shown in FIG. 18, objects controlled by each control unit are as follows:
An ECU 1 controls a pedal simulation valve 61, a first master cylinder isolation valve 11, a second master cylinder isolation valve 12, a test simulation valve 51, a first booster pump control valve 211, and a second booster pump control valve 212. The ECU 1 receives signals of a master cylinder pressure sensor MCPS, a pedal travel sensor PTS, and a reservoir level sensor RLS.

The ECU 2 and the ECU 3 may jointly drive and control a first booster control valve 21, a second booster control valve 22, a third booster control valve 23, a fourth booster control valve 24, a third master cylinder isolation valve 13, and a fourth master cylinder isolation valve 14.

In addition, the ECU 2 further controls a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, and a fourth wheel cylinder depressurization valve 44. The ECU 2 receives signals of a brake circuit pressure sensor BCPS and a motor position sensor MPS.

In a conventional working mode, the ECU 1 controls the three-phase motor and pushes a piston of a booster 2 to perform pressurization. The ECU 2 controls all solenoid valves in a second subsystem. When a motor power (corresponding to a pressurization speed) fails to meet a system requirement, the ECU 3 increases the motor power by controlling the other set of three-phase winding of the motor.

In addition, when the ECU 2 or the three-phase winding of the motor corresponding to the ECU 2 fails, the ECU 3 may control another set of three-phase winding of the booster drive motor 201, and control statuses of the first booster control valve 21, the second booster control valve 22, the third booster control valve 23, the fourth booster control valve 24, the third master cylinder isolation valve 13, and the fourth master cylinder isolation valve 14, to pressurize a wheel cylinder, and provide a redundant braking backup function for the system.

When the ECU 2, the ECU 3, or the booster drive motor 201 fails, the ECU 1 in a first subsystem controls a first booster pump 203, a second booster pump 204, the first booster pump control valve 203, the second booster pump control valve 204, the first master cylinder isolation valve 11, and the second master cylinder isolation valve 12, to pressurize the wheel cylinder, and complete braking function backup. Therefore, the system has triple redundant braking backup characteristics.

Compared with those in the brake system provided in Embodiment 10, in the brake system provided in Embodiment 12, both the first subsystem and the second subsystem can provide redundant pressurization backup. A booster pump of the first subsystem can provide a redundant pressurization function. In the second subsystem, a booster motor, the first booster control valve 21, the second booster control valve 22, the third booster control valve 23, the fourth booster control valve 24, the third master cylinder isolation valve 13, and the fourth master cylinder isolation valve 14 are controlled by the ECU 3, so that the redundant pressurization function can also be provided. The second subsystem can implement a four-wheel select-low ABS function in a redundancy backup braking mode, and has faster pressurization capability and more accurate pressure control precision.

### Embodiment 13

As shown in FIG. 19, Embodiment 13 also provides a brake system. Compared with that in the brake system provided in Embodiment 12, in the brake system provided in Embodiment 13, a booster 2 uses a one-way apply plunger, with a connection relationship shown in FIG. 19. Specifically, a one-way apply plunger 202 is connected to an interface 8e through a one-way valve 202v, the one-way apply plunger 202 is connected to a first booster control valve 21 and a second booster control valve 22 through a first booster branch 2i, and the one-way apply plunger 202 is connected to a third booster control valve 23 and a fourth booster control valve 24 through a second booster branch 2j. The first booster control valve 21 and the third booster control valve 23 are connected to a first brake circuit 3i, and the second booster control valve 22 and the fourth booster control valve 24 are connected to a second brake circuit 3j.

Specifically, as shown in FIG. 19, the apply plunger 202 is separately connected to a first end of the first booster control valve 21 and a first end of the second booster control valve 22 through the first booster branch 2i. A second end of the first booster control valve 21 is connected to the first brake pipe 3i. Specifically, the second end of the first booster control valve 21 is connected to a first end of a first wheel cylinder pressurization valve 31, and the second end of the first booster control valve 21 is connected to a first end of a second wheel cylinder pressurization valve 32. A second end of the second booster control valve 22 is connected to the second brake pipe 3j. Specifically, the second end of the second booster control valve 22 is connected to a first end of a third wheel cylinder pressurization valve 33, and the second end of the second booster control valve 22 is connected to a first end of a fourth wheel cylinder pressurization valve 34.

Similarly, as shown in FIG. 19, the apply plunger 202 is also separately connected to a first end of the third booster control valve 23 and a first end of the fourth booster control valve 24 through the second booster branch 2j. A second end of the third booster control valve 23 is connected to the first brake pipe 3i. Specifically, the second end of the third booster control valve 23 is connected to the first end of the first wheel cylinder pressurization valve 31, and the second end of the third booster control valve 23 is connected to the first end of the second wheel cylinder pressurization valve 32. A second end of the fourth booster control valve 24 is connected to the second brake pipe 3j. Specifically, the second end of the fourth booster control valve 24 is connected to the first end of the third wheel cylinder pressurization valve 33, and the second end of the fourth booster control valve 24 is connected to the first end of the fourth wheel cylinder pressurization valve 34.

As shown in FIG. 19, in the brake system provided in Embodiment 13, an ECU 2 and an ECU 3 jointly control a third master cylinder isolation valve 13 and a fourth master cylinder isolation valve 14, the ECU 3 independently controls the third booster control valve 23 and the fourth booster control valve 24, and the ECU 2 controls the first booster control valve 21, the second booster control valve 22, the first wheel cylinder pressurization valve 31, the second wheel cylinder pressurization valve 32, the third wheel cylinder pressurization valve 33, the fourth wheel cylinder pressurization valve 34, a first wheel cylinder depressurization valve 41, a second wheel cylinder depressurization valve 42, a third wheel cylinder depressurization valve 43, and a fourth wheel cylinder depressurization valve 44.

As shown in FIG. 19, the booster 2 of the brake system provided in Embodiment 13 uses the one-way apply plunger, and a quantity of solenoid valves jointly driven by the ECU 2 and the ECU 3 is reduced, so that costs can be reduced, and a select-low ABS function can be implemented in a partial failure mode.

In conclusion, the brake systems provided in Embodiment 13 and Embodiment 15 can improve a redundancy backup capability of the brake system. For a working mode or another part that is not mentioned of the brake system, refer to descriptions in other embodiments of this application. Details are not described herein again.

### Embodiment 14 and Embodiment 15

FIG. 20 and FIG. 21 are schematic diagrams of other brake systems according to Embodiment 14 and Embodiment 15 of this application.

As shown in FIG. 20, compared with those in the brake system provided in Embodiment 12, in the brake system provided in Embodiment 14, solenoid valves jointly controlled by an ECU 2 and an ECU 3 include a third master cylinder isolation valve 13, a fourth master cylinder isolation valve 14, a first booster control valve 11, a second booster control valve 12, a third booster control valve 13, a fourth booster control valve 14, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, and a fourth wheel cylinder depressurization valve 44. The brake system provided in Embodiment 14 has higher redundancy.

As shown in FIG. 21, compared with those in the brake system provided in Embodiment 13, in the brake system provided in Embodiment 15, solenoid valves jointly controlled by an ECU 2 and an ECU 3 include a third master cylinder isolation valve 13, a fourth master cylinder isolation valve 14, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, and a fourth wheel cylinder depressurization valve 44. The brake system provided in Embodiment 15 has higher redundancy.

For the brake system provided in Embodiment 14 or Embodiment 15, when the ECU 2 or a three-phase winding controlled by the ECU 2 fails, the ECU 3 may drive the controlled three-phase winding and the jointly-controlled solenoid valves, to implement backup of all functions in a redundant braking mode, including functions such as an ABS, a TCS, ESC, a BBF, and a VAF.

For the brake system provided in Embodiment 15, the system uses a one-way apply plunger and has a simpler structure, so that a quantity of jointly-driven solenoid valves can be reduced, costs can be reduced, and reliability of the brake system is improved.

In conclusion, the brake systems provided in Embodiment 14 and Embodiment 15 can greatly improve a redundancy backup capability of the brake system. For a system composition, a connection relationship, a control relationship, a working mode, or another part that is not mentioned of the brake system, refer to descriptions in other embodiments in the specification of this application. Details are not described herein again.

### Embodiment 16

FIG. 22 is a schematic diagram of another brake system according to Embodiment 16 of this application.

As shown in FIG. 22, compared with that in Embodiment 10, the brake system provided in Embodiment 16 adds a third booster pump control valve 213 and a fourth booster pump control valve 214. An interface 8F is connected to a brake fluid reservoir 5 through the third booster pump control valve 213, and an interface 8G is connected to the brake fluid reservoir 5 through the fourth booster pump control valve 214.

When an ECU 2 fails, an ECU 1 works independently. The ECU 1 may implement active depressurization by controlling the third booster pump control valve 213 and the fourth booster pump control valve 214. For example, when brake wheel cylinders (3a, 3b, 3c, and 3d) need to be depressurized, the ECU 1 controls the third booster pump control valve 213 and the fourth booster pump control valve 214 to be connected, so that the brake wheel cylinders can be connected to the brake fluid reservoir 5, to implement depressurization of the wheel cylinders.

The brake system provided in Embodiment 16 further improves a redundancy backup capability of the brake system, and the third booster pump control valve 213 and the fourth booster pump control valve 214 are added, so that a select-low ABS function may be implemented in a redundancy backup mode.

Specifically, in a possible implementation, the third booster pump control valve 213 and the fourth booster pump control valve 214 may be solenoid valves that can provide a connected/disconnected state. Alternatively, in another possible implementation, the third booster pump control valve 213 and the fourth booster pump control valve 214 are regulating valves, and an opening degree of a control valve may be adjusted by using a control signal, to adjust pressure of a circuit. In a redundant braking mode, if the brake wheel cylinders need to be depressurized when the ECU 1 works independently, the ECU 1 can control the pressure of the brake circuit by controlling opening degrees of the third booster pump control valve 213 and the fourth booster pump control valve 214. Therefore, the select-low ABS function can be implemented.

In addition, in another possible implementation, a booster 2 of the brake system may alternatively use a one-way apply plunger and reduce a third booster control valve 23 and a fourth booster control valve 24, to reduce costs. For a second subsystem of the brake system using a one-way booster apparatus, refer to the description of Embodiment 11. Details are not described herein again.

### Embodiment 17

FIG. 23 is a schematic diagram of another brake system according to Embodiment 17 of this application.

As shown in FIG. 23, in the brake system provided in Embodiment 17, for a system composition, a connection relationship, a control relationship, and another part that is not mentioned of a second subsystem, refer to Embodiment 10. Details are not described herein again. A difference between a first subsystem in the brake system provided in Embodiment 17 and that in the brake system provided in Embodiment 10 is specifically described as follows.

As shown in FIG. 23, the first subsystem includes a first control unit 91, a master cylinder 1, a master cylinder push rod 1k, a pedal travel sensor PTS, a test simulation valve 51, a brake fluid reservoir 5, a reservoir level sensor RLS, a pedal feeling simulator 6, a pedal simulation valve 61, a first master cylinder isolation valve 11, a second master cylinder isolation valve 12, a first master cylinder pressure sensor MCPS, a first booster pump 203, a second booster pump 204, a first booster pump control valve 211, a second booster pump control valve 212, and a third booster pump control valve 213.

As shown in FIG. 23, a first end of the first booster pump 203 is connected to the brake fluid reservoir 5 through the third booster pump control valve 213, and the first end of the first booster pump 203 is also connected to an interface 8F through the first booster pump control valve 211. The interface 8F may be connected to the brake fluid reservoir 5 sequentially through the first booster pump control valve 211 and the third booster pump control valve 213. A second end of the first booster pump 203 is connected to a first main cavity 1i of the master cylinder 1 through the first master cylinder isolation valve 11, and the second end of the first booster pump 203 is also connected to the interface 8F.

Similarly, as shown in FIG. 23, a first end of the second booster pump 204 is connected to the brake fluid reservoir 5 through the third booster pump control valve 213, and the first end of the second booster pump 204 is also connected to an interface 8G through the second booster pump control valve 212. The interface 8G may be connected to the brake fluid reservoir 5 sequentially through the second booster pump control valve 212 and the third booster pump control valve 213. A second end of the second booster pump 204 is connected to a second main cavity 1j of the master cylinder 1 through the second master cylinder isolation valve 12, and the second end of the second booster pump 204 is also connected to the interface 8G.

Therefore, when an ECU 2 fails and an ECU 1 works independently, the first booster pump 203 and the second booster pump 204 can implement redundant pressurization. When brake wheel cylinders need to be depressurized, the ECU 1 may enable brake fluid in the brake wheel cylinders to flow back to the brake fluid reservoir 5 by connecting the first booster pump control valve 211, the second booster pump control valve 212, and the third booster pump control valve 213, to depressurize the brake wheel cylinders.

In a possible implementation, the first booster pump control valve 211 and the second booster pump control valve 212 are regulating valves, and an opening degree of a control valve may be adjusted by using a control signal, to adjust pressure of a circuit. In a redundant braking mode, if the brake wheel cylinders need to be depressurized when the ECU 1 works independently, the ECU 1 controls the third booster pump control valve 213 to be connected, and the ECU 1 can control the pressure of the brake circuit by controlling opening degrees of the first booster pump control valve 211 and the second booster pump control valve 214. Therefore, a select-low ABS function can be implemented.

Therefore, the brake system provided in Embodiment 17 can still provide braking functions such as a select-low ABS when the first subsystem works independently.

For a system composition, a connection relationship, a control relationship, a working mode, or another part that is not mentioned of the brake system provided in Embodiment 17, refer to descriptions in other embodiments in the specification of this application. Details are not described herein again.

### Embodiment 18

FIG. 24 shows another brake system according to Embodiment 18 of this application. As shown in FIG. 24, in the brake system provided in Embodiment 18, for a system composition, a connection relationship, a control relationship, and another part that is not mentioned of a second subsystem, refer to Embodiment 10. Details are not described herein again. A difference between a first subsystem in the brake system provided in Embodiment 18 and that in the brake system provided in Embodiment 10 is specifically described as follows.

As shown in FIG. 24, the first subsystem includes a first control unit 91, a master cylinder 1, a master cylinder push rod 1k, a pedal travel sensor PTS, a test simulation valve 51, a brake fluid reservoir 5, a reservoir level sensor RLS, a pedal feeling simulator 6, a pedal simulation valve 61, a first master cylinder isolation valve 11, a second master cylinder isolation valve 12, a first master cylinder pressure sensor MCPS, a first booster pump 203, a second booster pump 204, a first booster pump control valve 211, a second booster pump control valve 212, a third booster pump control valve 213, and a fourth booster pump control valve 214.

As shown in FIG. 24, a first end of the first booster pump 203 is connected to the brake fluid reservoir 5, and the first end of the first booster pump 203 is also connected to an interface 8F through the third booster pump control valve 213 and the first booster pump control valve 211. The interface 8F is connected to the fifth brake fluid reservoir 5 sequentially through the first booster pump control valve 211 and the third booster pump control valve 213. A second end of the first booster pump 203 is connected to a first main cavity 1i of the master cylinder 1 through the first master cylinder isolation valve 11, and the second end of the first booster pump 203 is also connected to the interface 8F.

Similarly, as shown in FIG. 24, a first end of the second booster pump 204 is connected to the brake fluid reservoir 5, and the first end of the second booster pump 204 is also connected to an interface 8G through the fourth booster pump control valve 214 and the second booster pump control valve 212. The interface 8G is connected to the fifth brake fluid reservoir 5 sequentially through the second booster pump control valve 212 and the fourth booster pump control valve 214. A second end of the second booster pump 204 is connected to a second main cavity 1j of the master cylinder 1 through the second master cylinder isolation valve 12, and the second end of the second booster pump 204 is also connected to the interface 8G.

A natural state of each control valve in the brake system provided in Embodiment 18 is shown in FIG. 24. As shown in FIG. 24, the first booster pump control valve 211 and the second booster pump control valve 212 are normally open valves, and are in a connected state in a natural state. The third booster pump control valve 213 and the fourth booster pump control valve 214 are normally closed valves, and are in a disconnected state in a natural state.

It should be noted that, the first booster pump control valve 211 and the second booster pump control valve 212 are regulating valves, and an opening degree of a control valve may be adjusted by using a control signal, to adjust pressure of a circuit.

In a conventional braking mode, the third booster pump control valve 213 and the fourth booster pump control valve 214 remain disconnected, to prevent brake fluid from flowing to the brake fluid reservoir 5 through the third booster pump control valve 213 and the fourth booster pump control valve 214 to cause a pressure decrease of the brake circuit. When wheel cylinders need to be depressurized, an ECU 2 controls wheel cylinder depressurization valves (41, 42, 43, and 44) to be connected, to implement depressurization.

In a redundant braking mode, if the brake wheel cylinders need to be pressurized when an ECU 1 works independently, the ECU 1 controls the third booster pump control valve 213 and the fourth booster pump control valve 214 to remain disconnected, and the ECU 1 controls the first booster pump 203 and the second booster pump 204 to pressurize the brake circuit. If the brake wheel cylinders need to be depressurized, the ECU 1 controls the third booster pump control valve 213 and the fourth booster pump control valve 214 to be connected, and controls the pressure of the brake circuit by controlling opening degrees of the first booster pump control valve 211 and the second booster pump control valve 212. Therefore, a select-low ABS function can be implemented.

For a system composition, a connection relationship, a control relationship, a working mode, or another part that is not mentioned of the brake system provided in Embodiment 18, refer to descriptions in other embodiments in the specification of this application. Details are not described herein again.

### Embodiment 19

FIG. 25 shows another brake system according to Embodiment 19 of this application. As shown in FIG. 25, in the brake system provided in Embodiment 19, for a system composition, a connection relationship, a control relationship, and another part that is not mentioned of a second subsystem, refer to Embodiment 10. Details are not described herein again. A difference between a first subsystem in the brake system provided in Embodiment 19 and that in the brake system provided in Embodiment 10 is specifically described as follows.

As shown in FIG. 25, the first subsystem includes a first control unit 91, a master cylinder 1, a master cylinder push rod 1k, a pedal travel sensor PTS, a test simulation valve 51, a brake fluid reservoir 5, a reservoir level sensor RLS, a pedal feeling simulator 6, a pedal simulation valve 61, a first master cylinder isolation valve 11, a second master cylinder isolation valve 12, a first master cylinder pressure sensor MCPS, a first booster pump 203, a second booster pump 204, a first booster pump control valve 211, a second booster pump control valve 212, a third booster pump control valve 213, and a fourth booster pump control valve 214.

As shown in FIG. 25, a first end of the first booster pump 203 is connected to the brake fluid reservoir 5 through the third booster pump control valve 213, and the first end of the first booster pump 203 is also connected to an interface 8F through the first booster pump control valve. The interface 8F may be connected to the brake fluid reservoir 5 through the first booster pump control valve 211 and the third booster pump control valve 213. A second end of the first booster pump 203 is connected to a first main cavity 1i of the master cylinder 1 through the first master cylinder isolation valve 11, and the second end of the first booster pump 203 is connected to the interface 8F.

Similarly, as shown in FIG. 25, a first end of the second booster pump 204 is connected to the brake fluid reservoir 5 through the fourth booster pump control valve 214, and the first end of the second booster pump 204 is also connected to an interface 8G through the second booster pump control valve 212. The interface 8G may be connected to the brake fluid reservoir 5 through the second booster pump control valve 212 and the fourth booster pump control valve 214. A second end of the second booster pump 204 is connected to a second main cavity 1j of the master cylinder 1 through the second master cylinder isolation valve 12, and the second end of the second booster pump 204 is connected to the interface 8G.

Therefore, when an ECU 2 fails and an ECU 1 works independently, the first booster pump 203 and the second booster pump 204 can implement redundant pressurization. When brake wheel cylinders need to be depressurized, the ECU 1 may connect the interface 8F to the brake fluid reservoir 5 by connecting the first booster pump control valve 211 and the third booster pump control valve 213, and connect the interface 8G to the brake fluid reservoir 5 by connecting the second booster pump control valve 212 and the fourth booster pump control valve 214. Therefore, brake fluid in the brake wheel cylinder can flow back to the brake fluid reservoir 5, to implement depressurization of the brake wheel cylinder. Therefore, the brake system provided in Embodiment 19 can still provide braking functions such as a select-low ABS when the first subsystem works independently.

Specifically, a natural state of each control valve in the brake system provided in Embodiment 19 is shown in FIG. 25. As shown in FIG. 25, the first booster pump control valve 211 and the second booster pump control valve 212 are normally open valves, and are in a connected state in a natural state. The third booster pump control valve 213 and the fourth booster pump control valve 214 are normally closed valves, and are in a disconnected state in a natural state.

In a possible implementation, the first booster pump control valve 211 and the second booster pump control valve 212 are regulating valves, and an opening degree of a control valve may be adjusted by using a control signal, to adjust pressure of a circuit.

In a possible implementation, the first booster pump control valve 211 and the second booster pump control valve 212 may alternatively be other solenoid valves that have connected and disconnected states.

In a conventional braking mode, the third booster pump control valve 213 and the fourth booster pump control valve 214 remain disconnected, to prevent the brake fluid from flowing to the brake fluid reservoir 5 through the third booster pump control valve 213 and the fourth booster pump control valve 214 to cause a pressure decrease of the brake circuit. When wheel cylinders need to be depressurized, the ECU 2 controls wheel cylinder depressurization valves (41, 42, 43, and 44) to be connected, to implement depressurization.

In a redundant braking mode, if the brake wheel cylinders need to be pressurized when the ECU 1 works independently, the ECU 1 controls the third booster pump control valve 213 and the fourth booster pump control valve 214 to be connected, and the ECU 1 controls the first booster pump 203 and the second booster pump 204 to pressurize the brake circuit. If the brake wheel cylinders need to be depressurized, the ECU 1 controls the third booster pump control valve 213 and the fourth booster pump control valve 214 to be connected, and controls the pressure of the brake circuit by controlling opening degrees of the first booster pump control valve 211 and the second booster pump control valve 212. Therefore, the select-low ABS function can be implemented.

For a system composition, a connection relationship, a control relationship, a working mode, or another part that is not mentioned of the brake system provided in Embodiment 19, refer to descriptions in other embodiments in the specification of this application. Details are not described herein again.

### Embodiment 20

FIG. 26 shows another brake system according to Embodiment 20 of this application. As shown in FIG. 26, in the brake system provided in Embodiment 20, for a system composition, a connection relationship, a control relationship, and another part that is not mentioned of a second subsystem, refer to Embodiment 10. Details are not described herein again. A difference between a first subsystem in the brake system provided in Embodiment 20 and that in the brake system provided in Embodiment 10 is specifically described as follows.

As shown in FIG. 26, the first subsystem includes a first control unit 91, a master cylinder 1, a master cylinder push rod 1k, a pedal travel sensor PTS, a test simulation valve 51, a brake fluid reservoir 5, a reservoir level sensor RLS, a pedal feeling simulator 6, a pedal simulation valve 61, a first master cylinder isolation valve 11, a second master cylinder isolation valve 12, a first master cylinder pressure sensor MCPS, a first booster pump 203, a second booster pump 204, a third booster pump control valve 213, and a fourth booster pump control valve 214.

As shown in FIG. 26, a first end of the first booster pump 203 is connected to a first main cavity 1i of the master cylinder 1 through the third booster pump control valve 213. A second end of the first booster pump 203 is connected to the first main cavity 1i of the master cylinder 1 through the first master cylinder isolation valve 11, and the second end of the first booster pump 203 is connected to an interface 8F.

Similarly, as shown in FIG. 26, a first end of the second booster pump 204 is connected to a second main cavity 1j of the master cylinder 1 through the third booster pump control valve 213. A second end of the second booster pump 204 is connected to the second main cavity 1j of the master cylinder through the second master cylinder isolation valve 12, and the second end of the second booster pump 204 is connected to an interface 8G.

When an ECU 2 fails and an ECU 1 works independently, the ECU 1 controls the first master cylinder isolation valve 11 and the second master cylinder isolation valve 12 to be disconnected. The ECU 1 controls the third booster pump control valve 213 and the fourth booster pump control valve 214 to be connected, brake fluid of the master cylinder 1 may enter an input end of the first booster pump 203 through the third booster pump control valve 213, and the brake fluid of the master cylinder 1 may enter an input end of the second booster pump 204 through the fourth booster pump control valve 214. The ECU 1 controls the first booster pump 203 and the second booster pump 204 to work, to increase pressure of a brake circuit.

For a system composition, a connection relationship, a control relationship, a working mode, or another part that is not mentioned of the brake system provided in Embodiment 20, refer to descriptions in other embodiments in the specification of this application. Details are not described herein again.

### Embodiment 21

FIG. 27 shows another brake system according to Embodiment 21 of this application. The following describes a system composition, a connection relationship, an integration manner, an interface setting, a control relationship, and the like of the brake system provided in Embodiment 21 of this application with reference to FIG. 27.

First, the system composition of the brake system provided in Embodiment 21 is described. As shown in FIG. 27, the brake system provided in Embodiment 21 of this application includes two subsystems.
(1) A first subsystem includes a first control unit 91, a master cylinder 1, a master cylinder push rod 1k, a pedal travel sensor PTS, a test simulation valve 51, a brake fluid reservoir 5, a reservoir level sensor RLS, a first master cylinder isolation valve 11, a second master cylinder isolation valve 12, a first master cylinder pressure sensor MCPS, a first booster pump 203, a second booster pump 204, a first booster pump control valve 211, a second booster pump control valve 212, a third booster pump control valve 213, a fourth booster pump control valve 214, a first booster pump one-way valve 203v, and a second booster pump one-way valve 204v.

When the test simulation valve 51 in the first subsystem does not include a one-way valve, the first subsystem further includes a fifth one-way valve 51v.

The first subsystem can also be integrated with a filter, or a control valve with a filter or the brake fluid reservoir 5 with a filter is selected to implement an impurity filtering function.

It should be noted that the first subsystem may include the master cylinder push rod 1k, but does not include a brake pedal 7. The first subsystem can be used with different types of brake pedals 7 to adapt to more types of vehicles and provide more possibilities for personalization.

(2) A second subsystem includes a second control unit 92, a third master cylinder isolation valve 13, a fourth master cylinder isolation valve 14, a second master cylinder pressure sensor MCPS, a pedal feeling simulator 6, a pedal simulation valve 61, a booster drive motor 201, a dual apply plunger 202, a booster one-way valve 202v, a first booster control valve 21, a second booster control valve 22, a third booster control valve 23, a fourth booster control valve 24, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the pedal simulation valve 61, the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a sixth one-way valve 61v, a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

It should be noted that a default state of each control valve in the brake system is shown in FIG. 27. For example, the first master cylinder isolation valve 11, the second master cylinder isolation valve 12, the third master cylinder isolation valve 13, and the fourth master cylinder isolation valve 14 are normally open valves. The normally open valve is in an initial state in which pipes at both ends of a control valve are connected. When the normally open valve is controlled to be powered on, the normally open valve switches to be in a state in which the pipes at both ends of the control valve are disconnected. In other words, when the normally open valve is powered on and disconnected, fluid in the pipe cannot flow from one end of the normally open valve to the other end of the normally open valve through the normally open valve.

Similarly, in the brake system shown in FIG. 27, the normally open valves may include the test simulation valve 51, the first master cylinder isolation valve 11, the second master cylinder isolation valve 12, the third master cylinder isolation valve 13, the fourth master cylinder isolation valve 14, the first wheel cylinder pressurization valve 31, the second wheel cylinder pressurization valve 32, the third wheel cylinder pressurization valve 33, and the fourth wheel cylinder pressurization valve 34.

Similarly, in the brake system shown in FIG. 27, normally closed valves include the first booster pump control valve 211, the second booster pump control valve 212, the third booster pump control valve 213, the fourth booster pump control valve 214, the pedal simulation valve 61, the first booster control valve 21, the second booster control valve 22, the third booster control valve 23, the fourth booster control valve 24, the first wheel cylinder depressurization valve 41, the second wheel cylinder depressurization valve 42, the third wheel cylinder depressurization valve 43, and the fourth wheel cylinder depressurization valve 44.

Then, the following describes an interface setting and a connection relationship of the brake system provided in Embodiment 21 of this application with reference to FIG. 27.

A connection relationship of the first subsystem is first described. As shown in FIG. 27, the first subsystem includes an interface 8E, an interface 8F, and an interface 8G.

As shown in FIG. 27, a first main cavity 1i of the master cylinder 1 is connected to the interface 8F through the first master cylinder isolation valve 11, and a second main cavity 1j of the master cylinder 1 is connected to the interface 8G through the second master cylinder isolation valve 12.

As shown in FIG. 27, the brake fluid reservoir 5 is connected to the interface 8E. The first main cavity 1i of the master cylinder 1 is connected to the brake fluid reservoir 5 through a pipe 5i, and the second main cavity 1j of the master cylinder 1 is connected to the brake fluid reservoir 5 through the test simulation valve 51 and a pipe 5j. Both ends of the test simulation valve 51 are connected in parallel to the one-way valve 51v, and the one-way valve 51v is configured to allow brake fluid to flow from the brake fluid reservoir 5 to the master cylinder 1 through the one-way valve 51v under a specific condition. The master cylinder push rod 1k can push a master cylinder piston under an external force, the master cylinder push rod 1k can be connected to the brake pedal 7, and the pedal travel sensor PTS can detect pedal travel.

It should be noted that, an input end of the first booster pump 203 is denoted as a first end of the first booster pump 203, and an output end of the first booster pump 203 is denoted as a second end of the first booster pump 203. Similarly, an input end of the second booster pump 204 is denoted as a first end of the second booster pump 204, and an output end of the second booster pump 204 is denoted as a second end of the second booster pump 204. It should be noted that, the description of the first end or the second end of the first booster pump 203 or the second booster pump 204 in the specification of this application should not be construed as a limitation on the protection scope of this application. An input end of a booster pump may alternatively be denoted as a second end, and an output end of the booster pump may alternatively be denoted as a first end. This is not limited in this application.

As shown in FIG. 27, the brake fluid reservoir 5 is connected to the first end of the first booster pump 203 through the one-way valve 203v. The one-way valve 203v is configured to allow the brake fluid to flow from the brake fluid reservoir 5 to the first end of the first booster pump 203 through the one-way valve 203v under a specific condition. The first end of the first booster pump 203 is also connected to the first main cavity 1i of the master cylinder 1 through the third booster pump control valve 213. The second end of the first booster pump is connected to the interface 8F, and the second end of the first booster pump 203 is also connected to the first main cavity 1i of the master cylinder 1 through the first master cylinder isolation valve 11. The brake fluid reservoir 5 is also connected to the interface 8F through the first booster pump control valve 211.

As shown in FIG. 27, the brake fluid reservoir 5 is connected to the first end of the second booster pump 204 through the one-way valve 204v. The one-way valve 204v is configured to allow the brake fluid to flow from the brake fluid reservoir 5 to the first end of the second booster pump 204 through the one-way valve 204v under a specific condition. The first end of the second booster pump 204 is also connected to the second main cavity 1j of the master cylinder 1 through the fourth booster pump control valve 214. The second end of the second booster pump is connected to the interface 8G, and the second end of the second booster pump 204 is also connected to the second main cavity 2j of the master cylinder 1 through the second master cylinder isolation valve 12. The brake fluid reservoir 5 is also connected to the interface 8G through the second booster pump control valve 212.

It should be noted that, a connection relationship of the brake fluid reservoir 5 in the first subsystem is merely a possible case provided in Embodiment 21, and a quantity of interfaces on the brake fluid reservoir 5 is not limited in this application. For example, as shown in FIG. 27, a pipe 5k, the pipe 5i, the pipe 5j, and a pipe 5m that are connected to the brake fluid reservoir 5 may be connected to the brake fluid reservoir 5 through four brake fluid reservoir interfaces. In a possible implementation, the pipe 5k, the pipe 5i, the pipe 5j, and the pipe 5m that are connected to the brake fluid reservoir 5 may be converged before being connected to the brake fluid reservoir 5, and are connected to the brake fluid reservoir 5 through one interface.

Then, a connection relationship of the second subsystem is described. As shown in FIG. 27, the second subsystem includes a first interface, second interfaces (8f and 8g), and a third interface (8e). The first interface of the second subsystem is separately connected to brake wheel cylinders (3a, 3b, 3c, and 3d) of wheels.

As shown in FIG. 27, the interface 8f is connected to a first end of the third master cylinder isolation valve 13, and a second end of the third master cylinder isolation valve 13 is connected to a first brake pipe 3i. Specifically, the second end of the third master cylinder isolation valve 13 is connected to a first end of the first wheel cylinder pressurization valve 31, a second end of the first wheel cylinder pressurization valve 31 is connected to an interface 4a, the second end of the third master cylinder isolation valve 13 is connected to a first end of the second wheel cylinder pressurization valve 32, and a second end of the second wheel cylinder pressurization valve 32 is connected to an interface 4b.

As shown in FIG. 27, the interface 8g is connected to a first end of the fourth master cylinder isolation valve 14, and a second end of the fourth master cylinder isolation valve 14 is connected to a second brake pipe 3j. Specifically, the second end of the fourth master cylinder isolation valve 14 is connected to a first end of the third wheel cylinder pressurization valve 33, a second end of the third wheel cylinder pressurization valve 33 is connected to an interface 4c, the second end of the fourth master cylinder isolation valve 14 is connected to a first end of the fourth wheel cylinder pressurization valve 34, and a second end of the fourth wheel cylinder pressurization valve 34 is connected to an interface 4d.

As shown in FIG. 27, the pedal feeling simulator 6 is connected to the interface 8g through the pedal simulation valve 61. Both ends of the pedal simulation valve 61 are also connected in parallel to the one-way valve 61v. It should be noted that, when the pedal simulation valve 61 includes a one-way valve function, both ends of the pedal simulation valve 61 do not need to be connected in parallel to the one-way valve.

As shown in FIG. 27, the second master cylinder pressure sensor MCPS may be further disposed between the interface 8g and the fourth master cylinder isolation valve 14.

As shown in FIG. 27, a first booster cavity 202i of the dual apply plunger 202 is separately connected to a first end of the first booster control valve 21 and a first end of the second booster control valve 22 through a first booster branch 2i, and a second end of the first booster control valve 21 is connected to the first brake pipe 3i. Specifically, the second end of the first booster control valve 21 is connected to the first end of the first wheel cylinder pressurization valve 31, the second end of the first booster control valve 21 is connected to the first end of the second wheel cylinder pressurization valve 32, and a second end of the second booster control valve 22 is connected to the second brake pipe 3j. Specifically, the second end of the second booster control valve 22 is connected to the first end of the third wheel cylinder pressurization valve 33, and the second end of the second booster control valve 22 is connected to the first end of the fourth wheel cylinder pressurization valve 34.

As shown in FIG. 27, a second booster cavity 202j of the dual apply plunger 202 is separately connected to a first end of the third booster control valve 23 and a first end of the fourth booster control valve 24 through a second booster branch 2j, and a second end of the third booster control valve 23 is connected to the first brake pipe 3i. Specifically, the second end of the third booster control valve 23 is connected to the first end of the first wheel cylinder pressurization valve 31, the second end of the third booster control valve 23 is connected to the first end of the second wheel cylinder pressurization valve 32, and a second end of the fourth booster control valve 24 is connected to the second brake pipe 3j. Specifically, the second end of the fourth booster control valve 24 is connected to the first end of the third wheel cylinder pressurization valve 33, and the second end of the fourth booster control valve 24 is connected to the first end of the fourth wheel cylinder pressurization valve 34.

As shown in FIG. 27, the interface 8e is connected to the first booster cavity 202i of the dual apply plunger 202 through the one-way valve 202v. A first end of the one-way valve 202v is connected to the interface 8e, and a second end of the one-way valve 202v is connected to the first booster cavity 202i. The one-way valve 202v is configured to allow the brake fluid to flow from a pipe 202k to the first booster cavity 202i through the one-way valve 202v under a specific condition. In other words, the one-way valve 202v allows the brake fluid to flow from the first end of the one-way valve 202v to the second end of the one-way valve 202v under a specific condition.

It should be noted that, in FIG. 27, a connection line between the second booster cavity 202j of the dual apply plunger 202 and the brake fluid reservoir 5 only indicates that fast depressurization can be implemented when a piston of the dual apply plunger returns to the leftmost. Similarly, this description is also applicable to other embodiments provided in the specification of this application.

As shown in FIG. 27, the brake circuit pressure sensor BCPS is disposed at the first brake pipe 3i and can collect pressure at the first wheel cylinder pressurization valve 31 or the second wheel cylinder pressurization valve 32. It should be noted that, the brake circuit pressure sensor BCPS may alternatively be disposed at the second brake pipe 3j and can collect pressure at the third wheel cylinder pressurization valve 33 or the fourth wheel cylinder pressurization valve 34. This is not limited in this application.

As shown in FIG. 27, the interface 4a is connected to the interface 8e through the first wheel cylinder depressurization valve 41, the interface 4b is connected to the interface 8e through the second wheel cylinder depressurization valve 42, the interface 4c is connected to the interface 8e through the third wheel cylinder depressurization valve 43, and the interface 4d is connected to the interface 8e through the fourth wheel cylinder depressurization valve 44.

The first subsystem and the second subsystem form the brake system. The second subsystem is connected to the interface 8E, the interface 8F, and the interface 8G of the first subsystem through the interface 8e, the interface 8f, and the interface 8g respectively. In addition, the brake system is also connected to the brake wheel cylinder through the interface 4a, the interface 4b, the interface 4c, and the interface 4d.

For the brake system including the first subsystem and the second subsystem, as shown in FIG. 27, a connection relationship between the master cylinder 1 and the brake wheel cylinders (3a, 3b, 3c, and 3d) may be described as follows: The first main cavity 1i of the master cylinder 1 is connected to the interface 8F through the first master cylinder isolation valve 11, and is connected to the third master cylinder isolation valve 13 through the interface 8f. The third master cylinder isolation valve 13 is connected to the first brake pipe 3i. Specifically, the third master cylinder isolation valve 13 is separately connected to the first wheel cylinder pressurization valve 31 and the second wheel cylinder pressurization valve 32. The first wheel cylinder pressurization valve 31 is connected to the interface 4a, and is connected to a first wheel cylinder 3a through the interface 4a. The second wheel cylinder pressurization valve 32 is connected to the interface 4b, and is connected to a second wheel cylinder 3b through the interface 4b. The second main cavity 1j of the master cylinder 1 is connected to the interface 8G through the second master cylinder isolation valve 12, and is connected to the fourth master cylinder isolation valve 14 through the interface 8g. The fourth master cylinder isolation valve 14 is connected to the second brake pipe 3j. Specifically, the fourth master cylinder isolation valve 14 is separately connected to the third wheel cylinder pressurization valve 33 and the fourth wheel cylinder pressurization valve 34. The third wheel cylinder pressurization valve 33 is connected to the interface 4c, and is connected to a third wheel cylinder 3c through the interface 4c. The fourth wheel cylinder pressurization valve 34 is connected to the interface 4d, and is connected to a fourth wheel cylinder 3d through the interface 4d.

Similarly, as shown in FIG. 27, the output end of the first booster pump 203 is connected to the interface 8F, and is connected to the third master cylinder isolation valve 13 through the interface 8f; and the output end of the second booster pump 204 is connected to the interface 8G, and is connected to the fourth master cylinder isolation valve 14 through the interface 8g. For a connection relationship between the first booster pump 203 and the second booster pump 204 and the brake wheel cylinders (3a, 3b, 3c, and 3d) in the second subsystem, refer to the connection relationship between the master cylinder 1 and the brake wheel cylinders (3a, 3b, 3c, and 3d). Details are not described herein again.

As shown in FIG. 27, the first booster cavity 202i of a booster 2 is connected to the interface 8e through the one-way valve 202v, and is connected to the brake fluid reservoir 5 through the interface 8E and the pipe 5k. First ends of the wheel cylinder depressurization valves (41, 42, 43, and 44) are separately connected to the interface 8e, and are connected to the brake fluid reservoir 5 through the interface 8E and the pipe 5k.

The foregoing describes the system composition, connection relationship, integration manner, and interface setting of the brake system provided in Embodiment 21. The following describes a control relationship of the brake system provided in Embodiment 21. In Embodiment 21, objects controlled by each of the first control unit 91 and the second control unit 92 are as follows:
(1) Objects controlled by the first control unit 91 include the first master cylinder isolation valve 11, the second master cylinder isolation valve 12, the test simulation valve 51, the first booster pump control valve 211, the second booster pump control valve 212, the third booster pump control valve 213, and the fourth booster pump control valve 214.

The first control unit 91 receives signals of the first master cylinder pressure sensor MCPS, the pedal travel sensor PTS, and the reservoir level sensor RLS.

(2) Objects controlled by the second control unit 92 include the pedal simulation valve 61, the booster drive motor 201, the third master cylinder isolation valve 13, the fourth master cylinder isolation valve 14, the first booster control valve 21, the second booster control valve 22, the third booster control valve 23, the fourth booster control valve 24, the first wheel cylinder pressurization valve 31, the second wheel cylinder pressurization valve 32, the third wheel cylinder pressurization valve 33, the fourth wheel cylinder pressurization valve 34, the first wheel cylinder depressurization valve 41, the second wheel cylinder depressurization valve 42, the third wheel cylinder depressurization valve 43, and the fourth wheel cylinder depressurization valve 44.

The second control unit 92 receives signals of the second master cylinder pressure sensor MCPS, the brake circuit pressure sensor BCPS, and the motor position sensor MPS.

In a possible implementation, the brake system includes a first controller and a second controller. The first controller includes the first control unit 91, the second controller includes the second control unit 92, and the first controller and the second controller further include at least various solenoid valve drives and various signal processing and control output interfaces. The second controller further includes a signal processing and control output interface related to a motor drive. The controller may further receive measurement or detection signals of various sensors, such as an environmental condition, a driver input, and a brake system status, and controls the braking characteristics of the brake system through computing and determining.

The foregoing describes the system composition, connection relationship, integration manner, interface setting, and control relationship of the brake system provided in Embodiment 21 with reference to FIG. 27. The following describes a working mode of the brake system provided in Embodiment 21 with reference to FIG. 27.

The braking intention described in the specification of this application may include a braking intention from a driver and an active braking intention from a vehicle.

Specifically, the braking intention may be obtained based on a pedal stepping action of the driver, the braking intention of the driver may be obtained through the signal of the pedal travel sensor PTS, or the braking intention may be determined by combining signals of the pedal travel sensor PTS and the master cylinder pressure sensor MCPS.

In addition, the braking intention may also be obtained based on an active braking request of an autonomous driving system ADS or an advanced driver assistant system ADAS. For example, the active braking request may be generated by an autonomous driving controller and received by a control unit of the brake system. For another example, in an ACC mode, when a follow-up distance is less than a preset distance, an ACC system sends an active braking request, and a control unit of the brake system receives the braking request and executes a corresponding braking action. A method for obtaining the braking intention is not limited in the specification of this application.

Based on the braking intention, the brake system provided in this embodiment of this application may provide functions such as an ABS, a TCS, ESC, a BBF, AEB, and ACC. In addition, the brake system may also provide other value added functions VAFs such as AEB, ABP, ABA, AWB, CDD, VLC, AVH, BDW, HAZ, HBA, HFC, HRB, an HAS, and HDC.

For acronyms and abbreviations included in embodiments provided in the specification of this application and an explanation of the acronyms and abbreviations, refer to the description at the beginning of embodiments.

It should be noted that, in the specification of this application, the first control unit 91 is also referred to as an ECU 1 in some embodiments, and the second control unit 92 is also referred to as an ECU 2 in some embodiments.

The brake system provided in Embodiment 21 of this application includes at least four working modes: (1) The ECU 1 and the ECU 2 work together. (2) The ECU 1 works independently. (3) The ECU 2 works independently. (4) Mechanical backup mode.

Working mode 1: a conventional braking mode, where the ECU 1 and the ECU 2 work together

When the brake system has no fault, the ECU 1 and the ECU 2 work together.

In a possible application scenario, when the driver steps the brake pedal, the master cylinder push rod 1k pushes the master cylinder piston, and pressure in the master cylinder increases. The ECU 1 controls the first master cylinder isolation valve 11 and the second master cylinder isolation valve 12 to be connected, and controls the third master cylinder isolation valve 13 and the fourth master cylinder isolation valve 14 to be disconnected. The second main cavity 1j of the master cylinder 1 is connected to the pedal feeling simulator 6, and the pedal feeling simulator works to generate a pedal feeling. The ECU 1 controls the first booster pump control valve 211, the second booster pump control valve 212, the third booster pump control valve 213, and the fourth booster pump control valve 214 to be disconnected. At this time, the first booster pump 203 and the second booster pump 204 do not work. The ECU 1 also receives the signal of the pedal travel sensor PTS and the signal of the first master cylinder pressure sensor MCPS, and transmits the received signals to the ECU 2. The ECU 2 determines the braking intention of the driver based on the signal of the pedal travel sensor PTS and the signal of the master cylinder pressure sensor MCPS that are transmitted by the ECU 1.

After the braking intention is obtained, a conventional pressure build-up process of the brake system provided in Embodiment 21 may be described as follows: The ECU 2 controls the first booster control valve 21, the second booster control valve 22, the third booster control valve 23, and the fourth booster control valve 24 to open, and controls the booster drive motor 201 to push the piston of the dual apply plunger 202 to move rightward. One part of the brake fluid in the first booster cavity 202i passes through the first booster control valve 21 and the second booster control valve 22, and flows into the brake wheel cylinders (3a, 3b, 3c, and 3d) through the wheel cylinder pressurization valves (31, 32, 33, 34) respectively, to implement wheel braking; and the other part of the brake fluid flows into the second booster cavity 202j of the dual apply plunger 202 through the third booster control valve 23 and the fourth booster control valve 24.

Further, the ECU 2 determines a position of the piston of the dual apply plunger 202 based on the signal of the motor position sensor MPS. If the position of the piston reaches a rightmost side of the dual apply plunger 202, and the brake wheel cylinder still needs to be pressurized, the ECU 2 controls the first booster control valve 21 and the second booster control valve 22 to be in a closed state, and controls the booster drive motor 201 to reverse. The piston of the dual apply plunger moves leftward, and the brake fluid in the second booster cavity 202j flows into the brake wheel cylinder through the third booster control valve 23, the fourth booster control valve 24, and the wheel cylinder pressurization valves (31, 32, 33, 34), to implement wheel pressurization. When the position of the piston reaches a leftmost side of the dual apply plunger 202 and the system still has a pressurization requirement, the principle is similar to the above, and details are not described herein again. It should be noted that, the dual apply plunger 202 can make a pressurization process continuous and stable, and bring good pressurization characteristics to the brake system.

When brake pressure of a wheel cylinder is large, a conventional depressurization process of the brake system provided in Embodiment 21 may be described as follows: For example, when pressure of the brake wheel cylinder 3a is large, the wheel cylinder pressurization valve 31 corresponding to the brake wheel cylinder 3a is disconnected, and the corresponding wheel cylinder depressurization valve 41 is connected, so that the brake fluid in the wheel cylinder flows into the brake fluid reservoir 5 through the wheel cylinder depressurization valve 41, to implement depressurization of the brake wheel cylinder 3a without affecting pressure of other brake wheel cylinders.

Accordingly, the ECU 2 calculates control signals of the booster drive motor 201 and solenoid valves in the second subsystem based on the sensor signals. The ECU 2 controls statuses of the first booster control valve 21, the second booster control valve 22, the third booster control valve 23, and the fourth booster control valve 24, and controls the booster drive motor 201 to push a booster piston to perform pressurization. The ECU 2 controls pressure of each of the brake wheel cylinders (3a, 3b, 3c, and 3d) by controlling connection and disconnection of the wheel cylinder pressurization valves (31, 32, 33, 34) and the wheel cylinder depressurization valves (41, 42, 43, and 44), to implement functions such as an ABS, a TCS, ESC, a BBF, AEB, and ACC.

Working mode 2: a redundant braking mode, where the ECU 1 works independently

When the ECU 2 is faulty, the ECU 1 works independently. Because the third master cylinder isolation valve 13 and the fourth master cylinder isolation valve 14 are normally open valves, when the ECU 2 is faulty and fails to work normally, brake pressure of the first subsystem can still be transmitted to the brake wheel cylinder through the third master cylinder isolation valve 13 and the fourth master cylinder isolation valve 14.

After the braking intention is obtained, when the ECU 2 is faulty, the ECU 1 controls the first booster pump 203 and the second booster pump 204 to work, to pressurize a brake pipe. At this time, the brake fluid may flow from the brake fluid reservoir 5 to the input end of the first booster pump 203 through the one-way valve 203v, and the brake fluid may also flow from the brake fluid reservoir 5 to the input end of the second booster pump 204 through the one-way valve 204v.

The ECU 1 controls the third booster pump control valve 213 and the fourth booster pump control valve 214 to be connected. In this case, the brake fluid in the master cylinder 1 can flow into the brake pipe through the third booster pump control valve 213 and the fourth booster pump control valve 214. Specifically, the brake fluid of the master cylinder 1 flows into the input end of the first booster pump 203 through the third booster pump control valve 213, and the brake fluid of the master cylinder 1 also flows into the input end of the second booster pump 204 through the fourth booster pump control valve 214. This can provide some pedal feelings, ensures that the driver can normally step the pedal, and avoids a case that the driver cannot normally step the pedal due to high master cylinder pressure.

At the same time, the ECU 1 controls the first master cylinder isolation valve 11 and the second master cylinder isolation valve 12 to be disconnected, and pressure obtained through pressurization by the first booster pump 203 and the second booster pump 204 does not return to the master cylinder through the first master cylinder isolation valve 11 or the second master cylinder isolation valve 12. This also protects the driver from being potentially hurt by failure to step the brake pedal, a sudden pressure increase of the master cylinder 1, or a like factor.

During pressurization, the ECU 1 controls the first booster pump control valve 211 and the second booster pump control valve 212 to remain disconnected. The pressure generated by the first booster pump 203 and the second booster pump 204 can be transmitted to the brake wheel cylinder through the third master cylinder isolation valve 13, the fourth master cylinder isolation valve 14, and the wheel cylinder pressurization valves (31, 32, 33, 34).

When wheel cylinder pressure needs to be reduced, the ECU 1 may control the first booster pump control valve 211 and the second booster pump control valve 212 to be connected, so that the brake fluid of the brake wheel cylinder flows back to the brake fluid reservoir 5, to reduce the pressure of the brake wheel cylinder.

In a possible implementation, the first booster pump control valve 211 and the second booster pump control valve 212 are regulating valves, and an opening degree of a control valve may be adjusted by using a control signal, to adjust pressure of a circuit. In the redundant braking mode, if the brake wheel cylinders need to be depressurized when the ECU 1 works independently, the ECU 1 can control the pressure of the brake circuit by controlling opening degrees of the first booster pump control valve 211 and the second booster pump control valve 212. Therefore, the select-low ABS function can be implemented.

Therefore, the ECU 1 may pressurize the brake wheel cylinder by controlling the third booster pump control valve 213, the fourth booster pump control valve 214, the first booster pump 203, and the second booster pump 204, and depressurize the brake wheel cylinder by controlling the first booster pump control valve 211 and the second booster pump control valve 212. Therefore, when the ECU 2 is faulty, the ECU 1 can still implement a braking function by controlling the first subsystem.

Working mode 3: a redundant braking mode, where the ECU 2 works independently

When the ECU 1 is faulty, the ECU 2 works independently. After the braking intention is obtained, the ECU 2 calculates the control signals of the booster drive motor 201 and the solenoid valves in the second subsystem. In a possible implementation, the ECU 2 obtains a brake pressure signal based on the second master cylinder pressure sensor MCPS, and determines a driving intention based on the signal. In another possible implementation, the ECU 2 receives the signal of the pedal travel sensor PTS, and determines a driving intention based on the signals of the pedal travel sensor PTS and the master cylinder pressure sensor MCPS.

A principle of working independently by the ECU 2 is similar to that of the working mode 1 in which the ECU 1 and the ECU 2 work together. Details are not described herein again. In conclusion, the ECU 2 calculates the control signals of the booster drive motor 201 and solenoid valves in the second subsystem based on the sensor signals. The ECU 2 controls the booster drive motor 201 to push the booster piston to build up pressure, controls the statuses of the first booster control valve 21, the second booster control valve 22, the third booster control valve 23, and the fourth booster control valve 24 to pressurize the brake circuit, and controls the pressure of each of the brake wheel cylinders (3a, 3b, 3c, and 3d) by controlling connection and disconnection of the wheel cylinder pressurization valves (31, 32, 33, 34) and the wheel cylinder depressurization valves (41, 42, 43, and 44), to implement functions such as an ABS, a TCS, ESC, a BBF, AEB, and ACC.

Working mode 4: a redundant braking mode, mechanical backup

In addition, when both the ECU 1 and the ECU 2 fail, the brake system provided in this embodiment can perform mechanical backup. When the driver steps the brake pedal, the brake fluid may flow from the master cylinder 1 to the first wheel cylinder 3a and the second wheel cylinder 3b through the first master cylinder isolation valve 11 and the third master cylinder isolation valve 13, or may flow from the master cylinder 1 to the third wheel cylinder 3c and the fourth wheel cylinder 3d through the second master cylinder isolation valve 12 and the fourth master cylinder isolation valve 14, to implement braking.

### Embodiment 22

FIG. 28 shows another brake system according to Embodiment 22 of this application. The following describes a system composition, a connection relationship, an integration manner, an interface setting, a control relationship, and the like of the brake system provided in Embodiment 22 of this application with reference to FIG. 28.

First, the system composition of the brake system provided in Embodiment 22 is described. As shown in FIG. 28, the brake system provided in Embodiment 22 of this application includes two subsystems. A first subsystem of the brake system provided in Embodiment 22 is the same as the first subsystem of the brake system provided in Embodiment 21. Details are not described herein again. The following describes a second subsystem of the brake system provided in Embodiment 22.

(2) The second subsystem of the brake system provided in Embodiment 22 includes a second control unit 92, a third master cylinder isolation valve 13, a fourth master cylinder isolation valve 14, a second master cylinder pressure sensor MCPS, a pedal feeling simulator 6, a pedal simulation valve 61, a booster drive motor 201, a one-way apply plunger 202, a booster one-way valve 202v, a first booster control valve 21, a second booster control valve 22, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the pedal simulation valve 61, the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a sixth one-way valve 61v, a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

Compared with that in the brake system provided in Embodiment 21 as shown in FIG. 27, in the brake system provided in Embodiment 22 as shown in FIG. 28, the second subsystem uses the one-way apply plunger 202, and removes a third booster control valve 23 and a fourth booster control valve 24. In addition, in the brake system provided in Embodiment 22, as shown in FIG. 28, the brake circuit pressure sensor BCPS is disposed on a first booster branch 2i for obtaining brake pressure of a brake circuit.

It should be noted that a default state of each control valve in the brake system is shown in FIG. 28. For example, a first master cylinder isolation valve 11, a second master cylinder isolation valve 12, the third master cylinder isolation valve 13, and the fourth master cylinder isolation valve 14 are normally open valves. The normally open valve is in an initial state in which pipes at both ends of a control valve are connected. When the normally open valve is controlled to be powered on, the normally open valve switches to be in a state in which the pipes at both ends of the control valve are disconnected. In other words, when the normally open valve is powered on and disconnected, fluid in the pipe cannot flow from one end of the normally open valve to the other end of the normally open valve through the normally open valve.

Similarly, in the brake system shown in FIG. 28, the normally open valves may include the test simulation valve 51, the first master cylinder isolation valve 11, the second master cylinder isolation valve 12, the third master cylinder isolation valve 13, the fourth master cylinder isolation valve 14, the first wheel cylinder pressurization valve 31, the second wheel cylinder pressurization valve 32, the third wheel cylinder pressurization valve 33, and the fourth wheel cylinder pressurization valve 34.

Similarly, in the brake system shown in FIG. 28, normally closed valves include a first booster pump control valve 211, a second booster pump control valve 212, a third booster pump control valve 213, a fourth booster pump control valve 214, the pedal simulation valve 61, the first booster control valve 21, the second booster control valve 22, the first wheel cylinder depressurization valve 41, the second wheel cylinder depressurization valve 42, the third wheel cylinder depressurization valve 43, and the fourth wheel cylinder depressurization valve 44.

Then, the following describes an interface setting and a connection relationship of the brake system provided in Embodiment 22 of this application with reference to FIG. 28. For a connection relationship of the first subsystem of the brake system provided in Embodiment 22, refer to the description of the brake system provided in Embodiment 21. Details are not described herein again.

The following describes a connection relationship of the second subsystem. As shown in FIG. 28, the second subsystem includes a first interface, second interfaces (8f and 8g), and a third interface (8e). The first interface of the second subsystem is separately connected to brake wheel cylinders (3a, 3b, 3c, and 3d) of wheels.

As shown in FIG. 28, the interface 8f is connected to a first end of the third master cylinder isolation valve 13, and a second end of the third master cylinder isolation valve 13 is connected to a first brake pipe 3i. Specifically, the second end of the third master cylinder isolation valve 13 is connected to a first end of the first wheel cylinder pressurization valve 31, a second end of the first wheel cylinder pressurization valve 31 is connected to an interface 4a, the second end of the third master cylinder isolation valve 13 is connected to a first end of the second wheel cylinder pressurization valve 32, and a second end of the second wheel cylinder pressurization valve 32 is connected to an interface 4b.

As shown in FIG. 28, the interface 8g is connected to a first end of the fourth master cylinder isolation valve 14, and a second end of the fourth master cylinder isolation valve 14 is connected to a second brake pipe 3j. Specifically, the second end of the fourth master cylinder isolation valve 14 is connected to a first end of the third wheel cylinder pressurization valve 33, a second end of the third wheel cylinder pressurization valve 33 is connected to an interface 4c, the second end of the fourth master cylinder isolation valve 14 is connected to a first end of the fourth wheel cylinder pressurization valve 34, and a second end of the fourth wheel cylinder pressurization valve 34 is connected to an interface 4d.

As shown in FIG. 28, the pedal feeling simulator 6 is connected to the interface 8g through the pedal simulation valve 61. Both ends of the pedal simulation valve 61 are also connected in parallel to the one-way valve 61v. It should be noted that, when the pedal simulation valve 61 includes a one-way valve function, both ends of the pedal simulation valve 61 do not need to be connected in parallel to the one-way valve.

As shown in FIG. 28, the second master cylinder pressure sensor MCPS may be further disposed between the interface 8g and the fourth master cylinder isolation valve 14.

As shown in FIG. 28, the one-way apply plunger 202 is separately connected to a first end of the first booster control valve 21 and a first end of the second booster control valve 22 through a first booster branch 2i, and a second end of the first booster control valve 21 is connected to the first brake pipe 3i. Specifically, the second end of the first booster control valve 21 is connected to the first end of the first wheel cylinder pressurization valve 31, the second end of the first booster control valve 21 is connected to the first end of the second wheel cylinder pressurization valve 32, and a second end of the second booster control valve 22 is connected to the second brake pipe 3j. Specifically, the second end of the second booster control valve 22 is connected to the first end of the third wheel cylinder pressurization valve 33, and the second end of the second booster control valve 22 is connected to the first end of the fourth wheel cylinder pressurization valve 34.

As shown in FIG. 28, the interface 8e is connected to the one-way apply plunger 202 through the one-way valve 202v. A first end of the one-way valve 202v is connected to the interface 8e, and a second end of the one-way valve 202v is connected to the one-way apply plunger 202. The one-way valve 202v is configured to allow brake fluid to flow from a pipe 202k to the one-way apply plunger 202 through the one-way valve 202v under a specific condition.

As shown in FIG. 28, the brake circuit pressure sensor BCPS is disposed on the first booster branch 2i for obtaining the brake pressure of the brake circuit.

As shown in FIG. 28, the interface 4a is connected to the interface 8e through the first wheel cylinder depressurization valve 41, the interface 4b is connected to the interface 8e through the second wheel cylinder depressurization valve 42, the interface 4c is connected to the interface 8e through the third wheel cylinder depressurization valve 43, and the interface 4d is connected to the interface 8e through the fourth wheel cylinder depressurization valve 44.

The first subsystem and the second subsystem form the brake system. The second subsystem is connected to an interface 8E, an interface 8F, and an interface 8G of the first subsystem through the interface 8e, the interface 8f, and the interface 8g respectively. In addition, the brake system is also connected to the brake wheel cylinder through the interface 4a, the interface 4b, the interface 4c, and the interface 4d.

For the brake system including the first subsystem and the second subsystem, as shown in FIG. 28, for a connection relationship between a master cylinder 1 and the brake wheel cylinders (3a, 3b, 3c, and 3d), refer to the description in Embodiment 21. Details are not described herein again.

As shown in FIG. 28, the one-way apply plunger 202 of a booster 2 is connected to the interface 8e through the one-way valve 202v, and is connected to the brake fluid reservoir 5 through the interface 8E and a pipe 5k. First ends of the wheel cylinder depressurization valves (41, 42, 43, and 44) are separately connected to the interface 8e, and are connected to the brake fluid reservoir 5 through the interface 8E and the pipe 5k.

The foregoing describes the system composition, connection relationship, integration manner, and interface setting of the brake system provided in Embodiment 22. The following describes a control relationship of the brake system provided in Embodiment 22. In Embodiment 22, objects controlled by each of the first control unit 91 and the second control unit 92 are as follows:
(1) Objects controlled by the first control unit 91 include the first master cylinder isolation valve 11, the second master cylinder isolation valve 12, the test simulation valve 51, the first booster pump control valve 211, the second booster pump control valve 212, the third booster pump control valve 213, and the fourth booster pump control valve 214.

The first control unit 91 receives signals of a first master cylinder pressure sensor MCPS, a pedal travel sensor PTS, and a reservoir level sensor RLS.

It should be noted that when the signal of the reservoir level sensor RLS indicates that a fluid level is low, an ECU 1 warns a vehicle, and control functions of the ECU 1 and an ECU 2 are degraded, for example, a target value of pressurization is limited.

(2) Objects controlled by the second control unit 92 include the pedal simulation valve 61, the booster drive motor 201, the third master cylinder isolation valve 13, the fourth master cylinder isolation valve 14, the first booster control valve 21, the second booster control valve 22, the first wheel cylinder pressurization valve 31, the second wheel cylinder pressurization valve 32, the third wheel cylinder pressurization valve 33, the fourth wheel cylinder pressurization valve 34, the first wheel cylinder depressurization valve 41, the second wheel cylinder depressurization valve 42, the third wheel cylinder depressurization valve 43, and the fourth wheel cylinder depressurization valve 44.

The second control unit 92 receives signals of the second master cylinder pressure sensor MCPS, the brake circuit pressure sensor BCPS, and a motor position sensor MPS.

In a possible implementation, the pedal travel sensor PTS may be independently powered, and separately provides a pedal travel signal to the ECU 1 and the ECU 2.

In a possible implementation, the brake system includes a first controller and a second controller. The first controller includes the first control unit 91, the second controller includes the second control unit 92, and the first controller and the second controller further include at least various solenoid valve drives and various signal processing and control output interfaces. The second controller further includes a signal processing and control output interface related to a motor drive. The controller may further receive measurement or detection signals of various sensors, such as an environmental condition, a driver input, and a brake system status, and controls the braking characteristics of the brake system through computing and determining.

The foregoing describes the system composition, connection relationship, integration manner, interface setting, and control relationship of the brake system provided in Embodiment 22 with reference to FIG. 28. The following describes a working mode of the brake system provided in Embodiment 22 with reference to FIG. 28.

It should be noted that, in the specification of this application, the first control unit 91 is also referred to as the ECU 1 in some embodiments, and the second control unit 92 is also referred to as the ECU 2 in some embodiments.

The brake system provided in Embodiment 22 of this application includes at least four working modes: (1) The ECU 1 and the ECU 2 work together. (2) The ECU 1 works independently. (3) The ECU 2 works independently. (4) Mechanical backup mode.

Working mode 1: a conventional braking mode, where the ECU 1 and the ECU 2 work together

When the brake system has no fault, the ECU 1 and the ECU 2 work together. In a possible application scenario, when a driver steps a brake pedal, a master cylinder push rod 1k pushes a master cylinder piston, and pressure in the master cylinder increases. The ECU 1 controls the first master cylinder isolation valve 11 and the second master cylinder isolation valve 12 to be connected, and controls the third master cylinder isolation valve 13 and the fourth master cylinder isolation valve 14 to be disconnected. A second main cavity 1j of the master cylinder 1 is connected to the pedal feeling simulator 6, and the pedal feeling simulator works to generate a pedal feeling. The ECU 1 controls the first booster pump control valve 211, the second booster pump control valve 212, the third booster pump control valve 213, and the fourth booster pump control valve 214 to be disconnected. At this time, the first booster pump 203 and the second booster pump 204 do not work. The ECU 1 also receives the signal of the pedal travel sensor PTS and the signal of the first master cylinder pressure sensor MCPS, and transmits the received signals to the ECU 2.

The ECU 2 determines a braking intention of the driver based on the signal of the pedal travel sensor PTS and the signal of the master cylinder pressure sensor MCPS that are transmitted by the ECU 1.

Specifically, when a brake requirement is recognized, a conventional pressure build-up process of the brake system according to Embodiment 22 may be described as follows: The ECU 2 controls the booster drive motor 201 to push a piston of the one-way apply plunger 202 to move rightward, and the second control unit 92 controls the first booster control valve 21 and the second booster control valve 22 to open. One part of the fluid in a first booster cavity 202i passes through the first booster control valve 21 and the second booster control valve 22, and flows into the brake wheel cylinders (3a, 3b, 3c, and 3d) through the wheel cylinder pressurization valves (31, 32, 33, 34) respectively, to implement wheel braking.

Further, the ECU 2 determines a position of the piston of the dual apply plunger 202 based on the signal of the motor position sensor MPS. If the position of the piston reaches a rightmost side of the dual apply plunger 202, and the brake wheel cylinder still needs to be pressurized, the ECU 2 controls the first booster control valve 21 and the second booster control valve 22 to be in a closed state, and controls the booster drive motor 201 to reverse. The piston of the one-way apply plunger 202 moves leftward, and the brake fluid flows from the brake fluid reservoir 5 to the one-way apply plunger 202 through the one-way valve 202v. It should be noted that when the piston of the one-way apply plunger moves leftward, that is, when the piston of the apply plunger returns, the brake circuit cannot continue to be pressurized in the process, and pressurization can only be continued when the piston of the apply plunger moves rightward again.

It should be noted that, when the one-way apply plunger is selected for the booster 2, a quantity of control valves of the brake system is reduced, overall costs are reduced, and a structure is simpler and more reliable.

When brake pressure of a wheel cylinder is large, a conventional depressurization process of the brake system provided in Embodiment 22 may be described as follows: For example, when pressure of a brake wheel cylinder 3a is large, the wheel cylinder pressurization valve 31 corresponding to the brake wheel cylinder 3a is disconnected, and the corresponding wheel cylinder depressurization valve 41 is connected, so that the brake fluid in the wheel cylinder flows into the brake fluid reservoir 5 through the wheel cylinder depressurization valve 41, to implement depressurization.

Accordingly, the ECU 2 calculates control signals of the booster drive motor 201 and solenoid valves in the second subsystem based on the sensor signals. The ECU 2 controls statuses of the first booster control valve 21 and the second booster control valve 22, and controls the booster drive motor 201 to push a booster piston to build up pressure. The ECU 2 controls pressure of each of the brake wheel cylinders (3a, 3b, 3c, and 3d) by controlling connection and disconnection of the wheel cylinder pressurization valves (31, 32, 33, 34) and the wheel cylinder depressurization valves (41, 42, 43, and 44), to implement functions such as an ABS, a TCS, ESC, a BBF, AEB, and ACC.

### Working mode 2: a redundant braking mode, where the ECU 1 works independently

For this working mode, refer to the description of Embodiment 21 or another embodiment. Details are not described herein again.

### Working mode 3: a redundant braking mode, where the ECU 2 works independently

When the ECU 1 is faulty, the ECU 2 works independently. The ECU 2 obtains a brake pressure signal based on the second master cylinder pressure sensor MCPS, and determines a driving intention based on the signal. The ECU 2 calculates the control signals of the booster drive motor 201 and the solenoid valves in the second subsystem.

A principle of working independently by the ECU 2 is similar to that of the working mode 1 in which the ECU 1 and the ECU 2 work together. Details are not described herein again. In conclusion, the ECU 2 calculates the control signals of the booster drive motor 201 and solenoid valves in the second subsystem based on the sensor signals. The ECU 2 controls the statuses of the first booster control valve 21 and the second booster control valve 22, and controls the booster drive motor 201 to push the booster piston to build up pressure. The ECU 2 controls pressure of each of the brake wheel cylinders (3a, 3b, 3c, and 3d) by controlling connection and disconnection of the wheel cylinder pressurization valves (31, 32, 33, 34) and the wheel cylinder depressurization valves (41, 42, 43, and 44), to implement functions such as an ABS, a TCS, ESC, a BBF, AEB, and ACC.

### Working mode 4: a redundant braking mode, mechanical backup

In addition, when both the ECU 1 and the ECU 2 fail, the brake system provided in this embodiment can perform mechanical backup. When the driver steps the brake pedal, the brake fluid may flow from the master cylinder 1 to a first wheel cylinder 3a and a second wheel cylinder 3b through the first master cylinder isolation valve 11 and the third master cylinder isolation valve 13, or may flow from the master cylinder 1 to a third wheel cylinder 3c and a fourth wheel cylinder 3d through the second master cylinder isolation valve 12 and the fourth master cylinder isolation valve 14, to implement braking.

### Embodiment 23

FIG. 29 shows another brake system according to Embodiment 23 of this application.

As shown in FIG. 29, in the brake system provided in Embodiment 23, for a system composition, a connection relationship, a control relationship, and another part that is not mentioned of a first subsystem, refer to Embodiment 21. Details are not described herein again. A difference between a second subsystem in the brake system provided in Embodiment 23 and that in the brake system provided in Embodiment 21 is specifically described as follows.

As shown in FIG. 29, the second subsystem includes a second control unit 92, a third master cylinder isolation valve 13, a fourth master cylinder isolation valve 14, a second master cylinder pressure sensor MCPS, a pedal feeling simulator 6, a pedal simulation valve 61, a booster drive motor 201, a dual apply plunger 202, a booster one-way valve 202v, a first booster control valve 21, a second booster control valve 22, a fifth booster control valve 25, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, a fourth wheel cylinder depressurization valve 44, and a brake circuit pressure sensor BCPS.

When the pedal simulation valve 61, the first wheel cylinder pressurization valve 31, the second wheel cylinder pressurization valve 32, the third wheel cylinder pressurization valve 33, and the fourth wheel cylinder pressurization valve 34 in the second subsystem do not include a one-way valve, the second subsystem further includes a sixth one-way valve 61v, a first one-way valve 31v, a second one-way valve 32v, a third one-way valve 33v, and a fourth one-way valve 34v.

The second subsystem can also be integrated with a filter, or a control valve with a filter is selected to implement an impurity filtering function.

It should be noted that a default state of each control valve in the brake system is shown in FIG. 29. For example, a first master cylinder isolation valve 11, a second master cylinder isolation valve 12, the third master cylinder isolation valve 13, and the fourth master cylinder isolation valve 14 are normally open valves. The normally open valve is in an initial state in which pipes at both ends of a control valve are connected. When the normally open valve is controlled to be powered on, the normally open valve switches to be in a state in which the pipes at both ends of the control valve are disconnected. In other words, when the normally open valve is powered on and disconnected, fluid in the pipe cannot flow from one end of the normally open valve to the other end of the normally open valve through the normally open valve.

Similarly, in the brake system shown in FIG. 29, the normally open valves may include a test simulation valve 51, the first master cylinder isolation valve 11, the second master cylinder isolation valve 12, the third master cylinder isolation valve 13, the fourth master cylinder isolation valve 14, the first wheel cylinder pressurization valve 31, the second wheel cylinder pressurization valve 32, the third wheel cylinder pressurization valve 33, and the fourth wheel cylinder pressurization valve 34.

Similarly, in the brake system shown in FIG. 29, normally closed valves include a first booster pump control valve 211, a second booster pump control valve 212, a third booster pump control valve 213, a fourth booster pump control valve 214, the pedal simulation valve 61, the first booster control valve 21, the second booster control valve 22, the fifth booster control valve 25, the first wheel cylinder depressurization valve 41, the second wheel cylinder depressurization valve 42, the third wheel cylinder depressurization valve 43, and the fourth wheel cylinder depressurization valve 44.

The following describes a connection relationship of the brake system provided in Embodiment 23.

As shown in FIG. 29, for a description of the first subsystem provided in Embodiment 23, refer to Embodiment 21 or Embodiment 22.

As shown in FIG. 29, in the second subsystem provided in Embodiment 23, a booster 2 uses the dual apply plunger 202. A first booster cavity 202i is connected to an interface 8e through the booster one-way valve 202v. The booster one-way valve 202v is configured to allow brake fluid to flow from a pipe 202k to the first booster cavity 202i through the booster one-way valve 202v under a specific condition.

It should be noted that, in FIG. 29, a connection line between a second booster cavity 202j of the dual apply plunger 202 and a brake fluid reservoir 5 only indicates that fast depressurization can be implemented when a piston of the dual apply plunger returns to the leftmost, and does not indicate that the pipe is used for fluid replenishment. Similarly, this description is also applicable to other embodiments provided in the specification of this application.

As shown in FIG. 29, in the second subsystem provided in Embodiment 23, the first booster cavity 202i of the booster 2 is connected to a first end of the fifth booster control valve 25. A second end of the fifth booster control valve 25 is connected to the second booster cavity 202j, and the second end of the fifth booster control valve 25 is separately connected to a first end of the first booster control valve 21 and a first end of the second booster control valve 22. A second end of the first booster control valve 21 is connected to a first brake pipe 3i. Specifically, the second end of the first booster control valve 21 is connected to a first end of the first wheel cylinder pressurization valve 31 and a first end of the second wheel cylinder pressurization valve 32. A second end of the first wheel cylinder pressurization valve 31 is connected to an interface 4a, and is connected to a first wheel cylinder 3a through the interface 4a. A second end of the second wheel cylinder pressurization valve 32 is connected to an interface 4b, and is connected to a second wheel cylinder 3b through the interface 4b. Similarly, a second end of the second booster control valve 22 is connected to a second brake pipe 3j. Specifically, the second end of the second booster control valve 22 is separately connected to a first end of the third wheel cylinder pressurization valve 33 and a first end of the fourth wheel cylinder pressurization valve 34. A second end of the third wheel cylinder pressurization valve 33 is connected to an interface 4c, and is connected to a third wheel cylinder 3c through the interface 4c. A second end of the fourth wheel cylinder pressurization valve 34 is connected to an interface 4d, and is connected to a fourth wheel cylinder 3d through the interface 4d.

In the brake system shown in FIG. 29, for other system components or connection relationships that are not mentioned, refer to Embodiment 21. Details are not described herein again.

As shown in FIG. 29, for the brake system provided in Embodiment 23 of this application, an ECU 2 determines, based on a signal of a motor position sensor MPS, a position of a piston of the dual apply plunger 202. If the position of the piston reaches a rightmost side of the dual apply plunger 202, and a brake wheel cylinder still needs to be pressurized, the ECU 2 controls the fifth booster control valve 25 to be in a disconnected state, and controls the booster drive motor 201 to reverse. The piston of the dual apply plunger moves leftward, and the brake fluid in the second booster cavity 202j flows into the brake wheel cylinder through the first booster control valve 21, the second booster control valve 22, and wheel cylinder pressurization valves (31, 32, 33, 34), to implement wheel pressurization.

Compared with the brake system provided in Embodiment 21, the brake system provided in Embodiment 23 can use fewer solenoid valves, to reduce costs and simplify the brake system.

In conclusion, the brake systems provided in Embodiment 1 to Embodiment 23 of this application have advantages of high redundancy, high integration, small volume, flexible module division, low costs, high reliability, and high security, and can meet requirements of integrated braking functions such as an ABS, a BBF, a TCS, ESC, AEB, and ACC of a vehicle.

### Embodiment 24

FIG. 30 shows a brake system according to Embodiment 24 of this application. Compared with those in the brake system provided in another embodiment, as shown in FIG. 30, in the brake system provided in Embodiment 24, a master cylinder 1 includes only one brake main cavity, and a first subsystem includes only one redundant booster pipe. This application neither limits a quantity of main cavities in the master cylinder of the brake system according to the concept of the present invention, nor limits a quantity of redundant booster pipes in the first subsystem.

It may be understood that the master cylinder 1 may include one, two, or more brake main cavities. It may also be understood that the first subsystem may include one, two, or more booster pumps, and the first subsystem may include one, two, or more redundant booster pipes.

### Embodiment 25

FIG. 31 shows a brake system according to Embodiment 25 of this application. The brake system provided in Embodiment 25 is different from that provided in Embodiment 23 in redundancy design of a control unit. It should be noted that, in some embodiments of this application, a first control unit 91 is also referred to as an ECU 1, a second control unit 92 is also referred to as an ECU 2, and a third control unit 93 is also referred to as an ECU 3. It should be noted that, in embodiments of this application the control unit is not limited to the ECU, and the control unit may be of another type, for example, may be a domain controller, or may be a centralized controller.

As shown in FIG. 31, on the basis of the brake system provided in Embodiment 23, in the brake system provided in Embodiment 25, a second subsystem Module 2 includes the second control unit 92 and the third control unit 93. In addition, the brake system provided in Embodiment 25 further includes the first control unit 91. For the brake system provided in Embodiment 25, objects controlled by each of the first control unit 91, the second control unit 92, and the third control unit 93 are as follows:
(1) Objects controlled by the first control unit 91 include a first master cylinder isolation valve 11, a second master cylinder isolation valve 12, a test simulation valve 51, a first booster pump control valve 211, a second booster pump control valve 212, a third booster pump control valve 213, and a fourth booster pump control valve 214.

The first control unit 91 receives signals of a first master cylinder pressure sensor MCPS, a pedal travel sensor PTS, and a reservoir level sensor RLS.

It should be noted that when the signal of the reservoir level sensor RLS indicates that a fluid level is low, the ECU 1 warns a vehicle, and control functions of the ECU 1 and the ECU 2 are degraded, for example, a target value of pressurization is limited.

(2) Objects controlled by the second control unit 92 include a booster drive motor 201, a pedal simulation valve 61, a third master cylinder isolation valve 13, a fourth master cylinder isolation valve 14, a first booster control valve 21, a second booster control valve 22, a fifth booster control valve 25, a first wheel cylinder pressurization valve 31, a second wheel cylinder pressurization valve 32, a third wheel cylinder pressurization valve 33, a fourth wheel cylinder pressurization valve 34, a first wheel cylinder depressurization valve 41, a second wheel cylinder depressurization valve 42, a third wheel cylinder depressurization valve 43, and a fourth wheel cylinder depressurization valve 44.

(3) Objects controlled by the third control unit 93 include the booster drive motor 201, the first wheel cylinder pressurization valve 31, the second wheel cylinder pressurization valve 32, the third wheel cylinder pressurization valve 33, the fourth wheel cylinder pressurization valve 34, the first wheel cylinder depressurization valve 41, the second wheel cylinder depressurization valve 42, the third wheel cylinder depressurization valve 43, and the fourth wheel cylinder depressurization valve 44.

It should be noted that, in the brake system provided in Embodiment 25, the second control unit 92 and the third control unit jointly control the following objects: the booster drive motor 201, the first wheel cylinder pressurization valve 31, the second wheel cylinder pressurization valve 32, the third wheel cylinder pressurization valve 33, the fourth wheel cylinder pressurization valve 34, the first wheel cylinder depressurization valve 41, the second wheel cylinder depressurization valve 42, the third wheel cylinder depressurization valve 43, and the fourth wheel cylinder depressurization valve 44.

In a possible implementation, the second control unit 92 and the third control unit 93 receive signals of a second master cylinder pressure sensor MCPS, a brake circuit pressure sensor BCPS, and a motor position sensor MPS.

In a possible implementation, the pedal travel sensor PTS may be independently powered, and separately provides a pedal travel signal to the ECU 1, the ECU 2, and the ECU 3.

In a possible implementation, the brake system includes a first controller and a second controller. The first controller includes the first control unit 91, the second controller includes the second control unit 92 and the third control unit 93, and the first controller and the second controller further include at least various solenoid valve drives and various signal processing and control output interfaces. The second controller further includes a signal processing and control output interface related to a motor drive. The controller may further receive measurement or detection signals of various sensors, such as an environmental condition, a driver input, and a brake system status, and controls the braking characteristics of the brake system through computing and determining.

The following describes different working modes of the brake system provided in Embodiment 25 of this application.

The brake system provided in Embodiment 25 of this application includes at least four working modes: (1) The ECU 1, the ECU 2, and the ECU 3 work together. (2) The ECU 1 works independently. (3) The ECU 2 works independently. (4) The ECU 3 works independently. (5) Mechanical backup mode.

Working mode 1: a conventional braking mode, where the ECU 1, the ECU 2, and the ECU 3 work together.

When the brake system has no fault, the ECU 1, the ECU 2, and the ECU 3 work together. In a possible application scenario, when a driver steps a brake pedal, a master cylinder push rod 1k pushes a master cylinder piston, and pressure in the master cylinder increases. The ECU 1 controls the first master cylinder isolation valve 11 and the second master cylinder isolation valve 12 to be connected, and controls the third master cylinder isolation valve 13 and the fourth master cylinder isolation valve 14 to be disconnected. A second main cavity 1j of the master cylinder 1 is connected to the pedal feeling simulator 6, and the pedal feeling simulator works to generate a pedal feeling. The ECU 1 controls the first booster pump control valve 211, the second booster pump control valve 212, the third booster pump control valve 213, and the fourth booster pump control valve 214 to be disconnected. At this time, a first booster pump 203 and a second booster pump 204 do not work. The ECU 1 also receives the signal of the pedal travel sensor PTS and the signal of the first master cylinder pressure sensor MCPS, and transmits the received signals to the ECU 2 and/or the ECU 3.

It should be noted that the ECU 2 and the ECU 3 may communicate with each other.

The ECU 2 and/or the ECU 3 determine/determines a braking intention of the driver based on the signal of the pedal travel sensor PTS and the signal of the master cylinder pressure sensor MCPS that are transmitted by the ECU 1.

Specifically, when a brake requirement is recognized, a conventional pressure build-up process of the brake system according to Embodiment 25 may be described as follows: The ECU 2 controls the booster drive motor 201 to push a piston of a one-way apply plunger 202 to move rightward, and the ECU 2 controls the first booster control valve 21, the second booster control valve 22, and the fifth booster control valve 25 to open. One part of the fluid in a first booster cavity 202i passes through the first booster control valve 21 and the second booster control valve 22, and flows into brake wheel cylinders (3a, 3b, 3c, and 3d) through the wheel cylinder pressurization valves (31, 32, 33, 34) respectively, to implement wheel braking.

Further, the ECU 2 determines a position of the piston of the dual apply plunger 202 based on the signal of the motor position sensor MPS. If the position of the piston reaches a rightmost side of the dual apply plunger 202, and the brake wheel cylinder still needs to be pressurized, the ECU 2 controls the fifth booster control valve 25 to be in a closed state, keeps the first booster control valve 21 and the second booster control valve 22 connected, and controls the booster drive motor 201 to reverse. The piston of the one-way apply plunger 202 moves leftward, to push brake fluid to flow from a second booster cavity 202j to the first booster control valve 21 and the second booster control valve 22.

When brake pressure of a wheel cylinder is large, a conventional depressurization process of the brake system provided in Embodiment 25 may be described as follows: For example, when pressure of a brake wheel cylinder 3a is large, the wheel cylinder pressurization valve 31 corresponding to the brake wheel cylinder 3a is disconnected, and the corresponding wheel cylinder depressurization valve 41 is connected, so that the brake fluid in the wheel cylinder flows into a brake fluid reservoir 5 through the wheel cylinder depressurization valve 41, to implement depressurization.

Accordingly, the ECU 2 calculates control signals of the booster drive motor 201 and solenoid valves in the second subsystem based on the sensor signals. The ECU 2 controls statuses of the first booster control valve 21, the second booster control valve 22, and the fifth booster control valve 25, and controls the booster drive motor 201 to push the booster piston to build up pressure. The ECU 2 controls pressure of each of the brake wheel cylinders (3a, 3b, 3c, and 3d) by controlling connection and disconnection of the wheel cylinder pressurization valves (31, 32, 33, 34) and the wheel cylinder depressurization valves (41, 42, 43, and 44), to implement functions such as an ABS, a TCS, ESC, a BBF, AEB, and ACC.

### Working mode 2: a redundant braking mode, where the ECU 1 works independently

For this working mode, refer to the description of Embodiment 21 or another embodiment. Details are not described herein again.

### Working mode 3: a redundant braking mode, where the ECU 2 works independently

When the ECU 1 is faulty, the ECU 2 works independently. The ECU 2 obtains a brake pressure signal based on the second master cylinder pressure sensor MCPS, and determines a driving intention based on the signal. The ECU 2 calculates the control signals of the booster drive motor 201 and the solenoid valves in the second subsystem.

A principle of working independently by the ECU 2 is similar to that of the working mode 1 in which the ECU 1 and the ECU 2 work together. Details are not described herein again. In conclusion, the ECU 2 calculates the control signals of the booster drive motor 201 and solenoid valves in the second subsystem based on the sensor signals. The ECU 2 controls the statuses of the first booster control valve 21 and the second booster control valve 22, and controls the booster drive motor 201 to push the booster piston to build up pressure. The ECU 2 controls pressure of each of the brake wheel cylinders (3a, 3b, 3c, and 3d) by controlling connection and disconnection of the wheel cylinder pressurization valves (31, 32, 33, 34) and the wheel cylinder depressurization valves (41, 42, 43, and 44), to implement functions such as an ABS, a TCS, ESC, a BBF, AEB, and ACC.

### Working mode 4: a redundant braking mode, where the ECU 3 works independently

In the brake system provided in Embodiment 25, the ECU 3 performs redundant control on the wheel cylinder pressurization valve and the wheel cylinder depressurization valve. When the ECU 2 fails, the ECU 3 cooperates with the ECU 1 in Module 1 to implement independent control of wheel cylinder pressure of each wheel, to implement most of the brake control functions.

### Working mode 5: a redundant braking mode, mechanical backup

In addition, when all of the ECU 1, the ECU 2, and the ECU 3 fail, the brake system provided in Embodiment 25 can perform mechanical backup. When the driver steps the brake pedal, the brake fluid may flow from the master cylinder 1 to a first wheel cylinder 3a and a second wheel cylinder 3b through the first master cylinder isolation valve 11 and the third master cylinder isolation valve 13, or may flow from the master cylinder 1 to a third wheel cylinder 3c and a fourth wheel cylinder 3d through the second master cylinder isolation valve 12 and the fourth master cylinder isolation valve 14, to implement braking.

### Embodiment 26

FIG. 32 shows a brake system according to Embodiment 26 of this application.

As shown in FIG. 32, in the brake system provided in Embodiment 26, Module 1 does not include an ECU, a PTS sensor and a solenoid valve are connected to Module 2 through a harness, and an ECU 2 in Module 2 processes a sensor signal and controls the solenoid valve. The solution is simple and has low costs, and is suitable for a basic-configuration vehicle.

### Embodiment 27

FIG. 33 shows a brake system according to Embodiment 27 of this application.

As shown in FIG. 33, in the brake system provided in Embodiment 27, an ECU 3 performs redundant control on all control valves, and an ECU 2 and the ECU 3 jointly control a booster drive motor 201. For example, in a possible implementation, the ECU 2 may control one set of winding of the booster drive motor 201, and the ECU 3 controls another set of winding of the booster drive motor 201. When the ECU 2 fails, the ECU 3 implements the same function as the ECU 2, and implements full function backup. The PTS sensor and TSV in a first subsystem Module 1 are connected to the ECU 2 and/or the ECU 3 through a harness, and functions are more comprehensive.

In addition, it should be noted that the brake system provided in embodiments of this application includes a plurality of first subsystems and a plurality of second subsystems. On a premise that an interface correspondence is met, the first subsystem and the second subsystem provided in different embodiments may be recombined to form a new brake system. This is not limited in this application. For example, FIG. 13 and FIG. 22 to FIG. 26 respectively provide six different first subsystems, and FIG. 13 and FIG. 17 to FIG. 21 respectively provide six different second subsystems. Any one of the foregoing six first subsystems may be correspondingly connected to an interface 8e, an interface 8f, and an interface 8g of any one of the foregoing six second subsystems through an interface 8E, an interface 8F, and an interface 8G of the foregoing six first subsystems, to form a new brake system. For another example, the second subsystems provided in FIG. 27 and FIG. 28 in this application may be alternatively replaced with any one of the following second subsystems: second subsystems formed by adding the pedal feeling simulator and the master cylinder pressure sensor shown in FIG. 27 to the six second subsystems respectively provided in FIG. 13 and FIG. 17 to FIG. 21. For another example, the second subsystem of the brake system shown in FIG. 29 may also be combined with another first subsystem provided in an embodiment of this application to form a new brake system.

Therefore, the brake system provided in the specification of this application can adjust features such as a redundancy degree, costs, structural complexity, and system reliability of the brake system through flexible combination, to meet requirements of different levels of vehicle types and application scenarios.

The foregoing descriptions are merely specific implementations of this application, but are not intended to limit the protection scope of this application. Any variation or replacement readily figured out by a person skilled in the art based on the disclosure of this application shall fall within the protection scope of this application.

## Claims

1. A brake system, wherein the brake system comprises a master cylinder (1), a first booster, a second booster, and at least one first interface;
the first booster is connected to the at least one first interface through at least one first control valve (31, 32, 33, 34); and
the master cylinder (1) comprises a first main cavity (1i), the first main cavity (1i) is connected to a second control valve (13) through the second booster, and the second control valve (13) is connected to the at least one first interface through the at least one first control valve (31, 32, 33, 34).

2. The brake system according to claim 1, wherein the brake system further comprises a brake fluid reservoir (5), and the at least one first interface is connected to the brake fluid reservoir (5) through at least one third control valve (41, 42, 43, and 44).

3. The brake system according to claim 2, wherein the second booster comprises a fourth control valve (11), and the first main cavity (1i) is connected to the at least one first interface sequentially through the fourth control valve (11), the second control valve (13), and the at least one first control valve (31, 32, 33, 34).

4. The brake system according to claim 3, wherein the second booster further comprises a first booster pump (203), and an output end of the first booster pump (203) is connected to a pipe between the fourth control valve (11) and the second control valve (13), and is connected to the at least one first interface sequentially through the second control valve (13) and the at least one first control valve (31, 32, 33, 34).

5. The brake system according to claim 4, wherein an input end of the first booster pump (203) is connected to the brake fluid reservoir (5).

6. The brake system according to claim 5, wherein the second booster further comprises a first one-way valve (203v), the brake fluid reservoir (5) is connected to a first end of the first one-way valve (203v), a second end of the first one-way valve (203v) is connected to the input end of the first booster pump (203), and the first one-way valve (203v) is configured to allow brake fluid to flow from the brake fluid reservoir (5) to the input end of the first booster pump (203) through the first one-way valve (203v).

7. The brake system according to claim 6, wherein the second booster further comprises a fifth control valve (211), and the brake fluid reservoir (5) is connected to the at least one first interface sequentially through the fifth control valve (211), the second control valve (13), and the at least one first control valve (31, 32, 33, 34).

8. The brake system according to claim 7, wherein the second booster further comprises a sixth control valve (213), a first end of the sixth control valve (213) is connected to the first main cavity (1i), and a second end of the sixth control valve (213) is connected to a pipe between the first one-way valve (203v) and the first booster pump (203), and is connected to the input end of the first booster pump (203).

9. The brake system according to claim 8, wherein the master cylinder (1) further comprises a second main cavity (1j), and the second main cavity (1j) is connected to the at least one first interface sequentially through a seventh control valve (12), an eighth control valve (14), and the at least one first control valve (31, 32, 33, 34);
the second booster further comprises a second booster pump (204), a ninth control valve (212), a second one-way valve (204v), and a tenth control valve (214);
the brake fluid reservoir (5) is connected to a first end of the second one-way valve (204v), a second end of the second one-way valve (204v) is connected to an input end of the second booster pump (204), the second one-way valve (204v) is configured to allow the brake fluid to flow from the brake fluid reservoir (5) to the input end of the second booster pump (204) through the second one-way valve (204v), and an output end of the second booster pump (204) is connected to the at least one first interface sequentially through the eighth control valve (14) and the at least one first control valve (31, 32, 33, 34);
the brake fluid reservoir (5) is connected to the at least one first interface sequentially through the ninth control valve (212), the eighth control valve (14), and the at least one first control valve (31, 32, 33, 34); and
a first end of the tenth control valve (214) is connected to the second main cavity (1j), and a second end of the tenth control valve (214) is connected to a pipe between the second one-way valve (204v) and the second booster pump (204), and is connected to the input end of the second booster pump (204).

10. The brake system according to claim 6, wherein the second booster further comprises a fifth control valve (211), a first end of the fifth control valve (211) is connected to a pipe between the output end of the first booster pump (203) and the second control valve (13), and a second end of the fifth control valve (211) is connected to a pipe between the input end of the first booster pump (203) and the second end of the first one-way valve (203v).

11. The brake system according to claim 10, wherein the second booster further comprises a sixth control valve (213), and the brake fluid reservoir (5) is connected to the at least one first interface sequentially through the sixth control valve (213), the second control valve (13), and the at least one first control valve (31, 32, 33, 34).

12. The brake system according to claim 5, wherein the second booster further comprises a fifth control valve (211) and a sixth control valve (213), and the brake fluid reservoir (5) is further connected to the at least one first interface sequentially through the sixth control valve (213), the fifth control valve (211), the second control valve (13), and the at least one first control valve (31, 32, 33, 34).

13. The brake system according to claim 12, wherein the brake fluid reservoir (5) is also connected to the input end of the first booster pump (203) through the sixth control valve (213).

14. The brake system according to claim 13, wherein the master cylinder (1) further comprises a second main cavity (1j), and the second main cavity (1j) is connected to the at least one first interface sequentially through a seventh control valve (12), an eighth control valve (14), and the at least one first control valve (31, 32, 33, 34); and
the second booster further comprises a second booster pump (204) and a ninth control valve (212), the brake fluid reservoir (5) is connected to an input end of the second booster pump (204) through the sixth control valve (213), and the brake fluid reservoir (5) is connected to the at least one first interface sequentially through the sixth control valve (213), the ninth control valve (212), the eighth control valve (14), and the at least one first control valve (31, 32, 33, 34).

15. The brake system according to claim 4, wherein the second booster further comprises a sixth control valve (213), a first end of the sixth control valve (213) is connected to a pipe between the fourth control valve (11) and the first main cavity (1i), and a second end of the sixth control valve (213) is connected to an input end of the first booster pump (203).

16. The brake system according to claim 2, wherein the first booster comprises a first booster cavity (202i), the first booster cavity (202i) is separately connected to a first end of a first booster control valve (21) and a first end of a second booster control valve (22), a second end of the first booster control valve (21) is connected to the at least one first interface through the at least one first control valve (31, 32, 33, 34), and a second end of the second booster control valve (22) is connected to the at least one first interface through the at least one first control valve (31, 32, 33, 34).

17. The brake system according to claim 16, wherein the first booster further comprises a third booster control valve (23) and a fourth booster control valve (24), the first booster cavity (202i) is separately connected to a first end of the third booster control valve (23) and a first end of the fourth booster control valve (24), a second end of the third booster control valve (23) is connected to the at least one first interface through the at least one first control valve (31, 32, 33, 34), and a second end of the fourth booster control valve (24) is connected to the at least one first interface through the at least one first control valve (31, 32, 33, 34).

18. The brake system according to claim 16, wherein the first booster further comprises a second booster cavity (202j), a third booster control valve (23), and a fourth booster control valve (24), the second booster cavity (202j) is separately connected to a first end of the third booster control valve (23) and a first end of the fourth booster control valve (24), a second end of the third booster control valve (23) is connected to the at least one first interface through the at least one first control valve (31, 32, 33, 34), and a second end of the fourth booster control valve (24) is connected to the at least one first interface through the at least one first control valve (31, 32, 33, 34).

19. The brake system according to claim 16, wherein the first booster further comprises a second booster cavity (202j) and a fifth booster control valve (25), the first booster cavity (202i) is connected to a first end of the fifth booster control valve (25), and a second end of the fifth booster control valve (25) is separately connected to the first end of the first booster control valve (21) and the first end of the second booster control valve (22);
the second booster cavity (202j) is separately connected to the first end of the first booster control valve (21) and the first end of the second booster control valve (22); and
the second end of the first booster control valve (21) is connected to the at least one first interface through the at least one first control valve (31, 32, 33, 34), and the second end of the second booster control valve (22) is connected to the at least one first interface through the at least one first control valve (31, 32, 33, 34).

20. The brake system according to claim 17, wherein the brake system comprises a first control unit (92) and a second control unit (93), the second control valve (13) is controlled by both the first control unit (92) and the second control unit (93), the first booster control valve (21) and the second booster control valve (22) are controlled by the first control unit (92), and the third booster control valve (23) and the fourth booster control valve (24) are controlled by the second control unit (93).

21. The brake system according to claim 18, wherein the brake system comprises a first control unit (92) and a second control unit (93), and the second control valve (13), the first booster control valve (21), the second booster control valve (22), the third booster control valve (23), and the fourth booster control valve (24) are controlled by both the first control unit (92) and the second control unit (93).

22. The brake system according to claim 19, wherein the brake system comprises a first control unit (92) and a second control unit (93), the first booster control valve (21), the second booster control valve (22), the fifth booster control valve (25), and the second control valve (13) are controlled by the first control unit (92), and the at least one first control valve (31, 32, 33, 34) and the at least one third control valve (41, 42, 43, and 44) are controlled by both the first control unit (92) and the second control unit (93).

23. The brake system according to any one of claims 20 to 22, wherein the first booster is controlled by both the first control unit (92) and the second control unit (93).

24. The brake system according to any one of claims 2 to 23, wherein the brake system comprises a first subsystem and a second subsystem;
the first subsystem comprises the master cylinder (1), the brake fluid reservoir (5), the second booster, at least one second interface (8F and 8G), and a third interface (8E), and
the master cylinder (1) is connected to the brake fluid reservoir (5), the master cylinder (1) is connected to the at least one second interface (8F and 8G) through the second booster, and the brake fluid reservoir (5) is connected to the third interface (8E); and
the second subsystem comprises the first booster, at least one second control valve (13 and 14), the at least one first control valve (31, 32, 33, 34), the at least one third control valve (41, 42, 43, and 44), at least one fourth interface (8f and 8g), a fifth interface (8e), and the at least one first interface,
the at least one fourth interface (8f and 8g) is connected to a first end of the at least one first control valve (31, 32, 33, 34) through the at least one second control valve (13 and 14), the fifth interface (8e) is connected to the first booster (2), the first booster (2) is connected to the first end of the at least one first control valve (31, 32, 33, 34), a second end of the at least one first control valve (31, 32, 33, 34) is connected to the at least one first interface, and the at least one first interface is connected to at least one brake wheel cylinder,
the at least one first interface is connected to the fifth interface (8e) through the at least one third control valve (41, 42, 43, and 44), and
the at least one second interface (8F and 8G) is connected to the at least one fourth interface (8f and 8g) in a one-to-one correspondence, and the third interface (8E) is connected to the fifth interface (8e).

25. A hydraulic apparatus, wherein the hydraulic apparatus comprises a master cylinder (1), a brake fluid reservoir (5), a second booster, at least one second interface, and a third interface (8E);
the master cylinder (1) comprises a first main cavity (1i), and at least one first interface comprises a first output interface (8F);
the first main cavity (1i) is connected to the first output interface (8F) through the second booster; and
the brake fluid reservoir (5) is connected to the first main cavity (1i), and the brake fluid reservoir (5) is connected to the second interface (8E).

26. The hydraulic apparatus according to claim 25, wherein the second booster comprises a fourth control valve (11), and the first main cavity (1i) is connected to the first output interface (8F) through the fourth control valve (11).

27. The hydraulic apparatus according to claim 26, wherein the second booster further comprises a first booster pump (203), and an output end of the first booster pump (203) is connected to a pipe between the fourth control valve (11) and the first output interface (8F).

28. The hydraulic apparatus according to claim 27, wherein an input end of the first booster pump (203) is connected to the brake fluid reservoir (5).

29. The hydraulic apparatus according to claim 28, wherein the second booster further comprises a first one-way valve (203v), the brake fluid reservoir (5) is connected to a first end of the first one-way valve (203v), a second end of the first one-way valve (203v) is connected to the input end of the first booster pump (203), and the first one-way valve (203v) is configured to allow brake fluid to flow from the brake fluid reservoir (5) to the input end of the first booster pump (203) through the first one-way valve (203v).

30. The hydraulic apparatus according to claim 29, wherein the second booster further comprises a fifth control valve (211), and the brake fluid reservoir (5) is connected to the first output interface (8F) through the fifth control valve (211).

31. The hydraulic apparatus according to claim 30, wherein the second booster further comprises a sixth control valve (213), a first end of the sixth control valve (213) is connected to the first main cavity (1i), and a second end of the sixth control valve (213) is connected to a pipe between the first one-way valve (203v) and the first booster pump (203), and is connected to the input end of the first booster pump (203).

32. The hydraulic apparatus according to claim 31, wherein the master cylinder (1) further comprises a second main cavity (1j), and the second main cavity (1j) is connected to a second output interface (8G) through a seventh control valve (12);
the second booster further comprises a second booster pump (204), a ninth control valve (212), a second one-way valve (204v), and a tenth control valve (214);
the brake fluid reservoir (5) is connected to a first end of the second one-way valve (204v), a second end of the second one-way valve (204v) is connected to an input end of the second booster pump (204), the second one-way valve (204v) is configured to allow the brake fluid to flow from the brake fluid reservoir (5) to the input end of the second booster pump (204) through the second one-way valve (204v), and an output end of the second booster pump (204) is connected to a pipe between the seventh control valve (12) and the second output interface (8G);
the brake fluid reservoir (5) is connected to the second output interface (8G) through the ninth control valve (212); and
a first end of the tenth control valve (214) is connected to the second main cavity (1j), and a second end of the tenth control valve (214) is connected to a pipe between the second one-way valve (204v) and the second booster pump (204), and is connected to the input end of the second booster pump (204).

33. The hydraulic apparatus according to claim 29, wherein the second booster further comprises a fifth control valve (211), a first end of the fifth control valve (211) is connected to a pipe between the output end of the first booster pump (203) and the first output interface (8F), and a second end of the fifth control valve (211) is connected to a pipe between the input end of the first booster pump (203) and the second end of the first one-way valve (203v).

34. The hydraulic apparatus according to claim 33, wherein the second booster further comprises a sixth control valve (213), and the brake fluid reservoir (5) is connected to the first output interface (8F) through the sixth control valve (213).

35. The hydraulic apparatus according to claim 28, wherein the second booster further comprises a fifth control valve (211) and a sixth control valve (213), and the brake fluid reservoir (5) is further connected to the first output interface (8F) sequentially through the sixth control valve (213) and the fifth control valve (211).

36. The hydraulic apparatus according to claim 35, wherein the brake fluid reservoir (5) is also connected to the input end of the first booster pump (203) through the sixth control valve (213).

37. The hydraulic apparatus according to claim 36, wherein the master cylinder (1) further comprises a second main cavity (1j), and the second main cavity (1j) is connected to a second output interface (8G) through a seventh control valve (12); and
the second booster further comprises a second booster pump (204) and a ninth control valve (212), the brake fluid reservoir (5) is connected to an input end of the second booster pump (204) through the sixth control valve (213), and the brake fluid reservoir (5) is connected to the second output interface (8G) sequentially through the sixth control valve (213) and the ninth control valve (212).

38. The hydraulic apparatus according to claim 27, wherein the second booster further comprises a sixth control valve (213), a first end of the sixth control valve (213) is connected to a pipe between the fourth control valve (11) and the first main cavity (1i), and a second end of the sixth control valve (213) is connected to an input end of the first booster pump (203).

39. A hydraulic apparatus, wherein the hydraulic apparatus comprises a first booster, at least one first control valve (31, 32, 33, 34), at least one second control valve (13 and 14), at least one third control valve (41, 42, 43, and 44), at least one fourth interface (8f and 8g), a fifth interface (8e), and at least one first interface;
the at least one fourth interface (8f and 8g) is connected to a first end of the at least one first control valve (31, 32, 33, 34) through the at least one second control valve (13 and 14), the fifth interface (8e) is connected to the first booster (2), the first booster (2) is connected to the first end of the at least one first control valve (31, 32, 33, 34), a second end of the at least one first control valve (31, 32, 33, 34) is connected to the at least one first interface, and the at least one first interface is connected to at least one brake wheel cylinder; and
the at least one first interface is connected to the fifth interface (8e) through the at least one third control valve (41, 42, 43, and 44).

40. The hydraulic apparatus according to claim 39, wherein the first booster comprises a first booster cavity (202i), the first booster cavity (202i) is separately connected to a first end of a first booster control valve (21) and a first end of a second booster control valve (22), a second end of the first booster control valve (21) is connected to the at least one first interface through the at least one first control valve (31, 32, 33, 34), and a second end of the second booster control valve (22) is connected to the at least one first interface through the at least one first control valve (31, 32, 33, 34).

41. The hydraulic apparatus according to claim 40, wherein the first booster further comprises a third booster control valve (23) and a fourth booster control valve (24), the first booster cavity (202i) is separately connected to a first end of the third booster control valve (23) and a first end of the fourth booster control valve (24), a second end of the third booster control valve (23) is connected to the at least one first interface through the at least one first control valve (31, 32, 33, 34), and a second end of the fourth booster control valve (24) is connected to the at least one first interface through the at least one first control valve (31, 32, 33, 34).

42. The hydraulic apparatus according to claim 40, wherein the first booster further comprises a second booster cavity (202j), a third booster control valve (23), and a fourth booster control valve (24), the second booster cavity (202j) is separately connected to a first end of the third booster control valve (23) and a first end of the fourth booster control valve (24), a second end of the third booster control valve (23) is connected to the at least one first interface through the at least one first control valve (31, 32, 33, 34), and a second end of the fourth booster control valve (24) is connected to the at least one first interface through the at least one first control valve (31, 32, 33, 34).

43. The hydraulic apparatus according to claim 40, wherein the first booster further comprises a second booster cavity (202j) and a fifth booster control valve (25), the first booster cavity (202i) is connected to a first end of the fifth booster control valve (25), and a second end of the fifth booster control valve (25) is separately connected to the first end of the first booster control valve (21) and the first end of the second booster control valve (22);
the second booster cavity (202j) is separately connected to the first end of the first booster control valve (21) and the first end of the second booster control valve (22); and
the second end of the first booster control valve (21) is connected to the at least one first interface through the at least one first control valve (31, 32, 33, 34), and the second end of the second booster control valve (22) is connected to the at least one first interface through the at least one first control valve (31, 32, 33, 34).

44. The hydraulic apparatus according to claim 41, further comprising a first control unit (92) and a second control unit (93), wherein the second control valve (13) is controlled by both the first control unit (92) and the second control unit (93), the first booster control valve (21) and the second booster control valve (22) are controlled by the first control unit (92), and the third booster control valve (23) and the fourth booster control valve (24) are controlled by the second control unit (93).

45. The hydraulic apparatus according to claim 42, further comprising a first control unit (92) and a second control unit (93), wherein the second control valve (13), the first booster control valve (21), the second booster control valve (22), the third booster control valve (23), and the fourth booster control valve (24) are controlled by both the first control unit (92) and the second control unit (93).

46. The hydraulic apparatus according to claim 43, further comprising a first control unit (92) and a second control unit (93), wherein the first booster control valve (21), the second booster control valve (22), the fifth booster control valve (25), and the second control valve (13) are controlled by the first control unit (92), and the at least one first control valve (31, 32, 33, 34) and the at least one third control valve (41, 42, 43, and 44) are controlled by both the first control unit (92) and the second control unit (93).

47. The hydraulic apparatus according to any one of claims 39 to 46, wherein the first booster is controlled by both the first control unit (92) and the second control unit (93).

48. A method for controlling a brake system, wherein the brake system comprises a master cylinder, a first booster, a second booster, and at least one first interface; the first booster is connected to the at least one first interface through at least one first control valve (31, 32, 33, 34), the master cylinder comprises a first main cavity (1i), the first main cavity (1i) is connected to a second control valve (13) through the second booster, and the second control valve (13) is connected to the at least one first interface through the at least one first control valve (31, 32, 33, 34); and
the method comprises:
obtaining a first brake requirement; and
when the brake system is in a first state, controlling the second booster to work, wherein
the first state comprises at least one of the following: the first booster is faulty, the second control valve (13) is faulty, and the at least one first control valve (31, 32, 33, 34) is faulty.

49. The method according to claim 48, wherein the brake system comprises a first booster pump (203) and a fourth control valve (11); the first main cavity (1i) is connected to the at least one first interface sequentially through the fourth control valve (11), the second control valve (13), and the at least one first control valve (31, 32, 33, 34); an output end of the first booster pump (203) is connected to a pipe between the fourth control valve (11) and the second control valve (13), and is connected to the at least one first interface sequentially through the second control valve (13) and the at least one first control valve (31, 32, 33, 34); and
the method comprises:
the controlling the second booster to work comprises: controlling the fourth control valve (11) to be in a disconnected state.

50. The method according to claim 49, wherein the brake system further comprises a sixth control valve (213), a first end of the sixth control valve (213) is connected to the first main cavity (1i), and a second end of the sixth control valve (213) is connected to an input end of the first booster pump (203); and
the method comprises:
the controlling the second booster to work comprises: controlling the sixth control valve (213) to be in a connected state.

51. The method according to claim 49, wherein the brake system comprises a brake fluid reservoir (5) and a fifth control valve (211), the brake fluid reservoir (5) is connected to an input end of the first booster pump (203), and the brake fluid reservoir (5) passes through the fifth control valve (211), the second control valve (13), and the at least one first control valve (31, 32, 33, 34) and is connected to the at least one first interface; and
the method comprises:
obtaining a second brake requirement; and
controlling the fifth control valve (211) to be in a connected state.

52. The method according to claim 51, wherein the method comprises: controlling an opening degree or a switching frequency of the fifth control valve (211) based on the second brake requirement.

53. The method according to claim 49, wherein the brake system comprises a first control unit (91) and a second control unit (92), the second booster is controlled by the first control unit (91), and the second control valve (13) and the first booster are controlled by the second control unit (92); and
the method comprises:
the first state further comprises: the second control unit is faulty.

54. A readable storage medium, wherein the readable storage medium stores program instructions, and when the program instructions are executed, the method according to any one of claims 48 to 53 is performed.

55. A vehicle, wherein the vehicle comprises the brake system according to any one of claims 1 to 22, or the vehicle comprises the hydraulic apparatus according to any one of claims 25 to 47.
